(19) Europäisches Patentamt / European Patent Office / Office européen des brevets

(11) **EP 4 251 991 B1**

(12) **EUROPÄISCHE PATENTSCHRIFT**

(45) Veröffentlichungstag und Bekanntmachung des Hinweises auf die Patenterteilung:
**31.12.2025 Patentblatt 2026/01**

(21) Anmeldenummer: **21816380.6**

(22) Anmeldetag: **18.11.2021**

(51) Internationale Patentklassifikation (IPC):
**G01N 30/30** (2006.01)  **G01N 30/88** (2006.01)

(52) Gemeinsame Patentklassifikation (CPC):
**G01N 30/30;** G01N 2030/3015

(86) Internationale Anmeldenummer:
**PCT/EP2021/082206**

(87) Internationale Veröffentlichungsnummer:
**WO 2022/112101 (02.06.2022 Gazette 2022/22)**

(54) **VORRICHTUNG FÜR EINEN GASCHROMATOGRAPHEN, INSBESONDERE EINEN TEMPERATURGRADIENTEN-GASCHROMATOGRAPHEN, SOWIE GASCHROMATOGRAPH MIT EINER SOLCHEN VORRICHTUNG**

DEVICE FOR A GAS CHROMATOGRAPH, IN PARTICULAR A TEMPERATURE-GRADIENT GAS CHROMATOGRAPH, AND GAS CHROMATOGRAPH COMPRISING SUCH A DEVICE

DISPOSITIF POUR CHROMATOGRAPHE EN PHASE GAZEUSE, EN PARTICULIER CHROMATOGRAPHE AVEC GRADIENT DE TEMPERATURE, ET CHROMATOGRAPHE EN PHASE GAZEUSE AVEC UN TEL DISPOSITIF

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.11.2020 DE 102020131021**

(43) Veröffentlichungstag der Anmeldung:
**04.10.2023 Patentblatt 2023/40**

(73) Patentinhaber: **Boeker, Peter**
**53225 Bonn (DE)**

(72) Erfinder: **Boeker, Peter**
**53225 Bonn (DE)**

(74) Vertreter: **Freischem & Partner Patentanwälte mbB**
**Salierring 47-53**
**50677 Köln (DE)**

(56) Entgegenhaltungen:
DE-B3- 102014 004 286    US-A- 5 808 178
US-A1- 2010 256 922    US-A1- 2012 318 782

- **PETER BOEKER ET AL: "Flow Field Thermal Gradient Gas Chromatography", ANALYTICAL CHEMISTRY, 3 August 2015 (2015-08-03), XP055206559, ISSN: 0003-2700, DOI: 10.1021/ acs.analchem.5b02227**
- **JOHN V. HINSHAW: "GC Ovens - A Hot Topic", LC GC EUROPE, 1 July 2001 (2001-07-01), pages 1 - 5, XP055183490, Retrieved from the Internet <URL:http://www.chromacademy.com/ troubleshooter-gc/resources/GC-OVEN.pdf> [retrieved on 20150416]**
- **BYU SCHOLARSARCHIVE ET AL: "Brigham Young University Axial Temperature Gradients in Gas Chromatography BYU ScholarsArchive Citation", 1 January 2010 (2010-01-01), XP055350992, Retrieved from the Internet <URL:https://scholarsarchive.byu.edu/etd/2645/ >**

**Beschreibung**

Die vorliegende Erfindung betrifft eine Vorrichtung für einen Gaschromatographen, insbesondere einen Temperaturgradienten-Gaschromatographen. Die Erfindung betrifft des Weiteren einen Gaschromatographen mit einer solchen Vorrichtung.

Das grundlegende Verfahren der Gaschromatographie ist aus dem Stand der Technik bekannt. Es stellt ein Verfahren zum Auftrennen von Gemischen flüchtiger Stoffe in die dem Gemisch zugrundeliegenden Stoffe dar und wird im Rahmen einer chemischen Analyse von Stoffgemischen angewendet.

Bei der klassischen, isothermen Gaschromatographie wird eine Trennkapillare (häufig auch als Kapillare oder als Trennsäule bezeichnet) in einem Luftbad-Ofen temperiert. Auf einer inneren Oberfläche der Trennkapillare kann eine Beschichtung aufgebracht sein. An einem Eingang der Trennkapillare werden ein zu analysierendes Stoffgemisch sowie ein Trägergas aufgegeben. In Abhängigkeit von der Temperatur in der Trennkapillare stellt sich ein stoffspezifisches Phasengleichgewicht zwischen einem Anteil des zu analysierenden Stoffgemischs, der sich im Trägergas befindet, und einem Anteil des Stoffgemischs, der an der Beschichtung der Trennkapillare adsorbiert oder absorbiert ist, ein. Die Temperatur der Trennkapillare sowie das temperaturabhängige Phasengleichgewicht eines Stoffes bestimmen vorrangig die Transportgeschwindigkeit der im Stoffgemisch enthaltenen Stoffe in der Trennkapillare. Dadurch ist es möglich, dass unterschiedliche Stoffe eines Stoffgemischs unterschiedlich schnell von dem Eingang der Trennkapillare zu dessen Ausgang transportiert werden können. Beispielsweise führt eine starke Wechselwirkung zwischen einem Stoff des zu analysierenden Stoffgemischs mit der Beschichtung der Trennkapillare zu einem langsamen Transport des Stoffs entlang der Trennkapillare. Eine schwache Wechselwirkung zwischen einem Stoff des zu analysierenden Stoffgemischs mit der Beschichtung der Trennkapillare führt zu einem schnellen Transport des Stoffs entlang der Trennkapillare. An dem Ausgang der Trennkapillare kann eine Detektionseinrichtung, beispielsweise ein Massenspektrometer, angeschlossen sein, mit dem die Stoffe des Stoffgemischs sukzessive detektiert werden können.

Bei einer Weiterentwicklung der isothermen Gaschromatographie, nämlich der temperaturprogrammierten Gaschromatographie, kann die Temperatur des Luftbad-Ofens während einer gaschromatographischen Analyse gesteuert werden, beispielsweise mit der Zeit erhöht werden, so dass die jeweiligen Stoffe des Stoffgemischs aufgrund der stoffspezifisch temperaturabhängigen Phasengleichgewichte bei unterschiedlichen Temperaturniveaus entlang der Trennkapillare transportiert werden können. Es ergibt sich somit eine räumliche und zeitliche Auftrennung der Stoffe.

Das vorausgehend beschriebene Luftbad-Ofen-Konzept der Gaschromatographie erreicht aufgrund einer intensiven turbulenten Durchmischung der Luft im Luftbad-Ofen eine hohe Temperaturstabilität und Temperaturhomogenität der Trennkapillare. Ferner erlaubt es aufgrund der Größe und der einfachen Zugänglichkeit des Luftbad-Ofens einen einfachen Austausch der darin angeordneten Trennkapillare. Als Nachteil erweist sich jedoch die thermische Trägheit des Systems insbesondere auch bei dessen Abkühlung, welche eine Durchführung schneller Messungen beeinträchtigt.

Mit dem Ziel, die thermische Trägheit von Gaschromatographen zu reduzieren, wurden elektrisch beheizte Gaschromatographen entwickelt, bei denen die eingetragene Wärmeenergie auf die Trennkapillare oder dessen unmittelbare Umgebung konzentriert werden soll. Für die Konzentration der Wärme kann beispielsweise eine Trennkapillare aus Metall direkt elektrisch beheizt werden, oder eine nichtleitende Polyimid-beschichtete Quarzglas-Trennkapillare kann in eine heizbare Hüll-Kapillare eingeschoben und beheizt werden. In diesen Fällen ist die Trennkapillare nicht in einem Luftbad-Ofen angeordnet, so dass bei einer elektrischen Beheizung der Trennkapillare der Temperatur-homogenisierende Einfluss der Luftdurchmischung ausbleibt. Eine Temperatur der Trennkapillare ergibt sich insofern hauptsächlich aus der zugeführten elektrischen Energie, die in der Trennkapillare in Wärmeenergie dissipiert wird, und der abgeführten Energie. Die abgeführte Energie betrifft im Wesentlichen emittierte Strahlung, die insbesondere bei höheren Temperaturen zunimmt, sowie Konvektion der die Trennkapillare umgebenden Luft. Bei natürlicher Konvektion kann in der Umgebung der Trennkapillare erwärmte Luft aufsteigen und eine kontinuierliche Kühlströmung erzeugen. Bei erzwungener Konvektion, d.h. bei erzwungener Anströmung, kann der Kühleffekt deutlich erhöht und steuerbar sein.

Ein Konzept der Gaschromatographie, das den Effekt der erzwungenen Anströmung nutzbar macht, ist die Flussfeld-Temperaturgradienten-Gaschromatographie. Die Flussfeld-Temperaturgradienten-Gaschromatographie zählt zu der Temperaturgradienten-Gaschromatographie. Die Temperaturgradienten-Gaschromatographie basiert auf der Beobachtung, dass Stoffe eine für sie charakteristische Temperatur aufweisen, unterhalb der kein nennenswerter Stofftransport in einer Trennkapillare erfolgt. Bei der Temperaturgradienten-Gaschromatographie weist die Trennkapillare von deren Eingang zu deren Ausgang einen negativen Temperaturgradienten auf, so dass sich Stoffe eines Stoffgemischs nach Zuführen in die Trennkapillare in einem ersten Schritt der gaschromatographischen Analyse an spezifischen Stellen der Trennkapillare, an denen die vorausgehend genannte charakteristische Temperatur für einen nennenswerten Stofftransport unterschritten wird, ansammeln. Aufgrund einer in einem weiteren Schritt der gaschromatographischen Analyse durchgeführten, homogenen Temperaturerhöhung der Trennkapillare werden die Stoffe des Stoffgemischs durch die Trennkapillare transportiert. Die Stoffe erreichen somit sukzessive den Ausgang der Trennkapillare, an dem die Stoffe durch eine Detektionseinrichtung detektiert werden können.

Die vorausgehend beschriebene Temperaturgradienten-Gaschromatographie ist aus dem Stand der Technik bekannt. So beschreibt die DE 10 2014 004 286 B3 ein Verfahren, eine Vorrichtung und die Verwendung eines Verfahrens zur gaschromatischen Trennung und Bestimmung von flüchtigen Stoffen in einem Trägergas über eine chromatographische Trennkapillare, wobei diese Trennkapillare und/oder eine diese Trennkapillare umgebende Hüllkapillare elektrisch leitend ist. Ferner wird/werden diese Trennkapillare und/oder die diese Trennkapillare umgebende Hüllkapillare mit Strom in Form einer Widerstandsheizung erwärmt und durch eine erzwungene konvektive Strömung mittels eines Fluids in Form eines Gradienten-Strömungsfelds so gekühlt, dass sich ein kontinuierlicher Temperaturgradient über die Länge der Trennkapillare einstellt. Das Dokument beschreibt, dass kein thermisches Gradientenfeld um die Trennkapillare erzeugt werden muss, welches die Trennkapillare erst mittelbar auf die gewünschten Temperaturen erwärmt oder heizt. Vielmehr entsteht der Temperaturgradient als Folge der sich graduell verändernden Wärmebilanz, so dass ein exaktes und schnell arbeitendes Gaschromatographie-System aufgebaut werden kann.

Eine Vorrichtung gemäß der DE 10 2014 004 286 B3 verfügt über einen hohlzylindrischen Träger, welcher die Trennkapillare trägt und beispielsweise einen Durchmesser von ca. 20 cm aufweisen kann. Die Trennkapillare ist helixförmig in dem hohlzylindrischen Träger angeordnet. Um eine Länge der Trennkapillare zu erreichen, die für eine gaschromatographische Analyse geeignet ist, sind mehrere Windungen der helixförmigen Trennkapillare übereinander in dem hohlzylindrischen Träger angeordnet, beispielsweise über eine Höhe von ca. 12 cm. Daher ist das Volumen dieser bekannten Vorrichtung vergleichsweise groß.

Bedingt durch die beschriebene Bauart tritt die konvektive Strömung zur Kühlung der Trennkapillare an einer Stirnfläche des hohlzylindrischen Trägers ein und an einer Mantelfläche des hohlzylindrischen Trägers aus. Da diese Strömung nicht gestört werden darf (das heißt die Strömung darf insbesondere keinen Turbulenzen und/oder keinem Rückstau unterliegen), sind ausreichende Abstände zu anderen Komponenten, die an der offenbarten Vorrichtung angeordnet sind, erforderlich, was den nötigen Raumbedarf weiter vergrößert.

Eine Verkleinerung des Trägers der Trennkapillare ist aus zwei Gründen kaum möglich:

- Eine Verringerung des Durchmessers des Trägers der Trennkapillare bei der in der DE 10 2014 004 286 B3 offenbarten Vorrichtung führt zu einer proportionalen Verringerung der Länge einer Windung. Um eine Länge der Trennkapillare zu erhalten, die für eine gaschromatographische Auftrennung eines Stoffes ausreichend ist, müssen bei einer Verringerung des Durchmessers des Trägers proportional mehr Windungen vorgesehen sein. Dadurch sind die Höhe und damit das Volumen des Trägers der Trennkapillare wieder vergrößert.

- Ein Austauschen der Trennkapillare erfolgt bei der in der DE 10 2014 004 286 B3 offenbarten Vorrichtung regelmäßig durch ein Herausziehen und ein Einschieben der Trennkapillare in die metallische Hüllkapillare. Insbesondere gelingt das Einschieben nur, wenn der Radius der Hüllkapillare nicht zu klein ist, da ansonsten hohe Reibungskräfte vorliegen. Eine Verkleinerung des Radius unter einen Wert von ca. 20 cm ist daher ungünstig.

Die Bauart der Vorrichtung gemäß der DE 10 2014 004 286 B3 ist für den Einsatz in Laboratorien sehr geeignet, da die Baugröße und das Gewicht sehr gut auf andere Komponenten von Messeinrichtungen, wie eine in einem oberen Teil der Vorrichtung angeordnete Probenaufgabeeinrichtung und/oder eine Detektionseinrichtung, meistens ein Massenspektrometer, abgestimmt sind.

In vielen Einsatzgebieten besteht der Wunsch nach kompakten und schnellen Gaschromatographen, die einfach gewartet werden können und bei welchen die Trennkapillare einfach und beschädigungssicher ausgetauscht werden kann. Solche Gaschromatographen werden beispielsweise für mobile gaschromatographische Analysen benötigt, beispielsweise in Einsatzfahrzeugen der Feuerwehr und/oder der Polizei. In der Industrie werden zur Überwachung von Prozessen kompakte und schnelle Gaschromatographen benötigt, die besonders robust sind und vor Umwelteinflüssen geschützt sein müssen. Diese Gaschromatographen werden Prozess-Gaschromatographen genannt.

Wenn in der Überwachung von industriellen Prozessen ein Temperaturgradienten-Gaschromatograph eingesetzt wird (also ein Prozess-Temperaturgradienten-Gaschromatograph), müssen verschiedene Komponenten dieses Prozess-Temperaturgradienten-Gaschromatographen für Wartungsarbeiten und/oder die Trennkapillare entnehmbar sein. Die Möglichkeit einer Integration eines Temperaturgradienten-Gaschromatographen in bestehende Anordnungen von Probenaufgabeeinrichtungen und Detektionseinrichtungen ist ein weiteres wichtiges Erfordernis bei großtechnischem Einsatz.

Für den Einsatz als Prozess-Gaschromatograph oder als mobiler Gaschromatograph besitzt die Vorrichtung gemäß der DE 10 2014 004 286 B3 einige Nachteile.

So ist eine beim Einsatz als Prozess-Gaschromatograph notwendige, vollständige Einhausung mit dem Funktionsprinzip des offenbarten Temperaturgradienten-Gaschromatographen nicht einfach vereinbar. Eine Einhausung kann beispielsweise für einen Explosionsschutz notwendig sein. Des Weiteren bestehen hohe Anforderungen an die Zufuhr und die Abfuhr der konvektiven Strömung für die Erzeugung des Strömungsfeldes. So ist es notwendig, die konvektive Strömung in dem hohlzylindrischen Träger der Trennkapillare ausreichend kühl zuzuführen. Zusätzlich muss die an der Außenseite des Trägers der Trennkapillare anfallende erwärmte Strömung kontrolliert abgeführt werden können. Bei einer vollständigen Einhausung können daher eine Absaugungsvorrichtung und ein Wärmetauscher notwendig sein, um die Funktionalität des offenbarten Temperaturgradienten-Gaschromatographen sicher zu stellen.

Durch eine Einhausung ist auch das Austauschen der Trennkapillare erschwert. Ein manuelles Hantieren mit der empfindlichen Trennkapillare durch einen Bediener erfordert ausreichend Raum. Eine Einhausung muss folglich sehr großräumig gebaut werden. Dies ist jedoch bei der Verwendung im Rahmen einer Prozessüberwachung von Nachteil, da oft wenig Platz bei bestehenden Anlagen zur Verfügung steht.

Bei mobilen Gaschromatographen muss die Handhabung auch von wenig geschulten Bedienern möglich sein. Daher kommt einem Austausch einer Trennkapillare besondere Bedeutung zu. Eine kompakte Bauart ist bei mobilen Gaschromatographen zusätzlich erforderlich. Daher ist die Bauart gemäß der DE 10 2014 004 286 B3 weniger geeignet, alle vorstehend genannten Anforderungen zu erfüllen.

Hinsichtlich des Standes der Technik wird auch auf die Veröffentlichung von Peter Boeker, et al.: "Flow Field Thermal Gradient Gas Chromatography", Analytical Chemistry, 3. August 2015, Seiten 1 bis 25, auf die Veröffentlichung von John V. Hinshaw: "GC Ovens - A Hot Topic", LC GC Europe, 1. Juli 2001, Seiten 1 bis 5, auf die US 2010/0256922 A1 sowie auf die US 2012/0318782 A1 verwiesen.

Der Erfindung liegt die Aufgabe zu Grunde, eine Vorrichtung für einen Gaschromatographen, insbesondere einen Temperaturgradienten-Gaschromatographen, sowie einen Gaschromatographen mit einer solchen Vorrichtung bereitzustellen, wobei die Vorrichtung gegenüber dem Stand der Technik

- eine Reduktion der Baugröße unter Erhaltung der Funktionsfähigkeit der Gaschromatographie, insbesondere der Temperaturgradienten-Gaschromatographie, gestattet;
- eine Kapillarlänge bis ca. 6 m Länge zulässt, trotz kompakter Bauform;
- eine räumlich kompakte Zuführung und/oder Abführung der Strömung des Fluids gestattet; sowie
- ein einfaches Austauschen der Trennkapillare und eine sehr gute Zugänglichkeit der Trennkapillare gestattet.

Erfindungsgemäß wird diese Aufgabe durch eine Vorrichtung mit den Merkmalen des Anspruchs 1 gelöst. Ein Gaschromatograph mit einer solchen Vorrichtung ist durch die Merkmale des Anspruchs 15 gegeben. Weitere Merkmale der Erfindung ergeben sich aus der nachfolgenden Beschreibung, den beigefügten Ansprüchen und/oder den beigefügten Zeichnungen.

Die erfindungsgemäße Vorrichtung für einen Gaschromatographen, insbesondere einen Temperaturgradienten-Gaschromatographen, umfasst ein Modul, in dem eine Trennkapillare angeordnet ist. Die Trennkapillare ist beheizbar und ist in einem regelbaren Fluidströmungsfeld anordbar oder angeordnet. Darüber hinaus ist die Trennkapillare mit einem durch den Gaschromatographen, insbesondere den Temperaturgradienten-Gaschromatographen, zu analysierenden Stoff beaufschlagbar. Die erfindungsgemäße Vorrichtung weist auch mindestens eine Erzeugungseinrichtung zur Erzeugung einer Fluidströmung eines Fluids auf, wobei die Erzeugungseinrichtung einer Temperaturbeeinflussung der Trennkapillare dient. Darüber hinaus weist die erfindungsgemäße Vorrichtung eine Beeinflussungseinrichtung zur Beeinflussung der Fluidströmung auf. Bei der erfindungsgemäßen Vorrichtung ist mindestens eine Aufnahmeeinrichtung zur Aufnahme des Moduls vorgesehen, wobei das Modul in die Aufnahmeeinrichtung einsetzbar und aus der Aufnahmeeinrichtung entnehmbar ist.

Vorstehend und nachstehend ist mit einem Modul eine optional austauschbare Einheit der erfindungsgemäßen Vorrichtung gemeint, die eine funktional geschlossene Funktionseinheit enthält. Eine funktional geschlossene Funktionseinheit ist in dem Kontext der Erfindung eine Einheit der Vorrichtung, die eine oder mehrere bestimmte Funktionen der Vorrichtung vollständig ausführt und nur dem Ausführen dieser bestimmten Funktionen dient. Ein Modul kann jede geeignete Form und Ausgestaltung aufweisen. Es kann beispielsweise offen zugänglich gestaltet sein, indem die äußere Form beispielsweise durch ein Gerüst, ein zumindest teilweise offenes Gehäuse, oder sogar durch die in dem Modul enthaltene geschlossene Funktionseinheit selbst definiert ist. Ausschlaggebend für das Modul ist die Eigenschaft der Austauschbarkeit des Moduls, das eine funktional geschlossene Funktionseinheit einer Vorrichtung aufweist, durch ein weiteres Modul mit einer technisch äquivalenten funktional geschlossenen Funktionseinheit.

Erfindungsgemäß umfasst beispielsweise eine erste funktional geschlossene Funktionseinheit, die in dem Modul enthalten ist, die Trennkapillare. Die Trennkapillare umfasst beispielsweise eine beheizbare, dünnwandige Röhre mit einem ersten Ende und einem zweiten Ende, wobei das erste Ende und das zweite Ende die Trennkapillare begrenzen. Zwischen dem ersten Ende und dem zweiten Ende weist die Trennkapillare eine Längsachse auf. Die Längsachse ist als mathematisch glatte Funktion ausgebildet. Mit anderen Worten ausgedrückt, weist die Trennkapillare keinen Knick und keine abrupte, lokale Krümmung auf. Vorzugsweise ist die Trennkapillare aus Quarzglas gebildet. Sie kann jedoch auch aus jedem anderen Material, das für die Erfindung geeignet ist, gebildet sein. Insofern können außer Gläsern auch Keramiken oder insbesondere Metalle oder Metalllegierungen als Material für die Trennkapillare dienen. Beispielsweise weist die Trennkapillare eine Innenbeschichtung auf. Die Trennkapillare ist elektrisch, insbesondere resistiv und/oder induktiv, beheizbar. Wenn die Trennkapillare nicht aus einem resistiv und/oder induktiv beheizbaren Material hergestellt ist, dann umfasst beispielsweise die erste funktional geschlossene Funktionseinheit des Moduls eine elektrisch beheizbare Hüllkapillare, welche die Trennkapillare umgibt. Die Hüllkapillare kann aus einer Keramik oder einem Metall oder einer Metalllegierung hergestellt sein, die/das ausreichend schnell resistiv und/oder induktiv beheizbar ist. Durch eine Anordnung der Trennkapillare in der Hüllkapillare kann die Trennkapillare indirekt über die Hüllkapillare beheizt werden.

Die Trennkapillare der hier beschriebenen Vorrichtung für einen Gaschromatographen, insbesondere einen Temperaturgradienten-Gaschromatographen, wird beispielsweise mit einem durch den Gaschromatographen, insbesondere den Temperaturgradienten-Gaschromatographen, aufzutrennenden und zu analysierenden Stoffgemisch sowie mit einem Trägergas, das einem Transport des aufzutrennenden und zu analysierenden Stoffgemischs dient, beaufschlagt. Dafür werden der Trennkapillare das Stoffgemisch und das Trägergas über das erste Ende der Trennkapillare zugeführt. Über das zweite Ende können das Stoffgemisch und das Trägergas später aus der Trennkapillare abgeführt werden.

Das Auftrennen des zu analysierenden Stoffgemischs mit der beschriebenen Vorrichtung wird beispielsweise durch ein vordefiniertes lokales Wärmebilanzgleichgewicht entlang der Trennkapillare ermöglicht. Mit anderen Worten ausgedrückt, entspricht an jeder Stelle entlang der axialen Ausdehnung der Trennkapillare eine Rate der zugeführten Wärme einer Rate der abgeführten Wärme. Die Rate der zugeführten Wärme ist in diesem Kontext die Menge der zugeführten Wärme bezogen auf eine Volumeneinheit und auf eine Zeiteinheit. Die Rate der abgeführten Wärme ist in diesem Kontext die Menge der abgeführten Wärme bezogen auf eine Volumeneinheit und auf eine Zeiteinheit.

Beispielsweise kann das lokale Wärmebilanzgleichgewicht, das heißt die lokale Temperatur, entlang der axialen Ausdehnung der Trennkapillare konstant sein. Beispielsweise kann dieser konstante Verlauf der Temperatur durch eine von dem ersten Ende der Trennkapillare zu dem zweiten Ende der Trennkapillare konstante Rate der zugeführten Wärme realisiert sein, während die Rate der abgeführten Wärme entlang der Trennkapillare ebenfalls konstant ist

In einem anderen Beispiel kann das lokale Wärmebilanzgleichgewicht, das heißt die lokale Temperatur, entlang der axialen Ausdehnung der Trennkapillare einen mathematisch monoton verlaufenden Gradienten aufweisen. Beispielsweise kann dieser Gradient durch eine von dem ersten Ende der Trennkapillare zu dem zweiten Ende der Trennkapillare zunehmende oder abnehmende Rate der zugeführten Wärme realisiert werden, während die Rate der abgeführten Wärme entlang der Trennkapillare konstant ist. Eine von dem ersten Ende der Trennkapillare zu dem zweiten Ende der Trennkapillare zunehmende oder abnehmende Rate der zugeführten Wärme kann beispielsweise bei resistiver Beheizung der Trennkapillare durch einen von dem ersten Ende der Trennkapillare zu dem zweiten Ende der Trennkapillare ansteigenden oder sinkenden elektrischen Widerstand der Trennkapillare erfolgen.

Alternativ oder zusätzlich kann der Gradient der Temperatur entlang der Trennkapillare durch eine entlang der Trennkapillare zunehmende oder abnehmende Rate der abgeführten Wärme realisiert werden, während die Rate der zugeführten Wärme entlang der Trennkapillare konstant ist oder ebenfalls graduell variiert.

Wie oben erwähnt, ist die Trennkapillare in dem regelbaren Fluidströmungsfeld anordbar oder angeordnet. Wenn die Trennkapillare in dem regelbaren Fluidströmungsfeld angeordnet ist, erfolgt beispielsweise eine Beeinflussung der Rate der abgeführten Wärme durch diese Anordnung der Trennkapillare in dem regelbaren Fluidströmungsfeld, wobei das Fluidströmungsfeld definierbar ist und die beheizbare Trennkapillare während einer Analyse eines zu analysierenden Stoffes oder Stoffgemischs kühlt. Das bedeutet, während der Analyse ist die Trennkapillare von einem Fluid umströmt, dessen Strömungsgeschwindigkeit regelbar und definiert ist. Details hinsichtlich der Ausbildung des Strömungsfelds werden weiter unten erörtert.

Bei dem die Trennkapillare umströmenden Fluid kann es sich beispielsweise um ein Gas oder ein Gasgemisch handeln. In der Praxis hat sich die Verwendung von Luft bewährt. Insbesondere bei höheren Temperaturen können zusätzlich oder alternativ reaktionsarme Gase verwendet werden, um eine unerwünschte Reaktion des Fluids mit der Vorrichtung zu verhindern. Beispielsweise kann als reaktionsarmes Gas Stickstoff oder ein beliebiges Inertgas verwendet werden.

Für die Erzeugung des regelbaren und definierten Fluidströmungsfelds weist die erfindungsgemäße Vorrichtung die Erzeugungseinrichtung auf. Die Erzeugungseinrichtung kann auf verschiedene Arten realisiert sein. Beispielsweise wird durch die Erzeugungseinrichtung eine Fluidströmung erzeugt, die eine Strömungsgeschwindigkeit von mehr als 0,01 m/s und weniger als 10 m/s, bevorzugt mehr als 0,1 m/s und weniger als 1 m/s an der Trennkapillare aufweisen kann. Ferner ist es beispielsweise vorgesehen, dass die Strömungsgeschwindigkeit der Fluidströmung regelbar ist. So kann die Strömungsgeschwindigkeit einer Fluidströmung an der Trennkapillare beispielsweise durch die Erzeugungseinrichtung variiert werden. Dies ist beispielsweise während einer Analyse eines zu analysierenden Stoffgemisches möglich, beispielsweise um einen gewünschten Temperaturgradienten der Trennkapillare einstellen zu können. Es kann jede Erzeugungseinrichtung zur Erzeugung einer Fluidströmung verwendet werden, welche für die Erfindung geeignet ist, beispielsweise eine Erzeugungseinrichtung, welche die vorgenannten Eigenschaften aufweist. Beispielsweise können mindestens eine Druckluftleitung oder mindestens ein Druckgasbehälter, an die/der ein regelbares Stromregelventil angeschlossen ist, verwendet werden, um eine regelbare Fluidströmung zu erzeugen. An das Stromregelventil kann beispielsweise ein Fluidleitkanal angeschlossen sein, der das Fluid an die Trennkapillare heranführt. Alternativ oder zusätzlich kann das Stromregelventil direkt auf die Trennkapillare derart ausgerichtet sein, dass die Trennkapillare direkt durch das Fluid angeströmt wird. Weiterhin zusätzlich oder alternativ kann mindestens eine Strömungsvorrichtung zur Erzeugung einer die Trennkapillare umströmenden Fluidströmung verwendet werden. Beispielsweise ist die Strömungsvorrichtung als ein Propeller, eine Kreiselpumpe, ein Ventilator und/oder ein Verdichter ausgebildet. Die mit der Strömungsvorrichtung erzeugte Strömung kann mittelbar oder unmittelbar auf die Trennkapillare ausgerichtet sein.

Die erfindungsgemäße Vorrichtung für einen Gaschromatographen, insbesondere einen Temperaturgradienten-Gaschromatographen, weist außerdem eine Beeinflussungseinrichtung zur Beeinflussung der Fluidströmung auf. Die Beeinflussungseinrichtung dient der Beeinflussung der Fluidströmung, die durch die Erzeugungseinrichtung erzeugt wird. Die von der Beeinflussungseinrichtung bereitgestellte Beeinflussung zielt darauf ab, eine Fluidströmung mit unbestimmtem Fluidströmungsfeld in eine Fluidströmung mit definiertem Fluidströmungsfeld umzuwandeln. Die Umwandlung betrifft insbesondere eine Strömungsgeschwindigkeit des Fluidströmungsfelds. Die Beeinflussungseinrichtung ist von Vorteil, weil das von der Erzeugungseinrichtung erzeugte Fluidströmungsfeld unbestimmt ist und von der technischen Realisierung der Erzeugungseinrichtung abhängt. Somit ist das von der Erzeugungseinrichtung bereitgestellte Fluidströmungsfeld nicht automatisch geeignet, um ein definiertes Wärmebilanzgleichgewicht entlang der Trennkapillare, beispielsweise ein Wärmebilanzgleichgewicht mit vordefiniertem Gradienten entlang der Trennkapillare, zu erzeugen. Für die Erzeugung eines definierten Wärmebilanzgleichgewichts ist es wünschenswert, dass die Strömungsgeschwindigkeit des Fluidströmungsfelds räumlich auf die Gestalt der Trennkapillare abgestimmt ist.

Eine Beeinflussung der Geschwindigkeit des Fluidströmungsfelds und in der Folge der (lokalen) Temperatur der Trennkapillare kann beispielsweise durch eine in der Vorrichtung angeordnete Mehrzahl von Düsen oder durch einen in der Vorrichtung angeordneten Diffusor erfolgen. Durch die Mehrzahl von Düsen kann die Trennkapillare an einer Vielzahl von Positionen durch ein Fluid angeströmt werden, wobei eine definierte Strömungsgeschwindigkeit über die Mehrzahl der Düsen der Ausbildung der Trennkapillare folgend einstellbar ist, so dass durch Überlagerung der Fluidströmungen der einzelnen Düsen ein gemeinsames, definiertes Fluidströmungsfeld entsteht. Alternativ kann durch den auf die Trennkapillare ausgerichteten Diffusor mit einer auf die Trennkapillare abgestimmten Ausbildung die Geschwindigkeit des Fluidströmungsfelds entlang der Trennkapillare beeinflusst werden.

Die Beeinflussungseinrichtung zur Beeinflussung der Geschwindigkeit des Fluidströmungsfelds wird als eine Schwammstruktur ausgebildet, um die Geschwindigkeit des Strömungsfelds zu beeinflussen und somit ein definiertes Fluidströmungsfeld einzustellen. Die Schwammstruktur kann beispielsweise aus Kunststoff, Metall, Glas, oder Keramik gebildet sein. Eine Schwammstruktur ist in diesem Kontext eine Struktur, die ein offenporiges Skelett ist. Offenporig bedeutet, dass die Poren fluidal durchströmbare Verbindungen untereinander aufweisen. Durch einen lokal definierbaren Porenanteil und eine lokal definierbare Porenstruktur, insbesondere Porengröße, der Schwammstruktur kann die lokale Durchlässigkeit der Schwammstruktur für ein Fluid, das der Schwammstruktur zugeführt wird, beeinflusst werden. Häufig wird eine Schwammstruktur auch als Schwamm oder als offenporiges Gerüst bezeichnet. Gelegentlich findet sich hierfür auch die Bezeichnung offenporiger Schaum.

Beispielsweise wird die Geschwindigkeit des Fluidströmungsfelds durch eine Schwammstruktur beeinflusst, die in der erfindungsgemäßen Vorrichtung angeordnet ist und deren Gestalt, Porosität und Porenstruktur auf die Trennkapillare abgestimmt ist. Eine Fluidströmung eines Fluids wird der Schwammstruktur auf einer ersten Seite der Schwammstruktur oder einer Mehrzahl von Seiten der Schwammstruktur zugeführt. Das Fluid durchströmt die Schwammstruktur und tritt aus einer zweiten Seite der Schwammstruktur, beeinflusst durch die Schwammstruktur, mit definiertem Fluidströmungsfeld des Fluids heraus. Die zweite Seite der Schwammstruktur ist der in dem Modul angeordneten Trennkapillare zugewandt. Somit wird die Trennkapillare durch das definierte Fluidströmungsfeld des Fluids umströmt. Dabei weist das Fluidströmungsfeld beispielsweise einen der Ausbildung der Trennkapillare folgenden Gradienten der Strömungsgeschwindigkeit auf.

Zusätzlich oder alternativ kann eine Kühlvorrichtung zur Kühlung der Beeinflussungseinrichtung in der erfindungsgemäßen Vorrichtung vorgesehen sein, um den Temperatureinfluss der beheizbaren Trennkapillare auf die Beeinflussungseinrichtung zu begrenzen. Beispielsweise kann eine Kühlvorrichtung zur Kühlung der Beeinflussungseinrichtung ein Kanal oder mehrere Kanäle sein, der/die mit einem Kühlmedium durchströmt sind.

Erfindungsgemäß umfasst die Vorrichtung für einen Gaschromatographen, insbesondere für einen Temperaturgradienten-Gaschromatographen, die Aufnahmeeinrichtung zur Aufnahme des Moduls, in dem die Trennkapillare angeordnet ist, wobei das Modul in die Aufnahmeeinrichtung einsetzbar und aus der Aufnahmeeinrichtung entnehmbar ist. Die Aufnahmeeinrichtung dient der Aufnahme des optional austauschbaren Moduls und führt zu einer sicheren, ordnungsgemäßen Positionierung des Moduls in der erfindungsgemäßen Vorrichtung, die eine technische Funktionalität der Vorrichtung sicherstellt.

Die Aufnahmeeinrichtung kann beispielsweise als ein Gerüst ausgebildet sein, in welches das Modul einsetzbar ist. Beispielsweise definiert das Gerüst die Position des Moduls in der Vorrichtung. Zusätzlich oder alternativ sind an dem Gerüst Führungsschienen angeordnet, in welche das Modul in nur einer einzigen, vordefinierten Position einsetzbar ist. Die vordefinierte Position kann beispielsweise realisiert werden, indem das durch das Gerüst aufnehmbare Modul auf Stoß mit einer Innenseite oder einer Außenseite des Gerüsts anordbar ist. Durch eine beispielsweise horizontale Ausbildung der Führungsschienen kann das Modul durch sein Eigengewicht in der vordefinierten Position gehalten werden.

Alternativ zu einem Gerüst mit Führungsschienen kann die Aufnahmeeinrichtung beispielsweise ein mit einer Aussparung versehenes Gehäuse sein, wobei das Modul in die Aussparung einsetzbar ist.

Gegenüber dem Stand der Technik hat die erfindungsgemäße Vorrichtung für einen Gaschromatographen, insbesondere für einen Temperaturgradienten-Gaschromatographen, den Vorteil, einen einfachen Austausch der modular gestalteten Funktionseinheiten, insbesondere der Trennkapillare, zu gestatten.

Die Erfindung ermöglicht aufgrund einer erzielbaren flachen Ausgestaltung der Trennkapillare eine kompakte Bauweise der erfindungsgemäßen Vorrichtung und ermöglicht auch einen einfachen Austausch der Trennkapillare. Das Modul mit der Trennkapillare ist der Vorrichtung entnehmbar, so dass ein Tausch der Trennkapillare leicht möglich ist. Wie weiter unten näher erläutert wird, können automatische oder manuell betätigbare Verbindungen eine gewünschte elektrische Verbindung und/oder eine gewünschte fluidische Verbindung herstellen.

Um eine definierte Temperatur der geheizten Trennkapillare zu erhalten, ist bei der Erfindung die Erzeugung eines definierten Strömungsfeldes vorgesehen. Beispielsweise kann bei der Erfindung die Erzeugung eines über die Länge der Trennkapillare ab- oder zunehmenden Strömungsfeldes vorgesehen sein, um einen gleichmäßigen Temperaturverlauf entlang der geheizten Trennkapillare zu erhalten. Hierfür kann bei der Erfindung beispielsweise ein inhomogenes, zentralsymmetrisches, in einer Ebene liegendes Strömungsfeld vorgesehen sein. Hierauf wird weiter unten noch näher eingegangen.

Bei einer weiteren Ausführungsform der erfindungsgemäßen Vorrichtung ist es zusätzlich oder alternativ vorgesehen, dass das Modul, in dem die Trennkapillare angeordnet ist, ein erstes Modul ist und dass ein zweites Modul vorgesehen ist. In dem zweiten Modul kann dann die Beeinflussungseinrichtung zur Beeinflussung der Fluidströmung des Fluids angeordnet sein. Insbesondere kann auch das zweite Modul in die Aufnahmeeinrichtung einsetzbar und aus der Aufnahmeeinrichtung entnehmbar sein.

Wie bereits erwähnt, ist es für die Erzeugung eines definierten Wärmebilanzgleichgewichts mit entlang der Trennkapillare konstantem Temperaturverlauf oder mit vordefiniertem Gradienten wünschenswert, dass der die Strömungsgeschwindigkeit des Fluidströmungsfelds räumlich auf die Gestalt der Trennkapillare abgestimmt ist. Insofern kann die Beeinflussungseinrichtung so in dem zweiten Modul angeordnet sein, dass die Fluidströmung des Fluids definiert von der Beeinflussungseinrichtung auf die Trennkapillare strömt, wenn das zweite Modul ordnungsgemäß in der Aufnahmeeinrichtung angeordnet ist.

Für eine ordnungsgemäße Anordnung des zweiten Moduls kann das zweite Modul an dem ersten Modul angeordnet sein. Mit anderen Worten ausgedrückt, kann das zweite Modul ausgehend von dem ersten Modul in jeder Position mittelbar oder unmittelbar an dem ersten Modul oder um das erste Modul herum anordbar sein. Beispielsweise ist das zweite Modul so an dem ersten Modul angeordnet, dass das erste Modul und das zweite Modul bündig aneinander angrenzen. Bündig aneinander angrenzen bedeutet in diesem Kontext, dass die Module über jeweils eine ihrer Seiten unmittelbar in Kontakt sind und die in Kontakt stehenden Seiten im Wesentlichen deckungsgleich sind.

Beispielsweise ist das erste Modul als eine erste Kassette ausgebildet. Ferner ist beispielsweise das zweite Modul ebenfalls als eine zweite Kassette ausgebildet. Die erste Kassette und die zweite Kassette sind beispielsweise in jeder beliebigen Position zueinander angeordnet. Beispielsweise sind sie in Reihe aneinander angrenzend angeordnet. Zusätzlich oder alternativ ist es vorgesehen, dass das zweite Modul in das erste Modul oder dass das erste Modul in das zweite Modul einführbar ist. Beispielsweise ist das erste Modul als erstes Rohr und das zweite Modul als zweites Rohr ausgebildet. Das erste Rohr weist beispielsweise einen größeren Innendurchmesser als der Außendurchmesser des zweiten Rohrs auf. Dann kann das zweite Rohr in dem ersten Rohr aufgenommen werden. Entsprechendes gilt, wenn das zweite Rohr einen größeren Innendurchmesser als der Außendurchmesser des ersten Rohrs aufweist. Dann kann das erste Rohr in dem zweiten Rohr aufgenommen werden.

Wie oben erwähnt, ist das zweite Modul in die Aufnahmeeinrichtung einsetzbar und herausnehmbar. Dies kann beispielsweise auf die gleiche Weise erfolgen, wie das Einsetzen und das Herausnehmen des ersten Moduls. Insbesondere kann die erfindungsgemäße Vorrichtung Führungsschienen an der Aufnahmeeinrichtung für die Aufnahme des zweiten Moduls aufweisen, in welche das zweite Modul in nur einer einzigen, vordefinierten zweiten Position in die Aufnahmeeinrichtung einsetzbar ist. Bei einer weiteren Ausführungsform der erfindungsgemäßen Vorrichtung ist es zusätzlich oder alternativ vorgesehen, dass die Aufnahmeeinrichtung im Grunde zwei Aufnahmeeinrichtungen umfasst, nämlich eine erste Aufnahmeeinrichtung zur Aufnahme des ersten Moduls und eine zweite Aufnahmeeinrichtung zur Aufnahme des zweiten Moduls.

Bei einer wieder weiteren Ausführungsform der erfindungsgemäßen Vorrichtung ist es zusätzlich oder alternativ vorgesehen, dass die Erzeugungseinrichtung im oder am ersten Modul angeordnet ist. Ferner ist es zusätzlich oder alternativ vorgesehen, dass die Erzeugungseinrichtung im oder am zweiten Modul angeordnet ist. Die Erzeugungseinrichtung kann alternativ oder zusätzlich natürlich auch an einem Grundkörper der erfindungsgemäßen Vorrichtung angeordnet sein. Eine Anordnung im ersten Modul oder im zweiten Modul bedeutet, dass die Erzeugungseinrichtung austauschbar ist. Ferner bedeutet dies, dass die Erzeugungseinrichtung zumindest teilweise von der äußeren Form des ersten Moduls umschlossen ist oder zumindest teilweise von der äußeren Form des zweiten Moduls umschlossen ist. Eine Anordnung am ersten Modul oder am zweiten Modul bedeutet, dass die Erzeugungseinrichtung außerhalb der äußeren Form des ersten Moduls oder außerhalb der äußeren Form des zweiten Moduls angeordnet ist.

Wenn die Erzeugungseinrichtung im ersten Modul oder im zweiten Modul angeordnet ist, dann ist die Erzeugungseinrichtung Bestandteil des jeweiligen Moduls, in dem sie angeordnet ist. Das jeweilige Modul weist dann mindestens zwei funktional abgeschlossene Funktionseinheiten auf. Diese mindestens zwei funktional abgeschlossenen Funktionseinheiten können beispielsweise die Trennkapillare und die Erzeugungseinrichtung umfassen. Bei einer anderen Ausführungsform können diese mindestens zwei funktional abgeschlossenen Funktionseinheiten die Beeinflussungseinrichtung zur Beeinflussung der Geschwindigkeit des Fluidströmungsfelds und die Erzeugungseinrichtung zur Erzeugung einer Fluidströmung umfassen.

Wenn die Erzeugungseinrichtung am ersten Modul, am zweiten Modul und/oder an dem Grundkörper der erfindungsgemäßen Vorrichtung angeordnet ist, dann ist die Erzeugungseinrichtung nicht Bestandteil des jeweiligen Moduls, an dem sie angeordnet ist. Die Erzeugungseinrichtung kann mittelbar oder unmittelbar am ersten Modul, am zweiten Modul und/oder an dem Grundkörper der erfindungsgemäßen Vorrichtung angeordnet sein. Das heißt, es kann beispielsweise eine Fluidleitung vorgesehen sein, oder es kann keine Fluidleitung vorgesehen sein.

Eine Anordnung der Erzeugungseinrichtung im ersten Modul oder im zweiten Modul kann den Vorteil einer besonders kompakten Bauform der gesamten erfindungsgemäßen Vorrichtung haben. Eine Anordnung der Erzeugungseinrichtung am ersten Modul, am zweiten Modul und/oder an dem Grundkörper der erfindungsgemäßen Vorrichtung kann den Vorteil einer einfacheren Konstruktion und einer besonders kompakten Bauform des ersten Moduls und des zweiten Moduls haben. Die Anordnung der Erzeugungseinrichtung in nächster Nähe zu der Trennkapillare, das heißt beispielsweise im ersten Modul, im zweiten Modul, am ersten Modul, am zweiten Modul oder an dem Grundkörper der erfindungsgemäßen Vorrichtung wenige Millimeter oder Zentimeter entfernt von der Trennkapillare und/ oder der Beeinflussungseinrichtung bieten den Vorteil eines besonders kurzen Strömungswegs der Fluidströmung von der Erzeugungseinrichtung zu den der Trennkapillare und/oder der Beeinflussungseinrichtung. Dadurch ist die Temperatur der Trennkapillare durch ein besonders gut definierbares und regelbares Strömungsfeld beeinflussbar.

Ein Anordnen der Erzeugungseinrichtung im oder am ersten Modul kann beispielsweise dadurch realisiert sein, dass die Erzeugungseinrichtung mit einem Gehäuse des ersten Moduls kraftschlüssig, formschlüssig oder stoffschlüssig verbunden ist. Ein Anordnen der Erzeugungseinrichtung im oder am zweiten Modul kann beispielsweise dadurch realisiert sein, dass die Erzeugungseinrichtung mit einem Gehäuse des zweiten Moduls kraftschlüssig, formschlüssig oder stoffschlüssig verbunden ist. Ein Anordnen der Erzeugungseinrichtung am Grundkörper der erfindungsgemäßen Vorrichtung kann beispielsweise ebenfalls dadurch realisiert sein, dass die Erzeugungseinrichtung mit einem Gehäuse der erfindungsgemäßen Vorrichtung kraftschlüssig, formschlüssig oder stoffschlüssig verbunden ist. Beispielsweise weist das Gehäuse zumindest teilweise an der Verbindungsstelle zur Erzeugungseinrichtung eine Aussparung für ein Durchströmen eines Fluidstroms auf. Insbesondere kann ein Ventilator an einem Gehäuse der erfindungsgemäßen Vorrichtung und/oder des zweiten Moduls so verschraubt sein, dass von außerhalb der erfindungsgemäßen Vorrichtung und/oder des zweiten Moduls ein Fluid ansaugbar ist und dass dieses Fluid in einen Bereich der Vorrichtung abgegeben wird, in dem die Beeinflussungseinrichtung angeordnet ist, beispielsweise in das zweite Modul.

Bei einer wiederum weiteren Ausführungsform der erfindungsgemäßen Vorrichtung ist es zusätzlich oder alternativ vorgesehen, dass die Erzeugungseinrichtung eine erste Erzeugungseinrichtung zur Erzeugung einer Fluidströmung ist. Darüber hinaus weist die erfindungsgemäße Vorrichtung eine zweite Erzeugungseinrichtung zur Erzeugung einer Fluidströmung auf. Die zweite Erzeugungseinrichtung zur Erzeugung einer Fluidströmung dient beispielsweise einer kontrollierten Abfuhr von dem die Trennkapillare umströmenden Fluid weg von der Trennkapillare. Sie kann zusätzlich, zumindest unterstützend, die Fluidströmung erzeugen, welche die Trennkapillare umströmt. Für die kontrollierte Abfuhr des die Trennkapillare umströmenden Fluids ist es nicht erforderlich, dass die zweite Erzeugungseinrichtung regelbar ist. Sie kann jedoch regelbar sein.

Insbesondere dann, wenn die erfindungsgemäße Vorrichtung ein im Wesentlichen geschlossenes Gebilde oder ein geschlossenes Gebilde darstellt, ist es wünschenswert, wenn mit der zweiten Erzeugungseinrichtung mindestens die gleiche Fluid-Volumenstromrate durchsetzbar ist, wie mit der ersten Erzeugungseinrichtung. In diesem Fall entspricht der durch die erste Erzeugungseinrichtung generierte Zustrom des Fluids in die Vorrichtung bezogen auf eine Zeiteinheit dem durch die zweite Erzeugungseinrichtung generierten Abstrom des Fluids bezogen auf eine Zeiteinheit. Dadurch ist ein kontrolliertes Strömungsfeld der Fluidströmung realisierbar sowie ein Druckanstieg in der erfindungsgemäßen Vorrichtung vermeidbar.

Bei einer wiederum weiteren Ausführungsform der erfindungsgemäßen Vorrichtung ist es zusätzlich oder alternativ vorgesehen, dass die Vorrichtung ein drittes Modul aufweist. In dem dritten Modul kann dann die zweite Erzeugungseinrichtung angeordnet sein.

Beispielsweise ist das dritte Modul als eine dritte Kassette ausgebildet. Wenn beispielsweise das erste Modul, das zweite Modul und das dritte Modul als eine erste, eine zweite und eine dritte Kassette ausgebildet sind, sind die erste Kassette, die zweite Kassette und die dritte Kassette in jeder beliebigen Position zueinander anordbar. Beispielsweise können sie in Reihe aneinander angrenzend angeordnet sein, wobei die erste Kassette in der Mitte zwischen der zweiten Kassette und der dritten Kassette angeordnet ist.

Zusätzlich oder alternativ ist es vorgesehen, dass das dritte Modul in das erste Modul oder dass das erste Modul in das dritte Modul einführbar ist. Beispielsweise ist das erste Modul als erstes Rohr, das zweite Modul als zweites Rohr und das dritte Modul als drittes Rohr ausgebildet. Das erste Rohr weist beispielsweise einen größeren Innendurchmesser als der Außendurchmesser des zweiten Rohrs auf. Das dritte Rohr weist beispielsweise einen größeren Innendurchmesser als der Außendurchmesser des ersten Rohrs auf. Dann kann das zweite Rohr in dem ersten Rohr aufgenommen werden und das erste Rohr kann in dem dritten Rohr aufgenommen werden.

Bei einer noch weiteren Ausführungsform der erfindungsgemäßen Vorrichtung ist es zusätzlich oder alternativ vorgesehen, dass die erfindungsgemäße Vorrichtung eine Aufnahmeeinrichtung zur Aufnahme des dritten Moduls aufweist, wobei das dritte Modul in die Aufnahmeeinrichtung einsetzbar und aus der Aufnahmeeinrichtung entnehmbar ist. Beispielsweise ist die vorgenannte Aufnahmeeinrichtung eine dritte Aufnahmeeinrichtung, die Teil der Aufnahmeeinrichtung ist, welche die bereits oben genannte erste Aufnahmeeinrichtung und zweite Aufnahmeeinrichtung umfasst. Alternativ hierzu kann es vorgesehen sein, dass die erste Aufnahmeeinrichtung, die zweite Aufnahmeeinrichtung und/oder die dritte Aufnahmeeinrichtung voneinander getrennte Aufnahmeeinrichtungen sind. Durch die dritte Aufnahmeeinrichtung ist das dritte Modul - so wie das erste Modul und/oder das zweite Modul - austauschbar. Beispielsweise sind die erste Aufnahmeeinrichtung, die zweite Aufnahmeeinrichtung und die dritte Aufnahmeeinrichtung so angeordnet, dass das erste Modul, das zweite Modul und das dritte Modul in jeweils einer vordefinierten Position in der Vorrichtung bündig aneinander angrenzend anordbar sind.

Bei einer Ausführungsform der erfindungsgemäßen Vorrichtung ist es zusätzlich oder alternativ vorgesehen, dass mindestens eines der Module aus der Menge des ersten Moduls, des zweiten Moduls und dritten Moduls mindestens eine Verbindungsvorrichtung zur Verbindung mit mindestens einem weiteren Modul der vorgenannten Menge aufweist. Als eine Verbindungsvorrichtung ist in diesem Kontext eine mechanische Verbindungsvorrichtung mit mindestens einer fluidal durchströmbaren Durchgangsöffnung gemeint, die ein Strömen eines Fluids von einem der Module aus der Menge des ersten Moduls, des zweiten Moduls und dritten Moduls in mindestens ein weiteres Modul der vorgenannten Menge gestattet.

Nachfolgend werden Ausführungsformen der mechanischen Verbindungsvorrichtung für die vorgenannten Module, also das erste Modul, das zweite Modul und das dritte Modul näher erläutert.

Wenn eines der vorgenannten Module keine geschlossene Bauform aufweist, sondern offen zugänglich gestaltet ist, indem die äußere Form dieses Moduls beispielsweise durch ein Gerüst, ein zumindest teilweise offenes Gehäuse oder durch die in diesem Modul enthaltene geschlossene Funktionseinheit selbst definiert ist, ist keine besondere mechanische Verbindungsvorrichtung erforderlich, denn eine fluidal durchströmbare Verbindung zwischen den Modulen kann sichergestellt werden, indem die vorgenannten Module unmittelbar aneinander angrenzend in der Aufnahmeeinrichtung der erfindungsgemäßen Vorrichtung angeordnet sind.

Wenn die vorgenannten Module Bauformen mit weitgehend geschlossenem Gehäuse aufweisen, dann umfasst die Verbindungsvorrichtung beispielsweise Aussparungen in den jeweiligen Gehäusen der vorgenannten Module, die bei Anordnung der vorgenannten Module in einer vordefinierten Position in den jeweiligen Aufnahmeeinrichtungen fluidal durchströmbar unmittelbar aneinander liegen. Alternativ oder zusätzlich können die Verbindungsvorrichtungen beispielsweise Zwischeneinheiten umfassen, die zwischen den zu verbindenden Modulen angeordnet sind und Aussparungen in den Gehäusen der zu verbindenden Module mittelbar verbinden. Eine mechanische Verbindungsvorrichtung kann in diesem Fall beispielsweise eine Lochplatte sein, auf der eines oder eine Mehrzahl der vorstehend genannten Module so aufliegen kann, dass eine Aussparung in dem Gehäuse genau auf einem Loch der Lochplatte aufliegt. Unterhalb der Lochplatte kann sich ein weiteres Modul aus der Menge des ersten Moduls, des zweiten Moduls und des dritten Moduls angeordnet sein. Das weitere Modul kann ebenfalls eine Aussparung im Gehäuse aufweisen, die deckungsgleich mit dem zuvor genannten Loch der Lochplatte ist, so dass die Gehäuse der Module über die Lochplatte fluidal durchströmbar verbunden sind.

Wenn die vorgenannten Module Bauformen mit vollständig geschlossenem Gehäuse aufweisen, dann umfasst die Verbindungsvorrichtung beispielsweise Abschnitte in den Gehäusen der vorgenannten Module, die mit Hilfe eines Aktors geöffnet werden können. Insbesondere liegen diese Abschnitte bei Anordnung der vorgenannten Module in einer vordefinierten Position in den jeweiligen Aufnahmeeinrichtungen mittelbar oder unmittelbar aneinander. Beispielsweise kann mindestens eines der vorgenannten Module mit geschlossenem Gehäuse eine Klappe oder eine Mehrzahl von Klappen in dem Gehäuse aufweisen, welche elektrisch, hydraulisch oder pneumatisch geöffnet werden kann. Wenn die Module unmittelbar (das heißt direkt) oder mittelbar (beispielsweise durch eine Lochplatte getrennt) aneinander angeordnet sind und eine Verbindung bzw. Verbindungen zwischen zwei oder mehr der Module hergestellt werden soll/sollen, können die Klappen geöffnet werden, um eine fluidal durchströmbare Verbindung zwischen diesen Modulen einzurichten.

Bei den vorbeschriebenen und noch weiter unten näher erläuterten Ausführungsformen der Erfindung, welche ein erstes Modul, ein zweites Modul und ein drittes

Modul aufweisen, ist es beispielsweise vorgesehen, die Funktionen der erfindungsgemäßen Vorrichtung auf die vorgenannten Module zu verteilen. So ist in dem ersten Modul beispielsweise die Trennkapillare angeordnet. In dem zweiten Modul ist beispielsweise die erste Erzeugungseinrichtung zur Erzeugung einer Fluidströmung angeordnet, die beispielsweise ein zentralsymmetrisches Strömungsfeld erzeugt. Hingegen ist im dritten Modul beispielsweise die zweite Erzeugungseinrichtung zur Erzeugung einer Fluidströmung angeordnet. Die zweite Erzeugungseinrichtung dient beispielsweise einer kontrollierten Abfuhr von dem die Trennkapillare umströmenden Fluid weg von der Trennkapillare. Darüber hinaus dient das dritte Modul mit der zweiten Erzeugungseinrichtung der Stabilisierung des Strömungsfelds. Ferner ist es beispielsweise vorgesehen, nach dem Ende einer Messung die Trennkapillare durch die im dritten Modul angeordnete zweite Erzeugungseinrichtung direkt anzuströmen, so dass die Trennkapillare gekühlt wird.

Bei einer weiteren Ausführungsform der erfindungsgemäßen Vorrichtung ist es zusätzlich oder alternativ vorgesehen, dass das Modul (also das erste Modul) mindestens eine erste Anschlussvorrichtung zum Anschluss der Trennkapillare an eine Probenaufgabeeinrichtung zur Aufgabe des zu analysierenden Stoffes und eines Trägergases in die Trennkapillare aufweist. Wie bereits erwähnt, werden der Trennkapillare das zu analysierende Stoffgemisch oder der zu analysierende Stoff einerseits und das Trägergas andererseits über das erste Ende der Trennkapillare zugeführt. Die erste Anschlussvorrichtung zum Anschluss der Trennkapillare an eine Probenaufgabeeinrichtung ist daher beispielsweise an dem ersten Ende der Trennkapillare angeordnet.

Die erste Anschlussvorrichtung ist so ausgebildet, dass bei Anschluss der Trennkapillare an eine Probenaufgabeeinrichtung eine fluidal durchströmbare Öffnung zwischen der Trennkapillare und der Probenaufgabeeinrichtung vorliegt und dass die Verbindung nach außen gasdicht abgeschlossen ist. Hierfür kann die erste Anschlussvorrichtung eine Fortsetzung der Röhre der Trennkapillare, eine Verbindungseinrichtung und eine Transferleitung umfassen. Die Fortsetzung der Röhre ist vorzugsweise aus einem festen und duktilen Material gebildet, beispielsweise aus Metall, und gasdicht mit der Trennkapillare verbunden, beispielsweise durch Kleben, Löten oder Schweißen. Sie kann auch einen Endabschnitt der Kapillare selbst umfassen. Die Fortsetzung der Trennkapillare kann die Trennkapillare mit der Verbindungseinrichtung fluidal verbinden. Die Verbindungseinrichtung kann zwei Abschnitte aufweisen, die gasdicht miteinander verbindbar sind. Ein erster Abschnitt ist an der Transferleitung angeordnet, welche fluidal mit der Probenaufgabeeinrichtung verbunden ist. Ein zweiter Abschnitt ist mit der Fortsetzung der Röhre verbunden. Somit kann bei oder nach einem Einsetzen des Moduls (oder des ersten Moduls) in die Aufnahmeeinrichtung ein Anschließen der Trennkapillare über die vorstehend genannte Anschlussvorrichtung mit der Probenaufgabeeinrichtung erfolgen. Für eine Entnahme des Moduls (oder des ersten Moduls) kann die Verbindungseinrichtung der Anschlussvorrichtung wieder getrennt werden.

Die Probenaufgabeeinrichtung kann insbesondere ein Verdampfungsinjektor, beispielsweise ein handelsüblicher Split/Splitlos-Injektor, sein. Der Verdampfungsinjektor, in dem das beispielsweise zu analysierende Stoffgemisch verdampft und dabei mit dem Trägergas gemischt wird, kann die erste Aufnahmeeinrichtung der Trennkapillare beispielsweise über eine Öffnung an einer Seite des Verdampfungsinjektors aufnehmen.

Alternativ oder zusätzlich zu der ersten Anschlussvorrichtung zum Anschluss der Trennkapillare an eine Probenaufgabeeinrichtung kann das Modul (also das erste Modul) eine zweite Anschlussvorrichtung zum Anschluss der Trennkapillare an eine Detektionseinrichtung zur Detektion des zu analysierenden Stoffes oder des zu analysierenden Stoffgemischs aufweisen. Zusätzlich oder alternativ dient die zweite Anschlussvorrichtung dem Anschluss an eine weitere Einheit der erfindungsgemäßen Vorrichtung. Wie bereits erwähnt, werden beispielsweise das zu analysierende Stoffgemisch und das Trägergas über das zweite Ende aus der Trennkapillare abgeführt. Die zweite Anschlussvorrichtung ist daher beispielsweise an dem zweiten Ende der Trennkapillare angeordnet. Die zweite Anschlussvorrichtung ist so ausgebildet, dass bei Anschluss der Trennkapillare an eine Detektionseinrichtung eine fluidal durchströmbare Öffnung zwischen der Trennkapillare und der Detektionseinrichtung vorliegt und dass die Verbindung nach außen gasdicht abgeschlossen ist. Die zweite Anschlussvorrichtung ist außerdem so ausgebildet, dass die Trennkapillare alternativ an eine weitere Einheit der Vorrichtung für einen Gaschromatographen, insbesondere einen Temperaturgradienten-Gaschromatographen, anschließbar ist. Eine Verbindung zwischen der zweiten Anschlussvorrichtung und der weiteren Einheit der Vorrichtung für einen Gaschromatographen, insbesondere einen Temperaturgradienten-Gaschromatographen, ist beispielsweise ebenfalls eine fluidal durchströmbare Öffnung, die nach außen hin gasdicht abgeschlossen ist.

Für die Ausbildung der zweiten Anschlussvorrichtung gelten dieselben Erörterungen, wie für die Ausbildung der ersten Anschlussvorrichtung.

Eine Detektionseinrichtung kann insbesondere ein über die zweite Anschlussvorrichtung an das zweite Ende der Trennkapillare angeschlossenes Massenspektrometer sein. Es können jedoch auch andere Detektionseinrichtungen, beispielsweise ein Flammenionisationsdetektor, ein Photoionisationsdetektor und/oder andere Detektoren verwendet werden. Die Erfindung ist auf die vorgenannten Ausführungsformen nicht eingeschränkt. Vielmehr kann für die Erfindung jede Detektionseinrichtung verwendet werden, die für die Erfindung geeignet ist.

Eine weitere Einheit der Vorrichtung für einen Gaschromatographen, insbesondere einen Temperaturgradienten-Gaschromatographen, kann insbesondere mindestens eine zweite Trennkapillare sein, die an das zweite Ende der ersten Trennkapillare angeschlossen ist. Im Rahmen der Gaschromatographie wird ein Gaschromatograph, bei dem eine zweite Trennkapillare an die erste Trennkapillare angeschlossen ist, als zweidimensionaler Gaschromatograph bezeichnet. Die zweite Trennkapillare dient dabei einer weiteren Auftrennung einer Teilmenge des mit der ersten Trennkapillare analysierten Stoffgemischs. Es können auch mehr als zwei Trennkapillaren in Strömungsrichtung des zu analysierenden Stoffgemischs in Reihe aneinander angeschlossen werden. In diesem Fall ist der Gaschromatograph ein multidimensionaler Gaschromatograph. Das zweite Ende der letzten Trennkapillare der Mehrzahl von in Strömungsrichtung des zu analysierenden Stoffgemischs in Reihe geschalteter Trennkapillaren ist regelmäßig mit einer Anschlussvorrichtung zum Anschluss der letzten Trennkapillare an eine Detektionseinrichtung versehen.

Wenn die erfindungsgemäße Vorrichtung zwei oder mehr Trennkapillaren aufweist, dann können diese Trennkapillaren alle in dem Modul (also in dem ersten Modul) angeordnet sein. Alternativ können die Trennkapillaren einzeln in separaten Modulen angeordnet sein, so dass die Vorrichtung eine Mehrzahl von Modulen aufweist, die technisch dem ersten Modul entsprechen, wobei jedes dieser Module eine unterschiedliche Trennkapillare aufweist und die Mehrzahl dieser Module über ihre jeweilige Trennkapillaren in Strömungsrichtung des zu analysierenden Stoffgemischs fluidal durchströmbar in Reihe geschaltet sind.

Bei einer wiederum weiteren Ausführungsform der erfindungsgemäßen Vorrichtung ist es zusätzlich oder alternativ vorgesehen, dass die erste Anschlussvorrichtung mindestens einen ersten Isolator und/oder mindestens eine erste Heizvorrichtung zum Einstellen einer Temperatur der ersten Anschlussvorrichtung aufweist. Es ist von Vorteil, wenn die erste Anschlussvorrichtung auf eine Temperatur oberhalb der Temperatur der Trennkapillare beheizbar ist, so dass bei der Analyse eines zu analysierenden Stoffgemischs keine Bestandteile des zu analysierenden Stoffgemischs in der ersten Anschlussvorrichtung adsorbieren.

Der erste Isolator kann beispielsweise aus einem Wärme-dämmenden Material gebildet sein, das zumindest teilweise um die erste Anschlussvorrichtung, optional auch um die Probenaufgabeeinrichtung, herum angeordnet ist. Die erste Heizvorrichtung kann beispielsweise eine elektrische Heizung oder eine Ofenkammer sein, in der die erste Anschlussvorrichtung und optional die Probenaufgabeeinrichtung angeordnet ist bzw. sind.

Alternativ oder zusätzlich umfasst die erste Anschlussvorrichtung mindestens eine Schnellverbindungseinrichtung zum schnellen Verbinden der Trennkapillare mit der Probenaufgabeeinrichtung. Eine Schnellverbindungseinrichtung zum schnellen Verbinden der Trennkapillare mit der Probenaufgabeeinrichtung ist so ausgelegt, dass die Trennkapillare und die Probenaufgabeeinrichtung auf einfache und schnelle Weise gasdicht verbunden werden können, sobald das erste Modul in der vordefinierten Position in der Aufnahmeeinrichtung eingesetzt ist. In einer bevorzugten Ausführungsform ist die Schnellverbindungseinrichtung nicht schließbar, wenn das erste Modul nicht in der vordefinierten Position in der Aufnahmeeinrichtung eingesetzt ist. Dadurch wird eine passgenaue und sichere Ausrichtung der Trennkapillare auf die Probenaufgabeeinrichtung und auf die Beeinflussungseinrichtung zur Beeinflussung der Fluidströmung erreicht.

Beispielsweise kann die Schnellverbindungseinrichtung eine Steckverbindung derart sein, dass die an der Probenaufgabeeinrichtung angeordnete Transferleitung einen Aufnehmer aufweist. In den Aufnehmer kann beispielsweise ein Stecker, der an dem ersten Ende der Trennkapillare angeordnet ist, eingeführt werden, so dass eine fluidal durchströmbare Verbindung vorliegt. Alternativ oder zusätzlich kann die Schnellverbindungseinrichtung eine Schelle umfassen, die eine an der Probenaufgabeeinrichtung angeordnete Transferleitung und das erste Ende der Trennkapillare zumindest teilweise umschließt. Weiterhin alternativ kann die Schnellverbindungseinrichtung eine Hülse umfassen, die von der Transferleitung zumindest teilweise auf das erste Ende der Trennkapillare aufschraubbar ist, oder die von dem ersten Ende der Trennkapillare zumindest teilweise auf die Probenaufgabeeinrichtung aufschraubbar ist.

Ebenfalls alternativ oder zusätzlich ist bei der erfindungsgenmäßen Vorrichtung vorgesehen, dass die zweite Anschlussvorrichtung mindestens einen zweiten Isolator und/oder mindestens eine zweite Heizvorrichtung zum Einstellen einer Temperatur der zweiten Anschlussvorrichtung aufweist, so dass an der zweiten Anschlussvorrichtung eine Temperatur oberhalb einer Temperatur der beheizbaren Trennkapillare einstellbar ist. Wie bei der ersten Anschlussvorrichtung, kann der zweite Isolator beispielsweise aus einem Wärme-dämmenden Material gebildet sein, das um die zweite Anschlussvorrichtung und zumindest teilweise um die Detektionseinrichtung herum angeordnet ist. Die zweite Heizvorrichtung kann beispielsweise eine elektrische Heizung oder eine Ofenkammer sein, in der die zweite Anschlussvorrichtung, die erste Anschlussvorrichtung und die Probenaufgabeeinrichtung angeordnet sein können. Für die Ausbildung des zweiten Isolators und/oder der zweiten Heizvorrichtung an der zweiten Anschlussvorrichtung gelten im Übrigen dieselben Erörterungen, wie für die Ausbildung des ersten Isolators und/oder der ersten Heizvorrichtung an der ersten Anschlussvorrichtung.

Ebenfalls alternativ oder zusätzlich umfasst die zweite Anschlussvorrichtung mindestens eine zweite Schnellverbindungseinrichtung zum schnellen Verbinden der Trennkapillare mit der Detektionseinrichtung. Die vorausgehend genannte Beschreibung zu der ersten Schnellverbindungseinrichtung an der ersten Anschlussvorrichtung gilt ebenfalls für die zweite Schnellverbindungseinrichtung an der zweiten Anschlussvorrichtung.

Bei einer noch weiteren Ausführungsform der erfindungsgemäßen Vorrichtung ist es zusätzlich oder alternativ vorgesehen, dass das Modul (also das erste Modul), in dem die Trennkapillare angeordnet ist, derart in die Aufnahmeeinrichtung einsetzbar ist, dass beim Einsetzen dieses Moduls eine Verbindung dieses Moduls mit der Beeinflussungseinrichtung automatisch hergestellt ist. Alternativ hierzu ist es bei einer wiederum weiteren Ausführungsform der erfindungsgemäßen Vorrichtung vorgesehen, dass beim Einsetzen dieses Moduls eine Verbindung dieses Moduls mit der Beeinflussungseinrichtung sowie mit der zweiten Erzeugungseinrichtung zur Erzeugung einer Fluidströmung automatisch hergestellt ist.

Das automatische Herstellen der Verbindung kann insbesondere dadurch realisiert sein, dass die Aufnahmeeinrichtung eine vordefinierte Position für das darin einsetzbare Modul, beispielsweise das erste Modul, aufweist. Wenn mehrere Module austauschbar in der erfindungsgemäßen Vorrichtung angeordnet sind (beispielsweise das erste Modul, das zweite Modul und/oder das dritte Modul), dann weist die Aufnahmeeinrichtung oder die Mehrzahl von Aufnahmeeinrichtungen vordefinierte Positionen für die darin einsetzbaren Module auf. Dies kann insbesondere dann vorgesehen sein, wenn die Beeinflussungseinrichtung in dem austauschbaren zweiten Modul angeordnet ist und/oder wenn die zweite Erzeugungseinrichtung zur Erzeugung einer Fluidströmung in dem dritten Modul angeordnet ist. Die vordefinierten Positionen zeichnen sich dadurch aus, dass das in die Aufnahmeeinrichtung eingesetzte Modul oder die in die Mehrzahl von Aufnahmeeinrichtungen eingesetzten Module in einer vordefinierten Position relativ zueinander und zu der Aufnahmeeinrichtung angeordnet sind. Bei einer beispielhaften vordefinierten Position der Module sind das erste Modul, das zweite Modul und das dritte Modul bündig aneinander angrenzend in einer Reihe, beispielsweise übereinander gestapelt, angeordnet, wobei das erste Modul zwischen dem zweiten Modul und dem dritten Modul angeordnet ist.

Wenn die erfindungsmäße Vorrichtung eine Vorrichtung für einen multidimensionalen Gaschromatographen, insbesondere einen multidimensionalen Temperaturgradienten-Gaschromatographen, ist, dann können alle Module, die technisch dem ersten Modul entsprechen, zwischen der Beeinflussungseinrichtung und der optionalen zweiten Erzeugungseinrichtung zur Erzeugung einer Fluidströmung angeordnet sein. Wenn die Beeinflussungseinrichtung in dem zweiten Modul angeordnet ist und die zweite Erzeugungseinrichtung in dem dritten Modul angeordnet ist, können alle Module, die technisch dem ersten Modul entsprechen, zwischen dem zweiten und einem optionalen dritten Modul angeordnet sein. Bei einer vordefinierten Position der Module der vorstehend beschriebenen Art ist beispielsweise eine Verbindungseinrichtung der vorstehend beschriebenen Art zur Verbindung der jeweiligen Module zwischen dem ersten Modul und dem zweiten Modul sowie zwischen dem ersten Modul und dem dritten Modul angeordnet.

Eine Position der jeweiligen vorgenannten Module kann beispielsweise vordefiniert sein, indem die Aufnahmeeinrichtung oder die Mehrzahl von Aufnahmeeinrichtungen als Gerüst ausgebildet ist, in welches das erste Modul und/oder das zweite Modul und/oder das dritte Modul in einer jeweils definierten Position einsetzbar sind und welches beispielsweise Führungsschienen aufweist, auf die die jeweiligen Module in die Aufnahmeeinrichtung eingeschoben werden können. Alternativ oder zusätzlich können die Module in jeweils vordefinierten Positionen angeordnet sein, indem Druckelemente und/oder Spannelemente, die an den jeweiligen Modulen angeordnet sind, von einer Bereitschaftsstellung in eine Arretierstellung übergehen, wenn die jeweiligen Module eine vordefinierte Position einnehmen. Beispielsweise können die Druckelemente und/oder Spannelemente Stifte sein, die an einem der Module aus der Menge des ersten Moduls, des zweiten Moduls und dritten Moduls angeordnet sind und durch eine Federkraft beaufschlagt in eine Aussparung an einem angrenzenden Modul der vorgenannten Menge einschnappen.

Bei einer weiteren Ausführungsform der erfindungsgemäßen Vorrichtung ist es zusätzlich oder alternativ vorgesehen, dass das erste Modul, in dem die Trennkapillare angeordnet ist, derart in die Aufnahmeeinrichtung einsetzbar ist, dass beim Einsetzen des ersten Moduls eine Verbindung des ersten Moduls mit der Probenaufgabeeinrichtung und/oder mit der Detektionseinrichtung manuell herstellbar oder automatisch hergestellt ist.

Das manuelle Herstellen der Verbindung kann beispielsweise händisch durch einen Operator der erfindungsgemäßen Vorrichtung erfolgen, indem der Operator die erste Anschlussvorrichtung und/oder die zweite Anschlussvorrichtung schließt. Das automatische Herstellen der Verbindung kann insbesondere dadurch realisiert sein, dass die Aufnahmeeinrichtung wie vorstehend beschrieben eine vordefinierte Position für das darin einsetzbare erste Modul aufweist. In diesem Fall können die ebenfalls vorstehend beschriebenen Schnellverbindungen an der ersten Anschlussvorrichtung sowie an der zweiten Anschlussvorrichtung an eine Detektionseinrichtung automatische Schnellverbindungen sein.

Automatische Schnellverbindungen können beispielsweise Steckverbindungen sein. Insbesondere können die Steckverbindungen derart ausgebildet sein, dass die Trennkapillare und die Probenaufgabeeinrichtung, beziehungsweise die Trennkapillare und die Detektionseinrichtung, auf automatische Weise gasdicht verbunden werden können, sobald das erste Modul in der vordefinierten Position in der Aufnahmeeinrichtung eingesetzt ist. Hierbei kann beispielsweise eine dichte Verbindung erzielt werden, indem ein an dem ersten Ende der Trennkapillare angeordneter erster Stecker in eine erste Muffe eingeführt wird. Weiterhin kann ein an dem zweiten Ende der Trennkapillare angeordneter zweiter Stecker in eine zweite Muffe eingeführt werden. Zwischen dem ersten Ende der Trennkapillare und der ersten Muffe sowie zwischen dem zweiten Ende der Trennkapillare und der zweiten Muffe ist beispielsweise ein elastisches Dichtmittel angeordnet. Durch eine Steckverbindung kann beispielsweise eine schnelle, passgenaue und sichere Ausrichtung der Trennkapillare auf die Probenaufgabeeinrichtung erreicht werden.

Bei einer Ausführungsform der erfindungsgemäßen Vorrichtung ist es zusätzlich oder alternativ vorgesehen, dass die Trennkapillare eine im Wesentlichen spiralförmig oder spiralförmig gewickelte Ausbildung aufweist. Die spiralförmige oder im Wesentlichen spiralförmige Ausbildung ist insbesondere eine planare Spirale, beispielsweise eine archimedische Spirale, eine parabolische Spirale oder eine logarithmische Spirale. Die Spirale kann jedoch auch eine dreidimensionale Spirale sein. Dabei muss nicht die gesamte Trennkapillare als Spirale ausgebildet sein. Insbesondere können zwei Endabschnitte der Trennkapillare, an denen die erste Anschlussvorrichtung zum Anschluss der Trennkapillare an eine Probenaufgabeeinrichtung sowie die zweite Anschlussvorrichtung zum Anschluss der Trennkapillare an eine Detektionseinrichtung angeordnet sind, von der Gestalt einer Spirale abweichen. Beispielsweise ist ein erster Endabschnitt der Spirale so ausgebildet, dass der erste Endabschnitt von einem inneren Radius der Spirale radial, das heißt geradlinig, über die Spirale hinweg nach außen führt. Beispielsweise führt der erste Endabschnitt zu dem Gehäuse des ersten Moduls. An diesem ersten Endabschnitt kann beispielsweise die erste Anschlussvorrichtung angeordnet sein, welche an die Probenaufgabeeinrichtung oder an die Detektionseinrichtung angeschlossen sein kann. Ein zweiter Endabschnitt der Trennkapillare ist so ausgebildet, dass dieser beispielsweise von dem äußeren Radius der Spirale tangential von der Spirale hinwegführt. Der zweite Endabschnitt der Trennkapillare kann beispielsweise ebenfalls zu dem Gehäuse des ersten Moduls führen. An dem zweiten Endabschnitt der Trennkapillare kann die zweite Anschlussvorrichtung angeordnet sein, welche die Trennkapillare mit der Probenaufgabeeinrichtung oder an die Detektionseinrichtung verbinden kann. Darüber hinaus sind beispielsweise der erste Endabschnitt und der zweite Endabschnitt isoliert. Insbesondere sind sie von einem Wärme-dämmenden Material umgeben.

Die vorgenannte Ausführungsform weist den Vorteil auf, dass eine kompakte Bauweise ermöglicht wird. Die helixförmige Ausbildung der Trennkapillare, die im Stand der Technik verwendet wird, wird bei der Erfindung beispielsweise durch eine spiralförmige Ausbildung der Trennkapillare ersetzt, die im Wesentlichen in einer Ebene angeordnet ist. Hiermit ist gemeint, dass die derart ausgebildete Trennkapillare in einer Ebene angeordnet ist und sich von dieser Ebene nur mit einer geringen Höhe erstreckt. Die spiralförmig ausgebildete Trennkapillare ist daher recht flach ausgebildet, beispielsweise mit einer Höhe kleiner als 20 cm oder kleiner als 10 cm oder kleiner als 5 cm. Ein großes Volumen wie bei der aus dem Stand der Technik bekannten helixförmig ausgebildeten Trennkapillare wird vermieden. Die spiralförmig ausgebildete Trennkapillare ermöglicht die Ausbildung der Trennkapillare mit einer Länge, die für die Durchführung einer gaschromatographischen Messung ausreichend ist.

Wenn die Trennkapillare als eine archimedische Spirale ausgebildet ist, dann lässt sich die Länge L der Trennkapillare wie folgt berechnen:

$$L(t) = \frac{1}{2} k \left( arsinh(t) + t \sqrt{t^2 + 1} \right)$$

wobei

L    die Länge der Trennkapillare ist;

t    ein Winkel in Polarkoordinaten ist (somit entspricht $\pi$ 180°); sowie

k    ein wählbarer Faktor ist, wobei gilt: r = k·t, wobei r der Radius in Polarkoordinaten beim Winkel t ist und die Polarkoordinaten gegeben durch x(t) = k·t·cos t sowie y(t) = k·t·sin t sind. Bei k = 1/(2$\pi$) ist der Abstand der Spiralspuren der spiralförmigen Trennkapillare gleich 1.

Beispielsweise beträgt die Länge einer als archimedische Spirale ausgebildeten Trennkapillare mit einem Anfangsradius von 2 cm (Radius einer ersten Spirale der spiralförmig ausgebildeten Trennkapillare) und einem Endradius von 10 cm (Radius einer letzten Spirale der spiralförmig ausgebildeten Trennkapillare) ca. 300 cm, wenn der Abstand der Spiralspuren 1 cm ist. Der Durchmesser der gesamten spiralförmig ausgebildeten Trennkapillare beträgt ca. 20 cm. Bei einem reduzierten Abstand von 0,5 cm verdoppelt sich die Länge auf ca. 600 cm.

Bei einer weiteren Ausführungsform der erfindungsgemäßen Vorrichtung ist es zusätzlich oder alternativ vorgesehen, dass die Beeinflussungseinrichtung derart ausgebildet ist, dass das Fluid nach Durchströmen der Beeinflussungseinrichtung ein im Wesentlichen zentralsymmetrisches oder zentralsymmetrisches Strömungsfeld aufweist. Ein zentralsymmetrisches Feld wird oft auch als punktsymmetrisches Feld bezeichnet. Die Ausbildung des zentralsymmetrischen Strömungsfelds ist hier auf eine zweidimensionale Verteilung (also entlang einer ersten Raumrichtung und entlang einer zweiten Raumrichtung) der Geschwindigkeit der Fluidströmung orthogonal zur Strömungsrichtung bezogen. Das Strömungsfeld kann auch entlang einer dritten Raumrichtung, das heißt entlang der Strömungsrichtung der Fluidströmung, variieren. Dies ist jedoch nicht zwingend erforderlich.

Ein zentralsymmetrisches Feld ist dadurch gekennzeichnet, dass das Feld auf sich selbst abgebildet ist, wenn es um 180° um einen zentralen Punkt des Feldes gedreht wird. Mit anderen Worten ausgedrückt, weist ein Strömungsfeld dann eine zentralsymmetrische Geschwindigkeitsverteilung auf, wenn die Geschwindigkeit in einem beliebigen Punkt des Strömungsfelds der Geschwindigkeit in dem sich durch die Spiegelung des beliebigen Punktes an dem zentralen Mittelpunkt des Feldes ergebenden Punkt entspricht.

Ein Beispiel für eine Ausführungsform mit einem zentralsymmetrischen Strömungsfeld ist, wenn die Trennkapillare planar und spiralförmig ausgebildet und waagerecht in dem ersten Modul angeordnet ist, und die Beeinflussungseinrichtung unterhalb oder oberhalb der Spirale flächig angeordnet ist. Die Beeinflussungseinrichtung kann dann ein orthogonal zu der Ebene der Trennkapillare strömendes Fluidströmungsfeld beeinflussen, wobei ein Querschnitt des Fluidströmungsfelds parallel zur Ebene der Spirale liegt und jede beliebige, zentralsymmetrische Form aufweisen kann. Die Form des Querschnitts wird maßgeblich durch die Ausbildung der Beeinflussungseinrichtung definiert. Beispielsweise kann eine Vielzahl von Düsen in bestimmter Anordnung, beispielsweise kreisförmig angeordnet, auf die Trennkapillare ausgerichtet sein, wodurch ein Strömungsfeld mit kreisförmigem Querschnitt entsteht. Alternativ kann eine Schwammstruktur in Form eines Kreises unterhalb oder oberhalb der Trennkapillare angeordnet und mit Luft durchströmt werden, wodurch ebenfalls ein Strömungsfeld mit kreisförmigem Querschnitt entsteht.

Wie weiter unten noch näher erläutert wird, wird das zentralsymmetrische Strömungsfeld in dem zweiten Modul erzeugt. Bei einer Ausführungsform ist es zusätzlich oder alternativ vorgesehen, das Fluid im zweiten Modul zu kühlen. Hierzu ist beispielsweise eine Kühleinrichtung, insbesondere in Form eines Kühlkreislaufs an dem zweiten Modul oder in dem zweiten Modul angeordnet.

Bei einer weiteren Ausführungsform der erfindungsgemäßen Vorrichtung ist es zusätzlich oder alternativ vorgesehen, dass das Fluidströmungsfeld als ein homogenes Fluidströmungsfeld oder als ein inhomogenes Fluidströmungsfeld ausgebildet ist. Bei einer wiederum weiteren Ausführungsform der erfindungsgemäßen Vorrichtung ist es zusätzlich oder alternativ vorgesehen, dass das Fluid nach Durchströmen der Beeinflussungseinrichtung das homogene oder das inhomogene Strömungsfeld (nachfolgend auch Fluidströmungsfeld genannt) aufweist.

Das homogene Fluidströmungsfeld führt beispielsweise zu einer entlang der Trennkapillare konstanten Rate der abgeführten Wärme. Mit anderen Worten ausgedrückt, erfolgt eine entlang der Trennkapillare konstante Rate der abgeführten Wärme beispielsweise durch eine entlang der axialen Ausdehnung der Trennkapillare konstante Strömungsgeschwindigkeit des die Trennkapillare umströmenden Fluids.

Das homogene Strömungsfeld kann beispielsweise erzeugt werden, indem die vorstehend genannten Düsen äquidistant angeordnet sind und das Fluid aus den Düsen mit gleicher oder im Wesentlichen gleicher Strömungsgeschwindigkeit herausströmt. Durch die Überlagerung der Strömungen aus den Düsen entsteht dann ein homogenes Strömungsfeld. Alternativ kann ein homogenes Strömungsfeld beispielsweise erzeugt werden, in dem die vorstehend genannte Schwammstruktur eine homogene Porenstruktur aufweist und gleichmäßig von dem Fluid durchströmt wird. Insbesondere kann die Schwammstruktur von der bereits erwähnten ersten Seite durch das Fluid angeströmt werden, so dass das Fluid die Schwammstruktur durchströmt und die Schwammstruktur auf der zweiten Seite, die der ersten Seite gegenüberliegt, verlässt. Von dieser zweiten Seite kann das Fluid dann als homogene Strömung zu der Trennkapillare strömen.

Zusätzlich oder alternativ führt das inhomogene Strömungsfeld beispielsweise zu einer entlang der Trennkapillare zunehmenden oder abnehmenden Rate der abgeführten Wärme. Das inhomogene Strömungsfeld weist beispielsweise eine entlang der axialen Ausdehnung der Trennkapillare graduell zunehmende Strömungsgeschwindigkeit oder eine graduell abnehmende Strömungsgeschwindigkeit auf. Durch eine höhere Strömungsgeschwindigkeit des die Trennkapillare umströmenden Fluids wird eine höhere Wärmeabfuhrrate als durch eine niedrigere Strömungsgeschwindigkeit des die Trennkapillare umströmenden Fluids realisiert. Somit wird bei entlang der Trennkapillare konstanter Wärmezufuhrrate durch eine von dem ersten Ende der Trennkapillare zu dem zweiten Ende der Trennkapillare abnehmende Strömungsgeschwindigkeit eine von dem ersten Ende der Trennkapillare zu dem zweiten Ende der Trennkapillare steigende Temperatur realisiert. Eine von dem ersten Ende der Trennkapillare zu dem zweiten Ende der Trennkapillare sinkende Temperatur wird entsprechend bei zu dem zweiten Ende der Trennkapillare hin steigender Strömungsgeschwindigkeit des Fluids erreicht.

Das inhomogene Fluidströmungsfeld kann ausgebildet werden, indem die vorstehend genannten Düsen äquidistant angeordnet sind und das Fluid aus den Düsen mit ungleicher Strömungsgeschwindigkeit herausströmt. Durch die Überlagerung der Strömungen aus den Düsen entsteht dann ein inhomogenes Strömungsfeld. Alternativ kann das inhomogene Strömungsfeld beispielsweise erzeugt werden, indem die vorstehend genannte Schwammstruktur eine homogene Porenstruktur aufweist und ungleichmäßig von dem Fluid durchströmt wird. Insbesondere kann eine ungleichmäßige Durchströmung der Schwammstruktur erreicht werden, wenn die Schwammstruktur von einer dritten Seite, die beispielsweise quer zur zweiten Seite angeordnet ist, durch das Fluid angeströmt wird, so dass das Fluid die Schwammstruktur durchströmt und diese auf der zweiten Seite verlässt. Von dieser zweiten Seite kann das Fluid dann als inhomogene Strömung zu der Trennkapillare strömen. Die inhomogene Strömung wird in diesem Fall beispielsweise dadurch ausgebildet, dass die Länge des Weges, den das Fluid in der Schwammstruktur zurücklegt, von der Stelle abhängt, an der das Fluid die Schwammstruktur verlässt.

Aufgrund der recht flachen und beheizten Trennkapillare sowie des flächigen, inhomogenen und zentralsymmetrischen Strömungsfelds erzeugt eine orthogonal zu den Flächen der spiralförmig ausgebildeten Trennkapillare und des Strömungsfelds ausgerichtete Anordnung des ersten Moduls und des zweiten Moduls die angestrebte konstante Temperatur über die Länge der Kapillare. Alternativ erzeugt dieser Aufbau den angestrebten Temperaturverlauf über die Länge der Trennkapillare. Die erfindungsgemäße Vorrichtung ist somit geeignet, eine homogene Temperatur oder einen Temperaturverlauf entlang der Trennkapillare zu erzeugen. Hierfür ist die Beeinflussungseinrichtung zur Beeinflussung der Fluidströmung flexibel anpassbar.

Bei einer wiederum weiteren Ausführungsform der erfindungsgemäßen Vorrichtung ist es zusätzlich oder alternativ vorgesehen, dass die Strömungsgeschwindigkeit des zentralsymmetrischen, inhomogenen Strömungsfelds mit zunehmender Entfernung von einem Zentrum des Strömungsfelds zunimmt. Insbesondere kann die Strömungsgeschwindigkeit in der Querschnittsebene des Fluidströmungsfeldes variieren. Wie vorausstehend beschrieben ist, kann das Fluidströmungsfeld eine inhomogene Geschwindigkeitsverteilung aufweisen. Wenn die inhomogen verteilte Geschwindigkeit von einem zentralen Mittelpunkt des Fluidströmungsfeldes radial nach außen hin zunimmt, dann ist das Strömungsfeld zentralsymmetrisch und inhomogen.

Diese Ausführungsform des Fluidströmungsfeldes kann beispielsweise erreicht werden, wenn eine Schwammstruktur, die zentralsymmetrisch ist und parallel beabstandet unterhalb oder oberhalb einer ebenen, spiralförmigen Trennkapillare angeordnet ist, eine von dem zentralen Mittelpunkt der Schwammstruktur nach außen hin zunehmende Durchlässigkeit für das Fluid aufweist. Insbesondere kann eine das vorstehend beschriebene Fluidströmungsfeld erzeugende Schwammstruktur unterhalb oder oberhalb einer als planare Spirale ausgebildete Trennkapillare deckungsgleich angeordnet sein. In diesem Fall nimmt die durch das Fluidströmungsfeld an der Trennkapillare erzeugte Wärmeabfuhrrate mit dem Radius der planaren Spirale der Trennkapillare zu. In der Folge kann die als Spirale ausgebildete Trennkapillare eine mit dem Radius der Spirale abnehmende Temperatur aufweisen.

Bei einer noch weiteren Ausführungsform der erfindungsgemäßen Vorrichtung ist es zusätzlich oder alternativ vorgesehen, dass die Strömungsgeschwindigkeit des zentralsymmetrischen Strömungsfelds mit zunehmender Entfernung von einem Zentrum des Strömungsfelds abnimmt. Wie vorstehend beschrieben, kann die Strömungsgeschwindigkeit in der Querschnittsebene des Fluidströmungsfeldes variieren. Wenn die Geschwindigkeit von einem zentralen Mittelpunkt des Fluidströmungsfeldes radial nach außen hin abnimmt, dann ist das Strömungsfeld ebenfalls zentralsymmetrisch und inhomogen.

Diese Ausführungsform des Fluidströmungsfeldes kann beispielsweise erreicht werden, wenn die Fluiddurchlässigkeit eines Schwamms, der zentralsymmetrisch ist und parallel beabstandet unterhalb oder oberhalb einer ebenen, spiralförmigen Trennkapillare angeordnet ist, von dem zentralen Mittelpunkt des Schwamms nach außen hin abnimmt. Für das zentralsymmetrische Strömungsfeld mit einer von einem Zentrum des Strömungsfelds abnehmenden Geschwindigkeitsverteilung gelten im Übrigen dieselben Erörterungen, wie für das zentralsymmetrische Strömungsfeld mit einer von einem Zentrum des Strömungsfelds zunehmenden Geschwindigkeitsverteilung.

Bei einer Ausführungsform der erfindungsgemäßen Vorrichtung ist es zusätzlich oder alternativ vorgesehen, dass mindestens eine Strömungsrichtereinrichtung zur Einstellung einer homogenen Strömungsrichtung der Fluidströmung entlang der Trennkapillare angeordnet ist. Eine Strömungsrichtereinrichtung ist eine Einrichtung, welche die Strömungsrichtung der Fluidströmung, die von der Beeinflussungseinrichtung zu der Trennkapillare strömt, in einer Orientierungsrichtung ausrichtet. Dies hat insbesondere den Vorteil, dass die Fluidströmung weniger turbulent ist und dadurch eine besser verteilte Kühlung der Trennkapillare stattfinden kann. Eine besser verteilte Kühlung der Trennkapillare ist darauf bezogen, dass die Trennkapillare entlang ihrer axialen Ausdehnung einen mathematisch monotonen Temperaturverlauf aufweisen kann, damit das mit einem Gaschromatographen zu analysierende Stoffgemisch korrekt aufgetrennt werden kann. Ein mathematisch monotoner Temperaturverlauf kann bei definierter Anströmung der Trennkapillare durch das Fluid erzielt werden. Die Strömungsrichtereinrichtung ist mit dem Ziel entlang der Trennkapillare angeordnet, eine definierte Anströmung der Trennkapillare ohne Turbulenzen zu ermöglichen.

Eine beispielhafte Umsetzung der Strömungsrichtereinrichtung ist ein entlang der Trennkapillare angeordnetes Band. Ein Band ist in diesem Kontext ein ebenes, festes Gebilde, das sich in eine erste und in eine zweite Richtung erstreckt. In der ersten Richtung des Bandes weist das Band eine vielfach größere Ausdehnung auf als in der zweiten Richtung des Bandes. Beispielsweise kann ein Kunststoffstreifen ein Band sein. Während das Band entlang der ersten Richtung des Bands in der Ebene der Trennkapillare der Form der Trennkapillare folgt, kann die zweite, kürzere Richtung des Bands entlang der nominellen Strömungsrichtung der Fluidströmung, die von der Beeinflussungseinrichtung zur Beeinflussung der Fluidströmung zu der Trennkapillare gerichtet ist, orientiert sein. Die Strömungsrichtereinrichtung kann beispielsweise über einen durchgehenden Steg oder eine Mehrzahl von Stegen mit dem ersten Modul, insbesondere mit einem Gerüst oder einem Gehäuse des ersten Moduls, verbunden sein.

Die Strömungsrichtereinrichtung kann beispielsweise aus mindestens einem Material mit einer geringen Wärmekapazität ausgebildet sein. Beispielsweise kann die Wärmekapazität des Materials der Strömungsrichtereinrichtung auf das Volumen bezogen sein und dann kleiner oder gleich 3,8 J/cm³K sein, bevorzugt kleiner oder gleich 2,0 J/cm³K sein. Wenn die Strömungsrichtereinrichtung ein Band ist, kann das Band beispielsweise aus einem temperaturbeständigen Kunststoff, bspw. Polyimid, gebildet sein. Alternativ oder zusätzlich kann die Strömungsrichtereinrichtung aus jedem anderen Material gebildet sein, das für die Erfindung geeignet ist.

Bei einer noch weiteren Ausführungsform der erfindungsgemäßen Vorrichtung ist es zusätzlich oder alternativ vorgesehen, dass mindestens ein Temperatursensor zur berührungslosen Messung der Temperatur der Trennkapillare an der Vorrichtung für einen Gaschromatographen, insbesondere einen Temperaturgradienten-Gaschromatographen, angeordnet ist. Der Temperatursensor misst die Temperatur an mindestens einer Stelle der Trennkapillare. Die von dem Temperatursensor an einer Stelle der Trennkapillare oder an einer Mehrzahl von Stellen der Trennkapillare gemessene Temperatur dient als Eingabeparameter für die regelbare Heizleistung der beheizbaren Trennkapillare und die regelbare Fluidströmung. Die gemessene Temperatur wird dabei in ein elektrisches Signal umgewandelt, welches an eine Recheneinheit weitergeleitet und dort mit einer nominellen Temperatur der Stelle der Trennkapillare verglichen wird, an der die Temperatur gemessen wurde. Basierend auf dem Vergleich der gemessenen Temperatur und der nominellen Temperatur berechnet die Recheneinheit eine erforderliche Heizleistung und eine Fluidströmungsgeschwindigkeit, das heißt eine vordefinierte Leistung der Erzeugungseinrichtung, um die gemessene Temperatur der Trennkapillare so zu verändern, dass sie der nominellen Temperatur näher kommt. Durch einen wiederholt ausgeführten, iterativen Vergleich der gemessenen Temperatur und der nominellen Temperatur mit anschließender Anpassung der Heizleistung und der Leistung der Erzeugungseinrichtung kann mit großer Übereinstimmung die nominelle Temperatur der Trennkapillare eingestellt werden.

Die berührungslose Temperaturmessung kann beispielsweise durch eine optische Messeinrichtung, insbesondere durch ein Pyrometer oder eine Mehrzahl von Pyrometern, realisiert werden. Zusätzlich oder alternativ kann es vorgesehen sein, dass eine Temperaturmessung mittels eines Thermoelements, das in der Nähe der in die Aufnahmeeinrichtung eingesetzten Trennkapillare angeordnet ist, durchgeführt wird. Natürlich kann auch eine Mehrzahl von Thermoelementen verwendet werden.

Die Erfindung betrifft ebenfalls einen Gaschromatographen, insbesondere einen Temperaturgradienten-Gaschromatographen, der eine Vorrichtung mit mindestens einem der vorstehenden oder nachstehenden Merkmale oder mit einer Kombination aus mindestens zwei der vorstehenden oder nachstehenden Merkmale aufweist. Der erfindungsgemäße Gaschromatograph umfasst beispielsweise eine Probenaufgabeeinrichtung sowie eine Detektionseinrichtung. Die Probenaufgabeeinrichtung kann, wie vorausstehend beschrieben, beispielsweise ein Split/Splitlos-Injektor sein. Die Detektionseinrichtung kann, wie vorausstehend beschrieben, beispielsweise ein Massenspektrometer sein. Darüber hinaus umfasst der erfindungsgemäße Gaschromatograph beispielsweise mindestens ein Gehäuse, in dem die Vorrichtung der vorausgehend beschriebenen Art angeordnet ist und das den erfindungsgemäßen Gaschromatographen nach außen abschließt, so dass weitestgehend kein Fluid von der erfindungsgemäßen Vorrichtung aus dem erfindungsgemäßen Gaschromatographen hinausströmt und so, dass weitestgehend keine Wärme aus dem Gaschromatographen nach außen entweicht. In dem mindestens einen Gehäuse des erfindungsgemäßen Gaschromatographen können ebenfalls die Probenaufgabeeinrichtung und die Detektionseinrichtung angeordnet sein. Diese können jedoch auch außerhalb des Gehäuses des erfindungsgemäßen Gaschromatographen angeordnet sein, um etwaige empfindliche Sensoren der Probenaufgabeeinrichtung und der Detektionseinrichtung vor einem Einfluss des Fluids und/oder der Wärme in dem Gehäuse des erfindungsgemäßen Gaschromatographen zu schützen. Weiterhin umfasst der erfindungsgemäße Gaschromatograph beispielsweise eine Recheneinheit, die mindestens mit Sensoren der Probenaufgabeeinrichtung, mit Sensoren der Detektionseinrichtung, mit einem elektrisch regelbaren Element der Erzeugungseinrichtung zur Erzeugung einer Fluidströmung eines Fluids, mit dem Temperatursensor und mit einer Ausgabeeinheit verbunden sind. Eine Ausgabeeinheit kann beispielsweise ein Plotter sein, der ein Chromatogramm erstellt. Alternativ kann die Ausgabeeinheit ein Display sein.

Bei einer Ausführungsform des erfindungsgemäßen Gaschromatographen ist es zusätzlich oder alternativ vorgesehen, dass der Gaschromatograph als ein Prozess-Temperaturgradienten-Gaschromatograph ausgebildet ist. Ein Prozess-Gaschromatograph zeichnet sich durch eine schnelle Analyse eines zu analysierenden Stoffgemischs aus, wodurch eine online-Überwachung von Prozessen, beispielsweise in der chemischen Industrie, möglich ist. Insbesondere können Kohlenwasserstoffe in der petrochemischen Industrie analysiert werden. Prozess-Temperaturgradienten-Gaschromatographen sind Prozess-Gaschromatographen, die auf einem Temperaturgradienten-Gaschromatographen basieren.

Weitere praktische Ausführungsformen und Vorteile der Erfindung sind nachfolgend im Zusammenhang mit den Zeichnungen beschrieben. Es zeigen:

Figur 1    eine erste Ausführungsform der erfindungsgemäßen Vorrichtung als ein Blockdiagramm;

Figur 2    eine zweite Ausführungsform der Vorrichtung in einer Seitenansicht, bei der ein erstes Modul, ein zweites Modul und ein drittes Modul übereinander in einer Aufnahmeeinrichtung angeordnet sind;

Figur 3    eine Ausführungsform des ersten Moduls mit einer in dem ersten Modul angeordneten Trennkapillare in Draufsicht;

Figur 4    die Ausführungsform des ersten Moduls gemäß der Figur 3 in einer Querschnittsansicht;

Figur 5    einen Ausschnitt der Trennkapillare gemäß der Figur 3 in einer Ansicht von schräg oben;

Figur 6a,b    eine Ausführungsform einer ersten und/oder zweiten Anschlussvorrichtung der Trennkapillare mit einer Schnellverbindungseinrichtung;

Figur 7    eine weitere Ausführungsform der Trennkapillare von schräg oben;

Figur 8    eine Ausführungsform des zweiten Moduls in einer Querschnittsansicht;

Figur 9    eine Ausführungsform des zweiten Moduls in einer Draufsicht;

Figur 10    eine weitere Ausführungsform des zweiten Moduls in einer Querschnittsansicht;

Figur 11    eine wiederum weitere Ausführungsform des zweiten Moduls in einer Querschnittsansicht;

Figur 12    eine noch weitere Ausführungsform des zweiten Moduls in einer Querschnittsansicht;

Figur 13    die Ausführungsform des zweiten Moduls der Figur 12 in einer Querschnittsansicht;

Figur 14    eine Ausführungsform eines dritten Moduls in einer Querschnittsansicht;

Figur 15    das erste Modul, das zweite Modul und das dritte Modul, jeweils in einer möglichen Ausführungsform, übereinander angeordnet in einer Querschnittsansicht; sowie

Figur 16    eine Ausführungsform eines erfindungsgemäßen Gaschromatographen mit der erfindungsgemäßen Vorrichtung in einer Querschnittsansicht.

Im Folgenden wird die erfindungsgemäße Vorrichtung für einen Gaschromatographen, insbesondere einen Temperaturgradienten-Gaschromatographen, nach einer möglichen Ausführungsform unter Bezugnahme auf die Figuren beschrieben. Die Figuren dienen der Erleichterung des Verständnisses. Sie sind schematisch dargestellt und sind nicht maßstabsgetreu.

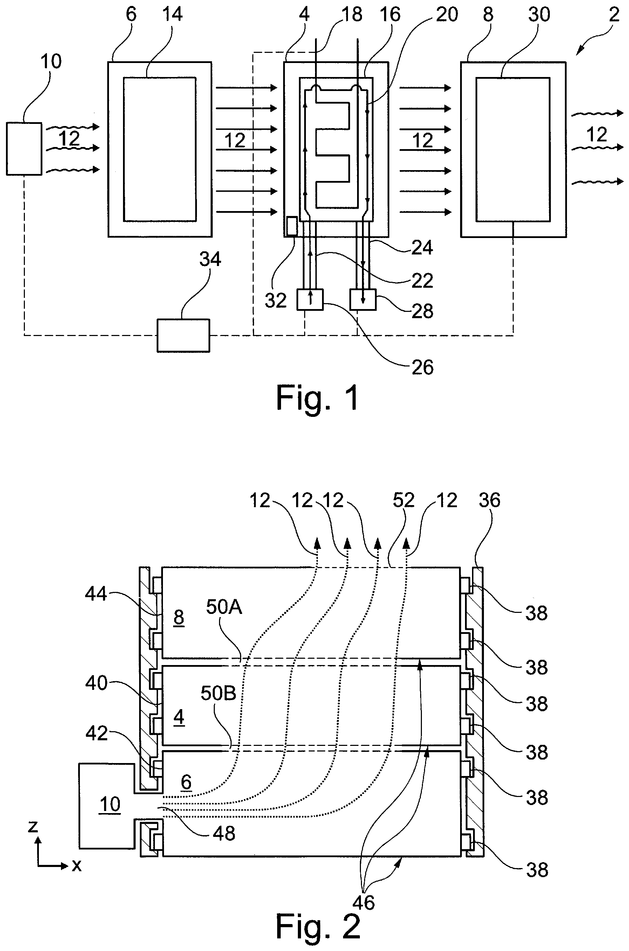

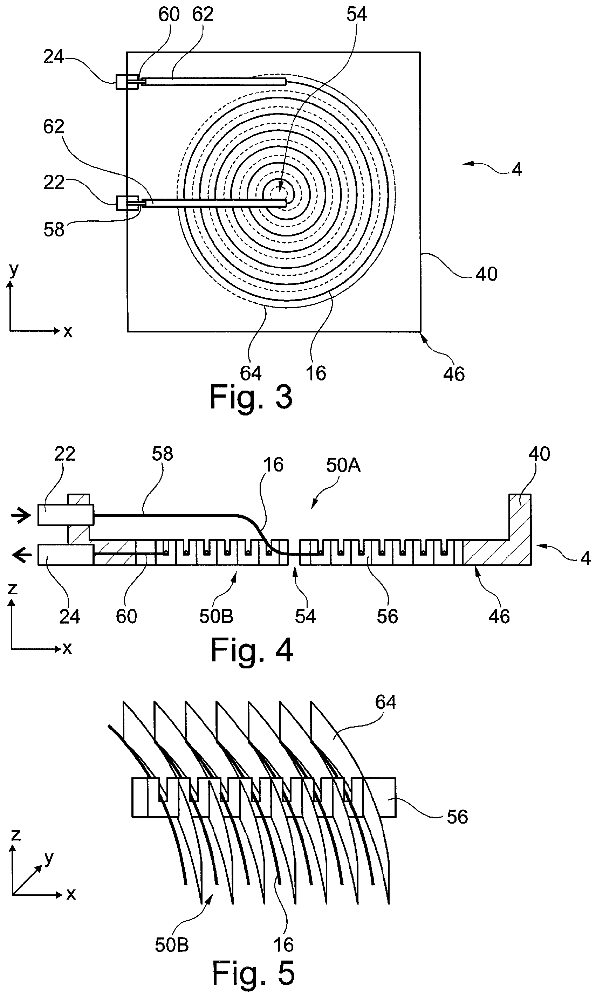

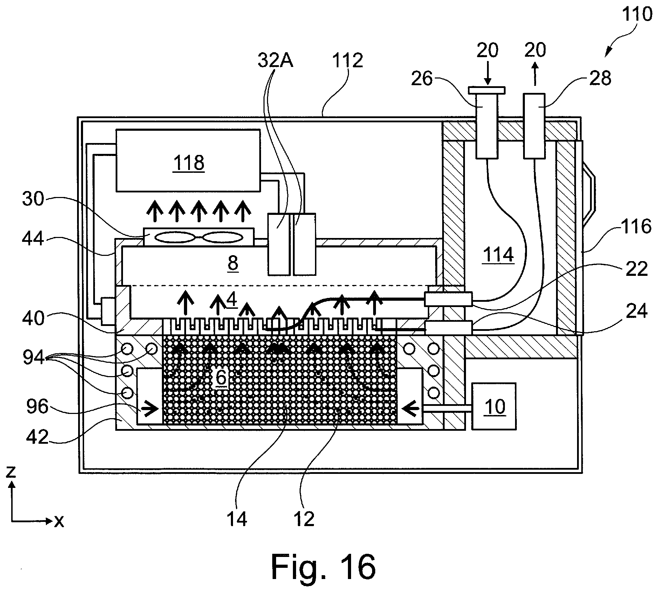

Mit den **Figuren 1 und 2** wird zunächst eine Übersicht einer Ausführungsform der erfindungsgemäßen Vorrichtung für einen Gaschromatographen, insbesondere einen Temperaturgradienten-Gaschromatographen, anhand einer Vorrichtung für einen Temperaturgradienten-Gaschromatographen beschrieben. Es wird ferner das Zusammenwirken diverser Komponenten der erfindungsgemäßen Vorrichtung beschrieben. Dafür umfasst die beschriebene Ausführungsform der erfindungsgemäßen Vorrichtung drei Module. Anhand der **Figuren 3 bis 15** werden mögliche Ausführungsformen eines ersten Moduls, eines zweiten Moduls und/oder eines dritten Moduls der erfindungsgemäßen Vorrichtung beschrieben. Anhand von **Figur 16** wird eine Ausführungsform eines erfindungsgemäßen Temperaturgradienten-Gaschromatographen beschrieben.

**Figur 1** zeigt die erfindungsgemäße Vorrichtung 2 für einen Gaschromatographen, insbesondere einen Temperaturgradienten-Gaschromatographen, als ein Blockdiagramm. Die erfindungsgemäße Vorrichtung 2 umfasst ein erstes Modul 4, ein zweites Modul 6 und ein drittes Modul 8. Ferner weist die erfindungsgemäße Vorrichtung 2 eine erste Erzeugungseinrichtung 10 zur Erzeugung einer Fluidströmung eines Fluids 12 auf. Das erste Modul 4, das zweite Modul 6, das dritte Modul 8 und die erste Erzeugungseinrichtung 10 sind in der in **Figur 1** dargestellten Ausführungsform der erfindungsgemäßen Vorrichtung 2 so angeordnet, dass die von der ersten Erzeugungseinrichtung 10 erzeugte Fluidströmung des Fluids 12 im Wesentlichen geradlinig durch das erste Modul 4, das zweite Modul 6 und das dritte Modul 8 hindurch strömen kann. Geradlinig bedeutet, dass die Fluidströmung des Fluids 12 nicht umgelenkt wird. Insbesondere wird die Fluidströmung des Fluids 12 nicht zwischen dem ersten Modul 4 und dem dritten Modul 8 umgelenkt. Die Anordnung des ersten Moduls 4, des zweiten Moduls 6, des dritten Moduls 8 und der ersten Erzeugungseinrichtung 10 sind nicht auf die in **Figur 1** dargestellte Form eingegrenzt. Vielmehr kann in der Praxis auch jede andere Anordnung des ersten Moduls 4, des zweiten Moduls 6, des dritten Moduls 8 und der ersten Erzeugungseinrichtung 10 verwendet werden, welche für die Erfindung geeignet ist.

Natürlich ist es auch möglich, dass die erfindungsgemäße Vorrichtung 2 bei gleicher Anordnung der vorstehend und nachstehend genannten Funktionseinheiten nur ein einziges Modul 4, in dem eine Trennkapillare angeordnet ist, aufweist. Auf die Trennkapillare wird weiter unten näher eingegangen. Die übrigen Funktionseinheiten, die in dieser Ausführungsform in oder an dem zweiten Modul 6 und in oder an dem dritten Modul 8 angeordnet sind, sind dann in oder an der Vorrichtung 2 selbst angeordnet. Zusätzlich oder alternativ ist es grundsätzlich auch möglich, dass die Vorrichtung 2 nur zwei Module (nämlich ein erstes Modul 4, in dem die Trennkapillare angeordnet ist, und ein zweites Modul 6) aufweist. Die übrigen Funktionseinheiten, die in dieser Ausführungsform in oder an dem dritten Modul angeordnet sind, sind dann in oder an der erfindungsgemäßen Vorrichtung 2 selbst angeordnet.

Wie in **Figur 1** dargestellt, ist die erfindungsgemäße Vorrichtung 2 so ausgebildet, dass das Fluid 12 von der ersten Erzeugungseinrichtung 10 zunächst zu dem zweiten Modul 6 strömt. Die Fluidströmung des Fluids 12 kann turbulent oder laminar aus der ersten Erzeugungseinrichtung 10 entströmen. Die erste Erzeugungseinrichtung 10 kann beispielsweise ein mit Druckluft befüllter Druckbehälter sein, an dem ein Stromregelventil (nicht dargestellt) angeordnet ist. In diesem Fall ist das Fluid 12 Druckluft. Es kann jedoch auch jede andere Erzeugungseinrichtung 10 zur Erzeugung einer Fluidströmung des Fluids 12 verwendet werden, welche für die Erfindung geeignet ist. Weiterhin kann jedes andere Fluid 12 verwendet werden, welches für die Erfindung geeignet ist.

In dem zweiten Modul 6 ist eine Beeinflussungseinrichtung 14 zur Beeinflussung der Fluidströmung des Fluids 12 angeordnet. Die Beeinflussungseinrichtung 14 ist fluidal von dem Fluid 12 durchströmbar. Wenn das Fluid 12 die Beeinflussungseinrichtung 14 durchströmt hat, ist die Fluidströmung des Fluids 12 in dieser Ausführungsform laminar. In der hier beschriebenen Ausführungsform kann die Fluidströmung des Fluids 12 außerdem hinsichtlich der Geschwindigkeit eine orthogonal zur Strömungsrichtung des Fluids 12 inhomogene Verteilung aufweisen. Mit anderen Worten ausgedrückt, ist das Fluidströmungsfeld des Fluids 12 in der hier beschriebenen Ausführungsform inhomogen, nachdem das Fluid 12 die Beeinflussungseinrichtung 14 durchströmt hat. Natürlich kann das Fluidströmungsfeld des Fluids 12 in anderen Ausführungsformen auch homogen sein, wie weiter unten beschrieben ist.

Wie ebenfalls aus **Figur 1** ersichtlich ist, strömt das Fluid 12 von dem zweiten Modul 6 zu dem ersten Modul 4. In dem ersten Modul 4 ist eine beheizbare Trennkapillare 16 angeordnet. Die in **Figur 1** dargestellte Trennkapillare 16 ist stark abstrahiert. Auf Details zur Ausbildung der Trennkapillare 16 wird weiter unten im Rahmen der detaillierten Beschreibung möglicher Ausführungsformen der Module 4, 6, 8 der erfindungsgemäßen Vorrichtung 2 eingegangen.

Die Trennkapillare 16 ist mit einem Stoff 20 oder einem Stoffgemisch 20, der/das mit der erfindungsgemäßen Vorrichtung 2 für einen Gaschromatographen, insbesondere einen Temperaturgradienten-Gaschromatographen, analysiert werden soll, beaufschlagbar. Für das Beaufschlagen der Trennkapillare 16 mit dem zu analysierenden Stoff 20 oder dem Stoffgemisch 20 ist in der in **Figur 1** gezeigten Ausführungsform der erfindungsgemäßen Vorrichtung 2 eine erste Anschlussvorrichtung 22 an der Trennkapillare 16 angeordnet. Die erste Anschlussvorrichtung 22 ist beispielsweise mit einer Probenaufgabeeinrichtung 26 verbindbar. Über eine zweite Anschlussvorrichtung 24 ist die Trennkapillare 16 beispielsweise mit einer Detektionseinrichtung 28 verbindbar. Die Verbindungen der Probenaufgabeeinrichtung 26 mit der ersten Anschlussvorrichtung 22, die Verbindungen der ersten Anschlussvorrichtung 22 mit der Trennkapillare 16, die Verbindungen der Trennkapillare 16 mit der zweiten Anschlussvorrichtung 24 und die Verbindungen der zweiten Anschlussvorrichtung 24 mit der Detektionseinrichtung 28 sind so ausgebildet, dass der zu analysierende Stoff 20 oder das Stoffgemisch 20 die vorstehend genannten Verbindungen in der genannten Reihenfolge durchströmen kann. Mit anderen Worten ausgedrückt, kann der zu analysierende Stoff 20 oder das Stoffgemisch 20 über die Probenaufgabeeinrichtung 26 und die erste Anschlussvorrichtung 22 in die Trennkapillare 16 eingeleitet werden, und über die zweite Anschlussvorrichtung 24 und die Detektionseinrichtung 28 aus der Trennkapillare 16 abgelassen werden. Die Probenaufgabeeinrichtung 26 und die Detektionseinrichtung 28 sind bei dieser Ausführungsform nicht Bestandteil der erfindungsgemäßen Vorrichtung 2. Sie können es aber durchaus sein.

Die Trennkapillare 16 ist von der Fluidströmung des Fluids 12 umströmbar in dem ersten Modul 4 angeordnet. Für eine Analyse eines zu analysierenden Stoffs 20 oder Stoffgemischs 20 mit der erfindungsgemäßen Vorrichtung 2 kann die Trennkapillare 16 homogen beheizt werden. Beispielsweise kann die Trennkapillare 16 über einen Stromleiter 18 mit einer Stromquelle (nicht dargestellt) verbunden sein. Über den Stromleiter 18 ist die Trennkapillare 16 beispielsweise resistiv beheizbar. Wenn die inhomogene Fluidströmung des Fluids 12 die Trennkapillare 16 umströmt, wird die Trennkapillare 16 inhomogen gekühlt. Dadurch kann eine inhomogene Verteilung der Temperatur der Trennkapillare 16 eingestellt werden. Eine inhomogene Verteilung der Temperatur der Trennkapillare 16 bedeutet, dass die Trennkapillare 16 an unterschiedlichen Abschnitten der Trennkapillare 16 voneinander verschiedene Temperaturen aufweisen kann. Beispielsweise kann die Temperatur der Trennkapillare 16 entlang der Trennkapillare 16 einem mathematisch monotonen Gradienten folgen. Die inhomogene Verteilung der Temperatur der Trennkapillare 16 kann vorrangig durch die Verteilung der Geschwindigkeit der inhomogen Fluidströmung des Fluids 12 an der Trennkapillare 16 bestimmt werden. Während das Fluid 12 die Trennkapillare 16 umströmt, beeinflusst die Trennkapillare 16 das Fluidströmungsfeld des Fluids 12 nicht oder nur geringfügig, so dass das Fluid 12 nach dem Umströmen der Trennkapillare 16 weiterhin ein im Wesentlichen geradliniges oder geradliniges Fluidströmungsfeld aufweist.

In **Figur 1** ist weiterhin gezeigt, dass das Fluid 12 von dem ersten Modul 4 zu dem dritten Modul 8 strömt. In dem dritten Modul 8 ist eine zweite Erzeugungseinrichtung 30 zur Erzeugung einer Fluidströmung angeordnet. Die zweite Erzeugungseinrichtung 30 kann eine schnelle Abfuhr des Fluids 12 von der erfindungsgemäßen Vorrichtung 2 in eine Umgebung um die erfindungsgemäße Vorrichtung 2 ermöglichen. Eine schnelle Abfuhr bedeutet, dass ein Anstauen des Fluids 12 in der erfindungsgemäßen Vorrichtung 2 vermieden werden kann. Insbesondere kann ein Anstauen des Fluids 12 in dem ersten Modul 4, in dem zweiten Modul 6, und/oder in dem dritten Modul 8 vermieden werden. Ein Anstauen des Fluids 12 könnte die Fluidströmung des Fluids 12 und somit die Verteilung der Temperatur der Trennkapillare 16 beeinflussen. Das über die zweite Erzeugungseinrichtung 30 in die Umgebung um die erfindungsgemäße Vorrichtung 2 abgeführte Fluid 12 kann beispielsweise aufbereitet werden. Alternativ oder zusätzlich kann das über die zweite Erzeugungseinrichtung 30 in die Umgebung um die erfindungsgemäße Vorrichtung 2 abgeführte Fluid 12 rezykliert werden.

In **Figur 1** ist auch ein Temperatursensor 32 und eine Recheneinheit 34 dargestellt. Der Temperatursensor 32 kann beispielsweise als ein Pyrometer oder ein Thermoelement ausgebildet sein. Alternativ oder zusätzlich kann der Temperatursensor 32 jeglicher Temperatursensor sein, der für die Erfindung geeignet ist. Der Temperatursensor 32 kann die Temperatur einer Stelle oder mehrerer Stellen der Trennkapillare 16 messen. Insbesondere misst der Temperatursensor 32 die Temperatur einer Stelle oder mehrerer Stellen der Trennkapillare 16 berührungslos. Der Temperatursensor 32 ist so mit der Recheneinheit 34 verbunden, dass der Temperatursensor 32 und die Recheneinheit 34 Informationen austauschen können. Die Informationen können kabelgebunden oder drahtlos ausgetauscht werden. Insofern kann ein Messergebnis einer Temperaturmessung des Temperatursensors 32 an die Recheneinheit 34 übermittelt werden. Die Recheneinheit 34 kann die gemessene Temperatur mit einer nominellen Temperatur der Stelle oder der mehreren Stellen der Trennkapillare 16, an der/denen der Temperatursensor 32 die Temperatur gemessen hat, vergleichen. In Abhängigkeit von einem Ergebnis des vorgenannten Vergleichs kann die Recheneinheit 34 ein Regelsignal an die regelbare Stromquelle (nicht dargestellt) des Stromleiters 18 senden, wodurch eine Heizleistung des Stromleiters 18 angepasst werden kann. Wie eingangs beschrieben, kann die Temperatur der Trennkapillare 16 bei der temperaturprogrammierten Gaschromatographie regelmäßig variiert werden, beispielsweise mit der Zeit erhöht werden. Wenn eine gaschromatographische Analyse eines zu analysierenden Stoffs 20 oder Stoffgemischs 20 temperaturprogrammiert mit der erfindungsgemäßen Vorrichtung 2 durchgeführt wird, kann die Temperatur beispielsweise wie vorstehend beschrieben reguliert werden. Dieser Aspekt wird in der **Figur** 1 durch eine gestrichelte Verbindungslinie zwischen der Recheneinheit 34 und dem Stromleiter 18 angedeutet.

Die Recheneinheit 34 kann ferner so mit der ersten Erzeugungseinrichtung 10 verbunden sein, dass die erste Erzeugungseinrichtung 10 und die Recheneinheit 34 Informationen austauschen können. Somit kann die Geschwindigkeit der durch die erste Erzeugungseinrichtung 10 erzeugten Fluidströmung des Fluids 12 rechengestützt geregelt werden. Bei Bedarf kann somit eine höhere oder eine geringere Geschwindigkeit der Fluidströmung des Fluids 12 eingestellt werden als eine aktuelle Strömungsgeschwindigkeit. Beispielsweise kann durch eine Kombination der Regelung der Stromquelle des Stromleiters 18 und der Regelung der ersten Erzeugungseinrichtung 10 flexibel ein Temperaturgradient der Trennkapillare 16 eingestellt werden.

Die Recheneinheit 34 kann ferner so mit der zweiten Erzeugungseinrichtung 30 verbunden sein, dass die zweite Erzeugungseinrichtung 30 und die Recheneinheit 34 Informationen austauschen können. Somit kann die zweite Erzeugungseinrichtung 30 in gleicher Weise von der Recheneinheit 34 geregelt werden wie die erste Erzeugungseinrichtung 10. Sofern gewünscht, kann dadurch beispielsweise sichergestellt werden, dass der Volumenstrom, mit dem die Fluidströmung des Fluids 12 aus dem dritten Modul 8 ausströmt, ungefähr dem Volumenstrom entspricht, mit der die Fluidströmung des Fluids 12 in das erste Modul 4 einströmt.

Die Recheneinheit 34 kann des Weiteren so mit der Probenaufgabeeinrichtung 26, mit der die erste Anschlussvorrichtung 22 verbindbar ist, verbunden sein, dass die Probenaufgabeeinrichtung 26 und die Recheneinheit 34 Informationen austauschen können. Alternativ oder zusätzlich kann die Recheneinheit 34 so mit der Detektionseinrichtung 28, mit dem die zweite Anschlussvorrichtung 24 verbindbar ist, verbunden sein, dass die Detektionseinrichtung 28 und die Recheneinheit 34 Informationen austauschen können. Dadurch kann die Geschwindigkeit, mit welcher der zu analysierende Stoff 20 oder das Stoffgemisch 20 in die Trennkapillare 16 aufgegeben werden, geregelt werden. Zusätzlich oder alternativ kann die Detektionseinrichtung 28 Informationen an die Recheneinheit 34 übertragen, so dass die Recheneinheit 34 die Informationen der Detektionseinrichtung 28 auswerten kann.

Die erfindungsgemäße Vorrichtung 2 ist nicht auf die vorausgehend beschriebene Ausführungsform eingeschränkt. Insbesondere sind das dritte Modul 8 und die zweite Erzeugungseinrichtung 30 für die erfindungsgemäße Vorrichtung 2 nicht zwingend erforderlich. Zusätzlich oder alternativ können die erste Erzeugungseinrichtung 10, das erste Modul 4, das zweite Modul 6 und/oder das dritte Modul 8 auf andere Weise angeordnet werden, als oben beschrieben. Es kann jede Anordnung der ersten Erzeugungseinrichtung 10, des ersten Moduls 4, des zweiten Moduls 6 und/oder des dritten Moduls 8 verwendet werden, welche für die Erfindung geeignet ist. Zusätzlich oder alternativ kann die erfindungsgemäße Vorrichtung 2 ein zusätzliches Modul oder eine Mehrzahl von zusätzlichen Modulen (nicht dargestellt) aufweisen. Beispielsweise kann die erfindungsgemäße Vorrichtung 2 ein zusätzliches Modul oder eine Mehrzahl von zusätzlichen Modulen aufweisen, das/die technisch dem ersten Modul 4 entsprechen. Dieses zusätzliche Modul/diese Mehrzahl von zusätzlichen Modulen kann/können beispielsweise genau wie das erste Modul 4 in Strömungsrichtung der Fluidströmung des Fluids 12 zwischen dem zweiten Modul 6 und dem dritten Modul 8 angeordnet sein.

**Figur 2** zeigt eine Ausführungsform der erfindungsgemäßen Vorrichtung 2 in einer Seitenansicht, bei der das erste Modul 4, das zweite Modul 6 und das dritte Modul 8 übereinander in einer Aufnahmeeinrichtung 36 angeordnet sind. Die Seitenansicht der erfindungsgemäßen Vorrichtung 2 entspricht beispielsweise der Ansicht von der erfindungsgemäßen Vorrichtung 2, die ein Bediener bei dem Bedienen der erfindungsgemäßen Vorrichtung 2 erhalten kann.

In der in **Figur 2** gezeigten Ausführungsform der erfindungsgemäßen Vorrichtung 2 sind das erste Modul 4, das zweite Modul 6 und das dritte Modul 8 jeweils so ausgebildet, dass jedes der vorgenannten Module 4, 6, 8 ein zumindest teilweise geschlossenes Gehäuse aufweist. Ein erstes Gehäuse 40 des ersten Moduls 4 entspricht der technischen Realisierung der in **Figur 1** dargestellten Begrenzung des ersten Moduls 4. Ein zweites Gehäuse 42 des zweiten Moduls 6 entspricht der technischen Realisierung der in **Figur 1** dargestellten Begrenzung des zweiten Moduls 6. Ein drittes Gehäuse 44 des dritten Moduls 4 entspricht der technischen Realisierung der in **Figur 1** dargestellten Begrenzung des dritten Moduls 8. Mit anderen Worten ausgedrückt, nehmen das erste Gehäuse 40 des ersten Moduls 4, das zweite Gehäuse 42 des zweiten Moduls 6 und das dritte Gehäuse 44 des dritten Moduls 8 jeweils die technischen Merkmale auf, die in **Figur 1** innerhalb der jeweiligen Rechtecke dargestellt sind.

Das erste Gehäuse 40 des ersten Moduls 4, das zweite Gehäuse 42 des zweiten Moduls 6 und das dritte Gehäuse 44 des dritten Moduls 8 sind in der in **Figur 2** dargestellten Ausführungsform der erfindungsgemäßen Vorrichtung 2 jeweils in der Form einer Kassette ausgebildet. Eine Kassette ist in diesem Kontext ein im Wesentlichen kubischer, dünnwandiger Körper oder ein kubischer, dünnwandiger Körper. Ein im Wesentlichen kubischer, dünnwandiger Körper oder ein kubischer, dünnwandiger Körper weist regelmäßig sechs dünnwandige Seiten auf, die einen kubischen Hohlraum umgeben. Beispielsweise ist ein hohler Würfel ein kubischer, dünnwandiger Körper. In dem Hohlraum der Kassetten des ersten Moduls 4 sind die technischen Merkmale des ersten Moduls 4 aufgenommen. In dem Hohlraum der Kassetten des zweiten Moduls 6 sind die technischen Merkmale des zweiten Moduls 6 aufgenommen. In dem Hohlraum der Kassetten des dritten Moduls 8 sind die technischen Merkmale des dritten Moduls 8 aufgenommen. In der Praxis können die Gehäuse 40, 42, 44 der vorgenannten Module 4, 6, 8 auch in anderen Formen als jeweils in der Form einer kubischen Kassette ausgebildet sein, beispielsweise jeweils in der Form von Zylindern. Alternativ können die vorgenannten Module 4, 6, 8 auch ohne Gehäuse ausgebildet sein. Beispielsweise kann anstelle eines Gehäuses ein Gerüst verwendet werden.

Wie bereits erwähnt, sind das erste Modul 4, das zweite Modul 6 und das dritte Modul 8 bei der in **Figur 2** gezeigten Ausführungsform der erfindungsgemäßen Vorrichtung 2 übereinander in der Aufnahmeeinrichtung 36 angeordnet. Die Aufnahmeeinrichtung 36 ist in der in **Figur 2** dargestellten Ausführungsform der erfindungsgemäßen Vorrichtung 2 als ein Aufnahme-Gerüst ausgebildet. Die Aufnahmeeinrichtung 36 in Form des Aufnahme-Gerüsts weist eine Mehrzahl von Führungsschienen 38 auf, in welchen das erste Modul 4, das zweite Modul 6 und das dritte Modul 8 einsetzbar sind. Das Anordnen der vorstehend genannten Module 4, 6, 8 kann beispielsweise manuell durch den Bediener der erfindungsgemäßen Vorrichtung 2 erfolgen, der das erste Modul 4 und/oder das zweite Modul 6 und/ oder das dritte Modul 8 auf den Führungsschienen 38 in die Aufnahmeeinrichtung 36 in Form des Aufnahme-Gerüsts der gezeigten Ausführungsform der erfindungsgemäßen Vorrichtung 2 einschiebt. Das Einschieben kann beispielsweise in die Richtung der gezeigten Seitenansicht der erfindungsgemäßen Vorrichtung 2 erfolgen. Die Richtung der Seitenansicht der erfindungsgemäßen Vorrichtung 2 entspricht in dem in **Figur 2** gezeigten kartesischen Koordinatensystem der Richtung der y-Achse. Der Bediener der erfindungsgemäßen Vorrichtung 2 kann das erste Modul 4 und/oder das zweite Modul 6 und/oder das dritte Modul 8 beispielsweise in die Aufnahmeeinrichtung 36 einschieben, bis das jeweilige Modul 4, 6, 8, das der Bediener einschiebt, auf Stoß mit der Aufnahmeeinrichtung 36 in der Aufnahmeeinrichtung 36 angeordnet ist. Wenn alle Module, das heißt das erste Modul 4, das zweite Modul 6 und das dritte Modul 8 auf Stoß mit der Aufnahmeeinrichtung 36 angeordnet sind, sind die vorgenannten Module 4, 6, 8 ordnungsgemäß angeordnet. Die erfindungsgemäße Vorrichtung 2 ist dann grundsätzlich einsatzbereit. Die Bedeutung des vorstehend verwendeten Ausdrucks einer ordnungsgemäßen Anordnung der genannten Module 4, 6, 8 wird im Folgenden beibehalten.

Wenn das erste Modul 4, das zweite Modul 6 und das dritte Modul 8 ordnungsgemäß angeordnet sind, sind die vorstehend genannten Module 4, 6, 8 in der hier beschriebenen Ausführungsform der erfindungsgemäßen Vorrichtung 2 insofern übereinander in der Aufnahmeeinrichtung 36 angeordnet. Das erste Modul 4 ist unmittelbar oberhalb des zweiten Moduls 6 angeordnet und das dritte Modul 8 ist unmittelbar oberhalb des ersten Moduls 4 angeordnet. Alternativ können vordefinierte Abstände in einer vertikalen Richtung zwischen den vorgenannten Modulen 4 und 6 sowie 4 und 8 eingerichtet sein. Die vertikale Richtung entspricht in **Figur 2** der Richtung der z-Achse des in **Figur 2** gezeigten kartesischen Koordinatensystems. Wenn Abstände zwischen den vorstehend genannten Modulen 4, 6, 8 vorgesehen sind, dann kann die Vorrichtung 2 beispielsweise Dichtungen (nicht dargestellt) umfassen, welche an den Bereichen zwischen zwei benachbarten Modulen 4 und 6 sowie 4 und 8 umlaufend um die vorstehend genannten Module angeordnet sind. Dadurch kann ein unerwünschtes Ausströmen des Fluids 12 vermieden werden, so dass die Fluidströmung des Fluids 12 zumindest im Wesentlichen geradlinig oder geradlinig vom zweiten Modul 6 in das erste Modul 4 und in das dritte Modul 8 strömen kann. Wenn die Aufnahmeeinrichtung 36 die Führungsschienen 38 umfasst, sind die Abstände dieser Führungsschienen 38 zueinander auf die Formen der Gehäuse 40, 42, 44 des ersten Moduls 4, des zweiten Moduls 6 und des dritten Moduls 8 sowie auf die gegebenenfalls vordefinierten Abstände zwischen den vorgenannten Modulen 4, 6, 8 abgestimmt, so dass jedes der vorstehend genannten Module 4, 6, 8 nur in einer für das jeweilige Modul vorgesehenen Position ordnungsgemäß in der Aufnahmeeinrichtung 36 angeordnet werden kann.

Insbesondere können das erste Modul 4, das zweite Modul 6 und das dritte Modul 8 in einer ordnungsgemäßen Anordnung in der Aufnahmeeinrichtung 36 so übereinander angeordnet sein, dass das erste Gehäuse 40 des ersten Moduls 4, das zweite Gehäuse 42 des zweiten Moduls 6 und das dritte Gehäuse 44 des dritten Moduls 8 in Draufsicht auf die erfindungsgemäße Vorrichtung 2 deckungsgleich angeordnet sind. Mit anderen Worten ausgedrückt, weisen das erste Gehäuse 40 des ersten Moduls 4, das zweite Gehäuse 42 des zweiten Moduls 6 und das dritte Gehäuse 44 des dritten Moduls 8 eine gleiche Grundfläche 46 auf. Die Grundfläche 46 eines Moduls der vorstehend genannten Menge der Module 4, 6, 8 ist die Seite des Gehäuses eines Moduls, die in der Seitenansicht nach unten weist. Mit anderen Worten ausgedrückt, ist die Grundfläche 46 eines Moduls der vorstehend genannten Menge der Module 4, 6, 8 die Seite des Gehäuses eines Moduls, die entgegen der Richtung der in **Figur 2** gezeigten z-Achse zeigt. Alternativ können das erste Gehäuse 40 des ersten Moduls 4, das zweite Gehäuse 42 des zweiten Moduls 6 und das dritte Gehäuse 44 des dritten Moduls 8 auch unterschiedlich ausgebildete Grundflächen 46 aufweisen.

In der in **Figur 2** gezeigten Ausführungsform der erfindungsgemäßen Vorrichtung 2 ist ferner gezeigt, dass die erste Erzeugungseinrichtung 10 seitlich an dem zweiten Modul 6 angeordnet ist und das Fluid 12 seitlich in das zweite Modul 6 einführt. Dafür weist das zweite Gehäuse 42 des zweiten Moduls 6 einen in Seitenansicht beispielsweise seitlichen, fluidal durchströmbaren Durchgang 48 auf. Von der ersten Erzeugungseinrichtung 10 kann über diesen Durchgang 48 das Fluid 12 in das zweite Modul 6 geleitet werden. Alternativ kann der Durchgang 48, über den das Fluid 12 in das zweite Modul 6 geleitet werden kann, an jeder anderen Seite des zweiten Gehäuses 42 des zweiten Moduls 6 eingebracht sein. Weiterhin alternativ oder zusätzlich kann eine Mehrzahl von Durchgängen 48 in dem zweiten Gehäuse 42 des zweiten Moduls 6 eingebracht sein.

Weiterhin ist in **Figur 2** dargestellt, dass in den Seiten des ersten Gehäuses 40 des ersten Moduls 4, die dem zweiten Modul 6 und dem dritten Modul 8 zugewandt sind, jeweils mindestens eine fluidal durchströmbare Öffnung 50A, 50B vorgesehen ist. Das zweite Gehäuse 42 des zweiten Moduls 6 weist in der Seite, die dem ersten Modul 4 zugewandt ist, ebenfalls mindestens eine fluidal durchströmbare Öffnung 50B auf. Auch das dritte Gehäuse 44 des dritten Moduls 8 weist in der Seite, die dem ersten Modul 4 zugewandt ist, mindestens eine fluidal durchströmbare Öffnung 50A auf. Beispielsweise sind die vorstehend genannten Öffnungen 50A, 50B so in den Gehäusen 40, 42, 44 des ersten Moduls 4, des zweiten Moduls 6 und des dritten Moduls 8 angeordnet, dass die Fluidströmung des Fluids 12 bei ordnungsgemäßer Anordnung des ersten Moduls 4, des zweiten Moduls 6 und des dritten Moduls 8 in der Aufnahmeeinrichtung 36 im Wesentlichen geradlinig oder geradlinig vom zweiten Modul 6 durch das erste Modul 4 in das dritte Modul 8 strömen kann.

Das in **Figur 2** dargestellte dritte Modul 8 weist des Weiteren einen fluidal durchströmbaren Durchgang 52 auf. Der fluidal durchströmbare Durchgang 52 ist beispielsweise in einer Seitenansicht der erfindungsgemäßen Vorrichtung 2 in einer oberen Seite des dritten Gehäuses 44 des dritten Moduls 8 angeordnet. Die obere Seite des dritten Gehäuses 44 des dritten Moduls 8 weist in die Richtung der z-Achse des in **Figur 2** dargestellten kartesischen Koordinatensystems. Die Fluidströmung des Fluids 12, welche von dem ersten Modul 4 in das dritte Modul 8 strömt, kann beispielsweise über diesen Durchgang 52 im dritten Gehäuse 44 des dritten Moduls 8 aus dem dritten Modul 8 austreten.

Sofern alternativ vertikale Abstände zwischen dem ersten Modul 4 und dem zweiten Modul 6 eingebracht sind, können die Öffnungen 50A, 50B in den Gehäusen 40, 42 der vorstehend genannten Module 4, 6 mit mechanischen Verbindungsvorrichtungen (nicht dargestellt) verbunden sein. Sofern alternativ vertikale Abstände zwischen dem ersten Modul 4 und dem dritten Modul 8 eingebracht sind, können die Öffnungen 50A, 50B in den Gehäusen 40, 44 der vorstehend genannten Module 4, 8 ebenfalls mit mechanischen Verbindungsvorrichtungen (nicht dargestellt) verbunden sein.

Wie vorausgehend beschrieben, sind das erste Modul 4 und/oder das zweite Modul 6 und/oder das dritte Modul 8 aus der Aufnahmeeinrichtung 36 entnehmbar und einsetzbar. Beispielsweise können die vorstehend genannten Module 4, 6, 8 auf den Führungsschienen 38 aus der Aufnahmeeinrichtung 36 entnommen und/ oder in die Aufnahmeeinrichtung 36 eingesetzt werden. Die erfindungsgemäße Vorrichtung 2 ist insbesondere dadurch gekennzeichnet, dass das Einsetzen des ersten Moduls 4 und/oder des zweiten Moduls 6 durch den Bediener in die Aufnahmeeinrichtung 36 in der ordnungsgemäßen Anordnung eine Verbindung zwischen dem ersten Modul 4 und dem zweiten Modul 6 über die Öffnungen 50A, 50B in den Gehäusen 40, 42 automatisch hergestellt ist. Des Weiteren ist die erfindungsgemäße Vorrichtung 2 insbesondere dadurch gekennzeichnet, dass das Einsetzen des ersten Moduls 4 und/oder des dritten Moduls 8 durch den Bediener in die Aufnahmeeinrichtung 36 in der ordnungsgemäßen Anordnung eine Verbindung zwischen dem ersten Modul 4 und dem dritten Modul 8 über die Öffnungen 50A, 50B in den Gehäusen 40, 44 automatisch hergestellt ist. Weiterhin kann die Vorrichtung 2 beispielsweise dadurch gekennzeichnet sein, dass durch das Einsetzen des ersten Moduls 4 in der ordnungsgemäßen Anordnung eine Verbindung zwischen dem ersten Modul 4 mit der Probenaufgabeeinrichtung 26 über die erste Anschlussvorrichtung 22 und zwischen dem ersten Modul 4 und der Detektionseinrichtung 28 über die zweite Anschlussvorrichtung 24 automatisch hergestellt sein kann. Alternativ kann die Verbindung des ersten Moduls 4 mit der Probenaufgabeeinrichtung 26 an der ersten Anschlussvorrichtung 22 und mit der Detektionseinrichtung 28 an der zweiten Anschlussvorrichtung 24 beispielsweise manuell herstellbar sein.

Im Folgenden werden das erste Modul 4, das zweite Modul 6 und das dritte Modul 8 im Detail beschrieben.

Eine Ausführungsform des ersten Moduls 4 ist in den **Figuren 3** und **4** gezeigt. **Figur** 3 zeigt die Ausführungsform des ersten Moduls 4 mit der in dem ersten Modul 4 angeordneten Trennkapillare 16 in Draufsicht. **Figur 4** zeigt die Ausführungsform des ersten Moduls 4 mit der in dem ersten Modul 4 angeordneten Trennkapillare 16 in einer Querschnittsansicht. Die Trennkapillare 16 ist in dieser Ausführungsform im Wesentlichen als planare Spirale ausgebildet.

Das erste Gehäuse 40 des ersten Moduls 4 ist so ausgebildet, dass es einen im Wesentlichen kubischen Rauminhalt umfasst. Für einen kubischen Rauminhalt muss das erste Gehäuse 40 des ersten Moduls 4 nicht ein geschlossener kubischer Körper sein. Es genügt, wenn das Volumen einer geschlossenen Mantelfläche, die um das erste Gehäuse 40 gebildet wird, kubisch ist. In diesem Kontext weist das erste Gehäuse 40 des ersten Moduls 4 insbesondere die ebene, rechteckige Grundfläche 46 auf, wie die Draufsicht auf das erste Modul 4 in **Figur 3** zeigt. Des Weiteren weist das erste Gehäuse 40 des ersten Moduls 4 einen im Wesentlichen rechteckigen Querschnitt auf, wie die Querschnittsansicht in **Figur 4** zeigt. Der rechteckige Querschnitt des ersten Moduls 4 ergibt sich aus einer Mantelfläche, die um das erste Gehäuse 40 des ersten Moduls 4 in der Querschnittsansicht in **Figur 4** gebildet werden kann. Mit anderen Worten ausgedrückt, ist das erste Gehäuse 40 des ersten Moduls 4 ein dünnwandiger, kubischer Körper, dessen obere und untere Seite (das heißt die Seiten in Richtung der z-Achse und entgegen der Richtung der z-Achse des kartesischen Koordinatensystems in **Figur 4**) zumindest teilweise entfernt wurden. Alternativ kann das erste Gehäuse 40 des ersten Moduls 4 jede andere Form aufweisen, die für die Erfindung geeignet ist.

In **Figur 3** und **Figur 4** ist weiterhin dargestellt, dass die im Wesentlichen als planare Spirale ausgebildete Trennkapillare 16 eben in dem ersten Modul 4 angeordnet ist. Mit anderen Worten ausgedrückt, ist die Trennkapillare 16 durch ein Aufwickeln der Trennkapillare 16 um einen Punkt in einer Ebene mit zunehmendem Radius flächig ausgebildet. Der Punkt, um den die Trennkapillare 16 aufgewickelt ist, ist der Mittelpunkt 54 der Trennkapillare 16. Die Trennkapillare 16 ist in der in **Figur 3** und **Figur 4** dargestellten Ausführungsform des ersten Moduls 4 so angeordnet, dass die Ebene, in der die Trennkapillare 16 aufgewickelt ist, parallel zu der Grundfläche 46 des ersten Moduls 4 ist. Weiterhin ist die Trennkapillare 16 in der in **Figur 3** und **Figur 4** dargestellten Ausführungsform des ersten Moduls 4 so angeordnet, dass der Mittelpunkt 54 der Trennkapillare 16 mit einem Schwerpunkt der Grundfläche 46 des ersten Moduls 4 übereinstimmt.

Die Anordnung der Trennkapillare 16 in dem ersten Modul 4 in der vorausgehend beschriebenen Position kann beispielsweise dadurch realisiert sein, dass die Trennkapillare 16 in einer Haltevorrichtung 56 aufgenommen ist. Die Haltevorrichtung 56 kann insbesondere aus einem temperaturbeständigen Material mit geringer Wärmeleitfähigkeit, beispielsweise einem Kunststoff oder einer Keramik, gebildet sein. Ein geeigneter Kunststoff kann beispielsweise Polyimid sein, es kann aber auch jedes Material für die Haltevorrichtung 56 verwendet werden, das für die Erfindung geeignet ist. Die Haltevorrichtung 56 kann beispielsweise als mechanisch stabile, dünnwandige und längliche Platte aus einem geeigneten Material mit Aussparungen gebildet sein. Alternativ kann die Haltevorrichtung 56 als eine Mehrzahl mechanisch stabiler, dünnwandiger und länglicher Platten eines geeigneten Materials mit Aussparungen gebildet sein. Die Trennkapillare 16 kann dann in den Aussparungen der Platte oder der Mehrzahl von Platten, beispielsweise in punktuellem Kontakt, aufgenommen werden, wie in den **Figuren 4** und **5** gezeigt ist. Die Haltevorrichtung 56 kann beispielsweise an dem ersten Gehäuse 40 des ersten Moduls 4 fixiert sein. Das Fixieren kann beispielsweise durch eine stoffschlüssige und/oder eine formschlüssige und/oder eine kraftschlüssige Verbindung der Haltevorrichtung 56 mit dem ersten Gehäuse 40 erfolgen.

Alternativ oder zusätzlich kann als Haltevorrichtung 56 jede andere Haltevorrichtung verwendet werden, die für die Aufnahme der Trennkapillare 16 geeignet ist. Zusätzlich zu der Temperaturbeständigkeit und der geringen Wärmeleitfähigkeit kann die Haltevorrichtung 56 insbesondere eine geringe Wärmekapazität bezogen auf ein für ihre Funktionalität erforderliches Volumen aufweisen. Beispielsweise kann die volumenbasierte Wärmekapazität geringer als 3,8 J/cm$^3$K sein. Weiterhin kann die Haltevorrichtung 56 insbesondere in der fluidal durchströmbaren Öffnung 50B in dem ersten Gehäuse 40 des ersten Moduls 4 angeordnet sein. Die Anordnung der Haltevorrichtung 56 und der Trennkapillare 16 in dem ersten Modul 4 kann dann beispielsweise auf der Seite des ersten Gehäuses 40 des ersten Moduls 4 realisiert sein, die dem zweiten Modul 6 zugewandt ist. Die Trennkapillare 16 kann alternativ in jeder anderen beliebigen Position und/oder Orientierung in dem ersten Modul 4 angeordnet werden, welche für die Erfindung geeignet ist. Für eine robuste Ausbildung des ersten Moduls 4 kann die Trennkapillare 16 beispielsweise in der Haltevorrichtung 56 und/oder dem Gehäuse 40 des ersten Moduls 4 fixiert sein. Das Fixieren kann beispielsweise durch eine stoffschlüssige und/oder eine formschlüssige und/oder eine kraftschlüssige Verbindung der Trennkapillare 16 mit der Haltevorrichtung 56 und/oder dem ersten Gehäuse 40 erfolgen. Die Fixierung ist insbesondere so ausgelegt, dass der Wärmeübergang zwischen der Trennkapillare 16 und der Haltevorrichtung 56 gering ist, beispielsweise indem lediglich ein punktförmiger Kontakt zu der Trennkapillare 16 besteht oder eine thermische Dämmung vorgesehen ist.

Die in den **Figuren 3** und **4** dargestellte im Wesentlichen spiralförmig ausgebildete Trennkapillare 16 umfasst zwei geradlinig ausgebildete Endabschnitte. Ein erster Endabschnitt 58 führt die Trennkapillare 16 von einem inneren Radius der Trennkapillare 16 nahe dessen Mittelpunkt 54 strahlförmig über die Trennkapillare 16 hinweg nach außen fort. Dafür kann der erste Endabschnitt 58 teilweise gekrümmt ausgebildet sein. Der erste Endabschnitt 58 durchdringt das erste Gehäuse 40 des ersten Moduls 4 und mündet in der ersten Anschlussvorrichtung 22, die einem Anschluss der Trennkapillare 16 an die Probenaufgabeeinrichtung (nicht dargestellt) dient. Ein zweiter Endabschnitt 60 führt die Trennkapillare 16 von einem äußeren Radius der Trennkapillare 16 nach außen fort, beispielsweise parallel zu dem ersten Endabschnitt 58. Der zweite Endabschnitt 60 durchdringt das erste Gehäuse 40 des ersten Moduls 4 und mündet in der zweiten Anschlussvorrichtung 24, die dem Anschluss der Trennkapillare 16 an die Detektionseinrichtung (nicht dargestellt) dient. Um den ersten Endabschnitt 58 und den zweiten Endabschnitt 60 der Trennkapillare 16 ist ein Wärme-dämmendes Material 62 angeordnet. Durch die Anordnung des Wärme-dämmenden Materials 62 kann sichergestellt werden, dass in dem ersten Endabschnitt 58 und in dem zweiten Endabschnitt 60 der Trennkapillare 16 eine vordefinierte Temperatur eingestellt werden kann, die größer ist als die Temperatur an jeder Stelle der Trennkapillare 16 zwischen diesen Endabschnitten.

In der beschriebenen Ausführungsform des ersten Moduls 4 ist außerdem eine Strömungsrichtereinrichtung 64 zum Einstellen einer homogenen Strömungsrichtung der Fluidströmung des Fluids 12 an der Trennkapillare 16 angeordnet. Die Anordnung der Strömungsrichtereinrichtung 64 entlang der Trennkapillare 16 ist im Detail in **Figur 5** dargestellt. Die Strömungsrichtereinrichtung 64 ist als ein Band ausgebildet. Ein Band ist in diesem Kontext ein ebenes, festes Gebilde, das in einer ersten Erstreckungsrichtung länger ist als in einer zweiten Erstreckungsrichtung. Ein Beispiel für ein Band kann ein dünnwandiger Kunststoffstreifen sein. Wenn die Strömungsrichtereinrichtung 64 beispielsweise als ein dünnwandiger Kunststoffstreifen ausgebildet ist, dann kann das Band in der ersten Erstreckungsrichtung des Bandes parallel beabstandet entlang der Trennkapillare 16 angeordnet sein. Dabei kann die zweite Erstreckungsrichtung des Bandes beispielsweise in die Richtung weisen, in welche die Strömungsrichtereinrichtung 64 die Fluidströmung des Fluids 12 ausrichten soll. In **Figur 5** entspricht die Richtung, in welche die Strömungsrichtereinrichtung 64 die Fluidströmung des Fluids 12 ausrichten soll, der Richtung der z-Achse des eingezeichneten kartesischen Koordinatensystems.

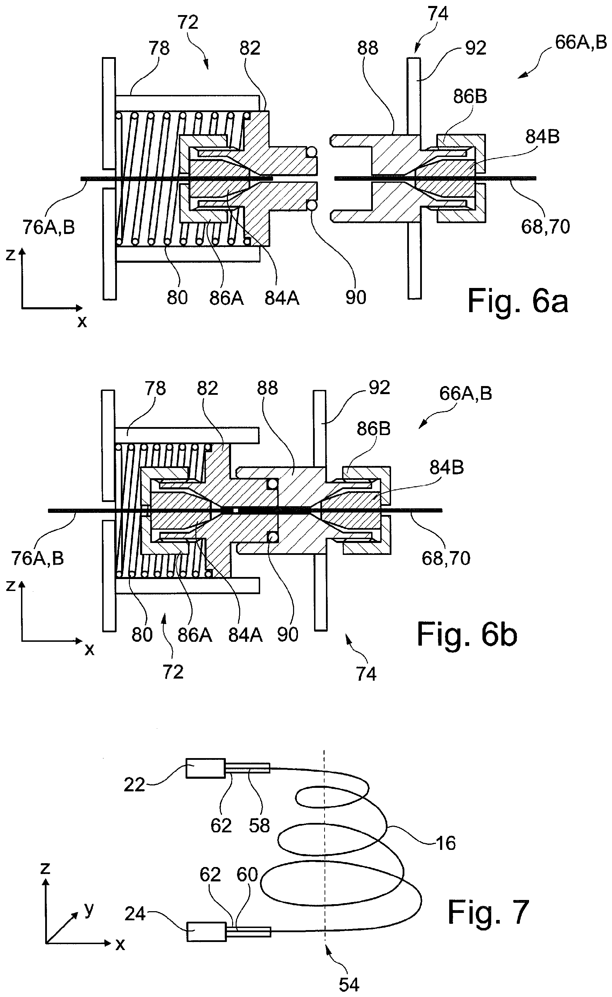

In den **Figuren 6a und 6b** ist eine beispielhafte Ausführungsform von Schnellverbindungseinrichtungen 66A, 66B der Anschlussvorrichtungen 22, 24 im Längsschnitt dargestellt. Gleiche Bauteile der **Figuren 6a und 6b** sind mit gleichen Bezugszeichen versehen, wie bereits oben genannt. **Figur 6a** zeigt die Schnellverbindungseinrichtungen 66A, 66B in einem geöffneten Zustand. **Figur 6b** zeigt die Schnellverbindungseinrichtungen 66A, 66B in einem geschlossenen Zustand. Beispielsweise kann eine erste Schnellverbindungseinrichtung 66A der gezeigten Art am ersten Ende 68 der Trennkapillare 16 und eine zweite Schnellverbindungseinrichtung 66B der gezeigten Art am zweiten Ende 70 der Trennkapillare 16 angeordnet sein. Somit kann beispielsweise eine erste Schnellverbindungseinrichtung 66A der gezeigten Art zum Verbinden der Trennkapillare 16 mit der Probeaufgabeeinrichtung 26 dienen. Weiterhin kann beispielsweise eine zweite Schnellverbindungseinrichtung 66B der gezeigten Art zum Verbinden der Trennkapillare 16 mit der Detektionseinrichtung 28 dienen.

Die gezeigte Ausführungsform der Schnellverbindungseinrichtungen 66A, 66B weist einen ersten Verbinderabschnitt 72 und einen zweiten Verbinderabschnitt 74 auf. Der zweite Verbinderabschnitt 74 ist auf den ersten Verbinderabschnitt 72 aufschiebbar. Der erste Verbinderabschnitt 72 kann beispielsweise über eine erste Transferleitung 76A fluidal mit der Probeaufgabeeinrichtung 26 verbunden sein. Alternativ kann der erste Verbinderabschnitt 72 beispielsweise über eine zweite Transferleitung 76B fluidal mit der Detektionseinrichtung 28 verbunden sein. Der erste Verbinderabschnitt 72 kann weiterhin an der Vorrichtung 2 fixiert sein, insbesondere an der Aufnahmeeinrichtung 36. Der zweite Verbinderabschnitt 74 kann mit dem ersten Ende 68 der Trennkapillare 16 fluidal verbunden sein. Alternativ kann der zweite Verbinderabschnitt 74 mit dem zweiten Ende 70 der Trennkapillare 16 fluidal verbunden sein. Der zweite Verbinderabschnitt 74 kann weiterhin an dem ersten Modul 4, dem zweiten Modul 6 oder dem dritten Modul 8 fixiert sein. Der erste Verbinderabschnitt 72 ist so an der Vorrichtung 2 fixiert, dass der zweite Verbinderabschnitt 74 auf den ersten Verbinderabschnitt 72 aufgeschoben werden kann, wenn eines der vorgenannten Module 4, 6, 8, an dem der zweite Verbinderabschnitt 74 angeordnet ist, in die Aufnahmeeinrichtung 36 eingesetzt wird. In diesem Fall ist eine Verbindung der Trennkapillare 16 mit der Probeaufgabeeinrichtung 26 und/oder mit der Detektionseinrichtung 28 automatisch hergestellt.

Für eine automatisch herstellbare, gasdichte Verbindung der Trennkapillare 16 mit der Probeaufgabeeinrichtung 26 und/oder mit der Detektionseinrichtung 28 weist der erste Verbinderabschnitt 72 ein Verbindergehäuse 78 auf. Das Verbindergehäuse 78 kann beispielsweise eine Druckfeder 80 aufnehmen. Die Druckfeder 80 kann in dem Verbindergehäuse 78 über eine erste Endkappe 82, die in das Verbindergehäuse 78 einschiebbar gelagert ist, zusammengedrückt werden. Die Transferleitung 76A oder 76B, welche fluidal mit der Probenaufgabeeinrichtung 26 oder der Detektionseinrichtung 28 verbunden ist, kann axial durch das Verbindergehäuse 78 und die Druckfeder 80 hindurch geführt sein und in einem ersten Dichtkörper 84A, beispielsweise einer ersten Ferrule, münden. Der Dichtkörper 84A kann in die erste Endkappe 82 eingesteckt sein. Um die Transferleitung 76A oder 76B herum kann weiterhin eine erste Überwurfmutter 86A angeordnet sein, welche auf die erste Endkappe 82 aufschraubbar ist, sodass der erste Dichtkörper 84A zwischen der ersten Überwurfmutter 86A und der ersten Endkappe 82 eingepresst ist. Im Ergebnis ist die Transferleitung 76A oder 76B gasdicht mit der ersten Endkappe 82 verbunden und die erste Endkappe 82 ist in das Verbindergehäuse 78 gegen die Druckfeder 80 eindrückbar.

Der zweite Verbinderabschnitt 74 weist eine zweite Endkappe 88 auf. Die zweite Endkappe 88 ist komplementär zur ersten Endkappe 82 ausgebildet. Auf die gleiche Weise, wie oben beschrieben, ist in der zweiten Endkappe 88 das erste Ende 68 oder das zweite Ende 70 der Trennkapillare 16 mittels einem zweiten Dichtkörper 84B, beispielsweise einer zweiten Ferrule, und einer zweiten Überwurfmutter 86B angeordnet. Dabei ragt ein kleines Stück des in der zweiten Endkappe 88 angeordneten ersten Endes 68 oder zweiten Endes 70 der Trennkapillare 16 aus der zweiten Endkappe 88 in die Richtung hervor, in der die zweite Endkappe 88 auf die erste Endkappe 82 aufgeschoben werden kann. In den **Figuren 6a und 6b** entspricht diese Richtung der x-Achse des kartesischen Koordinatensystems. Dadurch kann das vorstehend genannte kleine Stück des ersten Endes 68 oder des zweiten Endes 70 der Trennkapillare 16 in die erste Endkappe 82 eingeschoben werden, wenn der zweite Verbinderabschnitt 74 auf den ersten Verbinderabschnitt 72 aufgeschoben wird.

Wenn der zweite Verbinderabschnitt 74 auf den ersten Verbinderabschnitt 72 aufgeschoben ist, drückt die Druckfeder 80 die erste Endkappe 82 gegen das Verbindergehäuse 78 in die zweite Endkappe 88 hinein. Die Kraft der Druckfeder 80 erzeugt einen sicheren Sitz der ersten Endkappe 82 in der zweiten Endkappe 88, ohne das Modul 4, 6, 8, an dem der zweite Verbinderabschnitt 74 angeordnet ist, aus der Aufnahmeeinrichtung 36 hinauszudrücken.

Eine gasdichte Verbindung zwischen dem ersten Verbinderabschnitt 72 und dem zweiten Verbinderabschnitt 74 kann insbesondere erreicht werden, indem beispielsweise ein O-Ring 90 zwischen der ersten Endkappe 82 und der komplementär ausgebildeten zweiten Endkappe 88 angeordnet ist. Weiterhin können die erste Endkappe 82 und die zweite Endkappe 88 in das Verbindergehäuse 78 eingedrückt werden, während das Modul 4, 6, 8, an dem der zweite Verbinderabschnitt 74 angeordnet ist, in die Aufnahmeeinrichtung 36 eingesetzt wird. Bei ordnungsgemäßer Anordnung des Moduls 4, 6, 8, an dem der zweite Verbinderabschnitt 74 angeordnet ist, in der Aufnahmeeinrichtung 36 kann eine radial um die zweite Endkappe 88 angeordnete Verbinderdeckplatte 92 das Verbindergehäuse 78 des ersten Verbinderabschnitts 72 verschließen (vgl. **Figur 6b).**

Zusätzlich oder alternativ können Verbinder der vorausgehend beschriebenen Art verwendet werden, um die Trennkapillare 16 mit einer weiteren Einheit, beispielsweise einer zweiten Trennkapillare (nicht dargestellt), automatisch fluidal zu verbinden. Dies kann beispielsweise bei einer Vorrichtung 2 für einen multidimensionalen Gaschromatographen (nicht dargestellt) angewendet werden.

Durch die vorausgehend beschriebene Ausbildung des ersten Moduls 4 ist dieses Modul als ganze Einheit durch den Bediener der erfindungsgemäßen Vorrichtung 2 aus der Aufnahmeeinrichtung 36 entnehmbar und in die Aufnahmeeinrichtung 36 einsetzbar. Die Entnahme und das Einsetzen erfordert nicht, dass der Bediener mit der empfindlichen Trennkapillare 16 in Berührung kommt.

Die Ausbildung des ersten Moduls 4 und insbesondere die Ausbildung der Trennkapillare 16 ist/sind nicht auf die vorausgehende Ausführungsformen eingeschränkt. Beispielsweise kann die Trennkapillare 16 nicht als planare Spirale, sondern als dreidimensionale Spirale ausgebildet sein. Ein Beispiel für die Trennkapillare 16, die als dreidimensionale Spirale, insbesondere als konische Spirale, ausgebildet ist, ist in **Figur 7** dargestellt. Gleiche Bauteile der **Figur 7** sind mit gleichen Bezugszeichen versehen, wie bereits oben genannt.

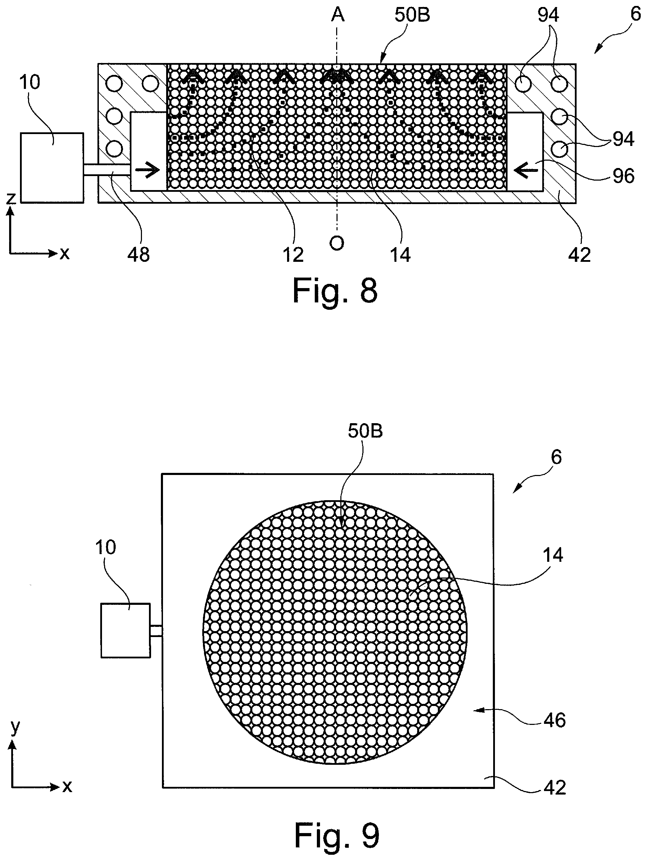

**Figur 8** zeigt eine mögliche Ausführungsform des zweiten Moduls 6 mit der in dem zweiten Modul 6 angeordneten Beeinflussungseinrichtung 14 zur Beeinflussung der Fluidströmung des Fluids 12 in einer Querschnittsansicht. Gleiche Bauteile der **Figur 8** sind mit gleichen Bezugszeichen versehen, wie bereits oben genannt. **Figur 9** zeigt das in **Figur 8** gezeigte zweite Modul 6 in einer Draufsicht. Auch in **Figur 9** sind gleiche Bauteile mit gleichen Bezugszeichen versehen, wie vorstehend genannt.

Das zweite Gehäuse 42 des zweiten Moduls 6 ist so ausgebildet, dass es einen im Wesentlichen kubischen Rauminhalt umfasst. Für einen kubischen Rauminhalt muss das zweite Gehäuse 42 des zweiten Moduls 6 nicht ein geschlossener, kubischer Körper sein. Es genügt, wenn das Volumen einer geschlossenen Mantelfläche, die um das zweite Gehäuse 42 gebildet wird, kubisch ist. Das zweite Modul 6 kann insofern beispielsweise wie das vorstehend beschriebene erste Modul 4 einen im Wesentlichen rechteckigen Querschnitt und eine rechteckige Grundfläche 46 aufweisen, wie in den **Figuren 8** und **9** gezeigt. Der rechteckige Querschnitt des zweiten Moduls 6 kann sich aus einer Mantelfläche ergeben, die um das zweite Gehäuse 42 des zweiten Moduls 6 in der Querschnittsansicht in **Figur 8** gebildet werden kann. Insbesondere kann das zweite Gehäuse 42 des zweiten Moduls 6 im Querschnitt im Wesentlichen die Form eines rechtwinkligen U-Profils aufweisen. Der in **Figur 8** gezeigte Querschnitt ist an einer Mittelebene des zweiten Moduls 6 gebildet. Anhand der in **Figur 9** gezeigten Draufsicht des zweiten Moduls 6 ist zu erkennen, dass die obere Öffnung des im Querschnitt U-förmigen Profils rund ist. Diese Öffnung kann dann die Öffnung 50B in dem zweiten Gehäuse 42 des zweiten Moduls 6 sein. Mit anderen Worten ausgedrückt, ist das zweite Gehäuse 42 des zweiten Moduls 6 ein dünnwandiger, kubischer Körper, dessen obere Seite (das heißt die Seite in Richtung der z-Achse des kartesischen Koordinatensystems in **Figur 8)** zumindest teilweise entfernt wurde. Alternativ kann das zweite Gehäuse 42 des zweiten Moduls 6 in der Praxis jede andere Form aufweisen, die für die Erfindung geeignet ist.

Wie vorausgehend beschrieben, weist das zweite Gehäuse 42 des zweiten Moduls 6 den fluidal durchströmbaren Durchgang 48 auf. Der Durchgang 48 kann beispielsweise lateral durch das zweite Gehäuse 42 hindurchführen. An diesen Durchgang 48 kann von außerhalb des zweiten Gehäuses 42 des zweiten Moduls 6 die erste Erzeugungseinrichtung 10 zur Erzeugung einer Fluidströmung des Fluids 12 angeschlossen sein.

In dem zweiten Gehäuse 42 des zweiten Moduls 6 kann weiterhin eine Kühlvorrichtung 94 zur Kühlung des zweiten Moduls 6 integriert sein. Die Kühlvorrichtung 94 kann beispielsweise einen Anschluss für einen Kühlwasserkreislauf und eine Mehrzahl von Kühlkanälen umfassen. Die Kühlkanäle sind insbesondere so in dem zweiten Gehäuse 42 des zweiten Moduls 6 angeordnet, dass Wärme, die von der Trennkapillare 16 abgestrahlt wird, von der Kühlvorrichtung 94 aufgenommen wird. Insbesondere können die Kühlkanäle auf einer Seite in dem zweiten Gehäuse 42 des zweiten Moduls 6 eingebracht sein, die bei ordnungsgemäßer Anordnung des ersten Moduls 4 und des zweiten Moduls 6 in der Aufnahmeeinrichtung 36 nahe an dem ersten Modul 4 ist.

In den **Figuren 8** und **9** ist weiterhin dargestellt, dass die Beeinflussungseinrichtung 14 zur Beeinflussung der Fluidströmung des Fluids 12 in dem zweiten Modul 6 angeordnet ist. Die Beeinflussungseinrichtung 14 ist als fluidal durchströmbare Schwammstruktur ausgebildet. Die Schwammstruktur weist somit offene Porosität auf. Die Größe der Poren ist über die gesamte Schwammstruktur hinweg gleich oder im Wesentlichen gleich. In der in **Figur 8** gezeigten Ausführungsform des zweiten Moduls 6 weist die als Schwammstruktur ausgebildete Beeinflussungseinrichtung 14 beispielsweise eine zylindrische Form mit rechteckigem Querschnitt auf. In Draufsicht kann die Beeinflussungseinrichtung 14 beispielsweise der Form der Öffnung 50B folgend ebenfalls rund sein, wie in **Figur 9** gezeigt ist. Die Beeinflussungseinrichtung 14 nimmt einen großen Anteil des Hohlraums in dem zweiten Gehäuse 42 des zweiten Moduls 6 ein. Beispielsweise ist die Beeinflussungseinrichtung 14 so in dem zweiten Gehäuse 42 des zweiten Moduls 6 angeordnet, dass die als Schwammstruktur ausgebildete Beeinflussungseinrichtung 14 das im Querschnitt im Wesentlichen als rechtwinkliges U-Profil ausgebildete zweite Gehäuse 42 nahezu vollständig ausfüllt. Die als Schwammstruktur ausgebildete Beeinflussungseinrichtung 14 kann beispielsweise bis an den oberen Rand des zweiten Moduls 6 reichen und dort bündig mit dem zweiten Gehäuse 42 des zweiten Moduls 6 abschließen.

Teilweise oder vollständig um die beispielsweise als Schwammstruktur mit in Draufsicht runder Form ausgebildete Beeinflussungseinrichtung 14 herum ist gemäß der Ausführungsform des zweiten Moduls 6 ein Ringkanal 96 (in **Figur 9** nicht dargestellt) in dem zweiten Gehäuse 42 des zweiten Moduls 6 angeordnet. Der Ringkanal 96 ist insbesondere horizontal um die als Schwammstruktur ausgebildete Beeinflussungseinrichtung 14 herum angeordnet. Der Ringkanal 96 ist mit dem Durchgang 48 im zweiten Gehäuse 42 des zweiten Moduls 6 verbunden. Auf der Seite des Ringkanals 96, die der als Schwammstruktur ausgebildete Beeinflussungseinrichtung 14 zugewandt ist, ist der Ringkanal 96 zumindest teilweise offen. Somit kann das Fluid 12 von der Erzeugungseinrichtung 10 über den Durchgang 48 im zweiten Gehäuse 42 des zweiten Moduls 6 in den Ringkanal 96 gelangen. Von dem Ringkanal 96 ausgehend kann das Fluid 12 in Draufsicht auf das zweite Modul 6 beispielsweise radial in die als Schwammstruktur ausgebildete Beeinflussungseinrichtung 14 strömen und aus der Öffnung 50B in dem Gehäuse 42 des zweiten Moduls 6 zu dem ersten Modul 4 ausströmen.

Durch eine spezielle Ausgestaltung der als Schwammstruktur ausgebildeten Beeinflussungseinrichtung 14 kann die Strömungsgeschwindigkeit des Fluids 12 gezielt beeinflusst werden. In dieser Ausführungsform des zweiten Moduls 6 kann die als Schwammstruktur ausgebildete Beeinflussungseinrichtung 14 beispielsweise eine Schwammstruktur mit homogener Durchlässigkeit für das Fluid 12 sein. In diesem Fall wird die Strömungsgeschwindigkeit der Fluidströmung des Fluids 12 dadurch inhomogen beeinflusst, dass das Fluid 12 von dem Ringkanal 96 bis zu einem Austritt aus der Beeinflussungseinrichtung 14 durch die Öffnung 50B in Abhängigkeit von dem exakten Austrittspunkt verschiedene Weglängen durch die als Schwammstruktur ausgebildete Beeinflussungseinrichtung 14 zurücklegt. Wenn das Fluid 12 eine lange Weglänge durch die Beeinflussungseinrichtung 14 zurücklegt, wird die Geschwindigkeit des Fluids 12 stärker reduziert, als wenn das Fluid 12 eine kurze Weglänge durch die Beeinflussungseinrichtung 14 zurücklegt. Dieser Zusammenhang ist in **Figur 8** durch die gepunktet dargestellten Pfeile wiedergegeben. Pfeile mit kurzem Abstand zwischen den Punkten deuten in dieser Figur und im Folgenden eine kurze Weglänge und eine hohe Strömungsgeschwindigkeit der Fluidströmung des Fluids 12 an. Pfeile mit großem Abstand zwischen den Punkten deuten in dieser Figur und im Folgenden eine lange Weglänge und eine geringe Strömungsgeschwindigkeit der Fluidströmung des Fluids 12 an. Die als Schwammstruktur ausgebildete Beeinflussungseinrichtung 14 ist in dieser Ausführungsform und in den im Folgenden beschriebenen Ausführungsformen um die vertikalen Mittelachse O-A herum zentralsymmetrisch. Insofern ist auch das aus dem zweiten Modul 6 in Richtung des ersten Moduls 4 (das heißt in Richtung der z-Achse des in **Figur 8** gezeigten kartesischen Koordinatensystems) ausströmende Fluidströmungsfeld bezüglich der Strömungsgeschwindigkeit des Fluids 12 zentralsymmetrisch inhomogen.

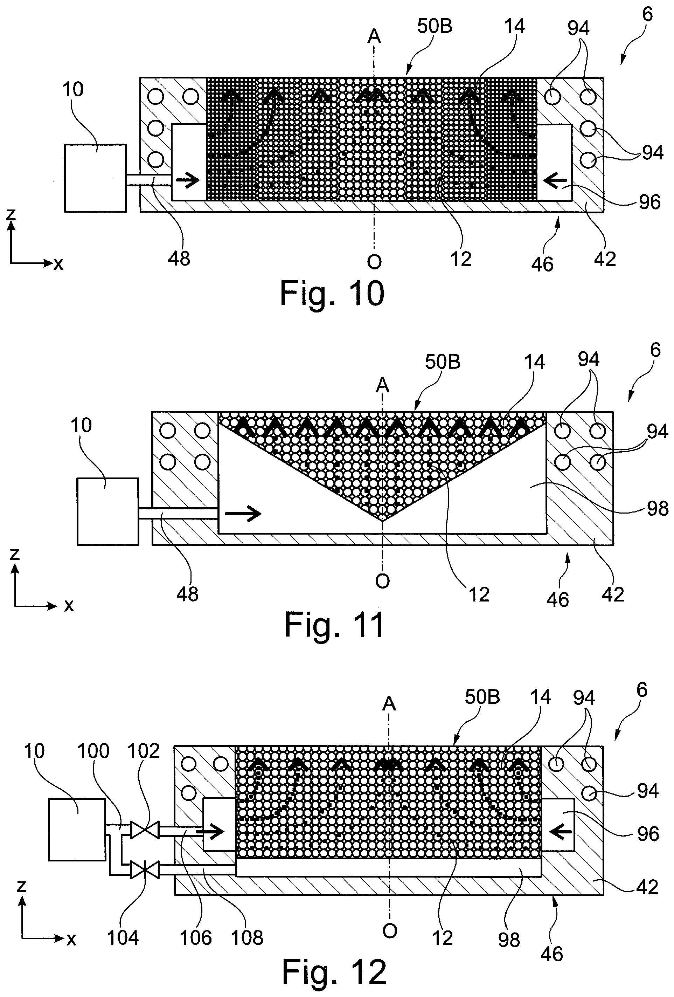

In einer weiteren Ausführungsform des zweiten Moduls 6 ist die Beeinflussungseinrichtung 14 alternativ oder zusätzlich als eine Schwammstruktur mit inhomogener Durchlässigkeit für das Fluid 12 ausgebildet. Wie in **Figur 10** gezeigt, nimmt in diesem Fall die Größe der Poren beispielsweise von einem Zentrum der als Schwammstruktur ausgebildeten Beeinflussungseinrichtung 14 zum Ringkanal 96 hin ab. In diesem Fall wird die Verteilung der Strömungsgeschwindigkeit der Fluidströmung des Fluids 12 (zusätzlich) dadurch inhomogen beeinflusst, dass die Fluidströmung des Fluids 12 durch eine lokal geringe Durchlässigkeit der Schwammstruktur gebremst wird.

**Figur 11** zeigt eine weitere mögliche Ausführungsform des zweiten Moduls 6. Die weitere Ausführungsform des zweiten Moduls 6 entspricht im Wesentlichen der Ausführungsform des zweiten Moduls 6 gemäß der **Figur 8,** wobei folgende Merkmale die weitere Ausführungsform des zweiten Moduls 6 von der Ausführungsform gemäß der **Figur 8** unterscheiden:

Ein Ringkanal in dem zweiten Gehäuse 42 des zweiten Moduls 6 ist in der weiteren Ausführungsform des zweiten Moduls 6 nicht vorgesehen. Ferner kann die als Schwammstruktur ausgebildete Beeinflussungseinrichtung 14 beispielsweise als Kegel ausgebildet sein, so dass diese in der Querschnittsansicht des zweiten Moduls 6 einen dreieckigen Querschnitt aufweist. Die in der Querschnittsansicht des zweiten Moduls 6 dreieckige Beeinflussungseinrichtung 14 kann insbesondere so in dem Hohlraum des zweiten Gehäuses 42 des zweiten Moduls 6 angeordnet sein, dass die als Schwammstruktur ausgebildete Beeinflussungseinrichtung 14 mit dem oberen Rand des zweiten Moduls 6, der dem ersten Modul 4 zugewandt ist, bündig abschließt. Die im Querschnitt dreieckige, als Schwammstruktur ausgebildete Beeinflussungseinrichtung 14 weist dann mit der Spitze der Dreiecksform in Richtung der Seite des zweiten Moduls 6, die bei ordnungsgemäßer Anordnung des ersten Moduls 4 und des zweiten Moduls 6 in der Aufnahmeeinrichtung 36 dem ersten Modul 4 abgewandt ist. Dadurch ist in dem zweiten Modul 6 unterhalb der im Querschnitt dreieckigen Beeinflussungseinrichtung 14 zur Beeinflussung der Fluidströmung des Fluids 12 ein freies, fluidal durchströmbares Volumen 98 angeordnet. Somit kann die Fluidströmung des Fluids 12 von der Erzeugungseinrichtung 10 über den Durchgang 48 in das freie Volumen 98 gelangen. Von dem freien Volumen 98 kann das Fluid 12 in die als Schwammstruktur ausgebildete Beeinflussungseinrichtung 14 zur Beeinflussung der Fluidströmung des Fluids 12 strömen und aus der Öffnung 50B in dem zweiten Gehäuse 42 des zweiten Moduls 6 zu dem ersten Modul 4 ausströmen. Durch diese Ausführungsform des zweiten Moduls 6 kann die Fluidströmung des Fluids 12 auf dieselbe Weise beeinflusst werden, wie in der Ausführungsform des zweiten Moduls 6 gemäß der **Figur 8.** Aufgrund der unterschiedlichen Form der als Schwammstruktur ausgebildeten Beeinflussungseinrichtung 14 in der Ausführungsform des zweiten Moduls 6 gemäß der **Figur 8** und in der weiteren Ausführungsform des zweiten Moduls 6 gemäß der **Figur 11** kann das Fluidströmungsfeld des Fluids 12 eine unterschiedliche Geschwindigkeitsverteilung nach dem Verlassen der Beeinflussungseinrichtung 14 aufweisen. Zusätzlich oder alternativ können die vorstehenden Ausführungsformen des zweiten Moduls 6 miteinander kombiniert werden.

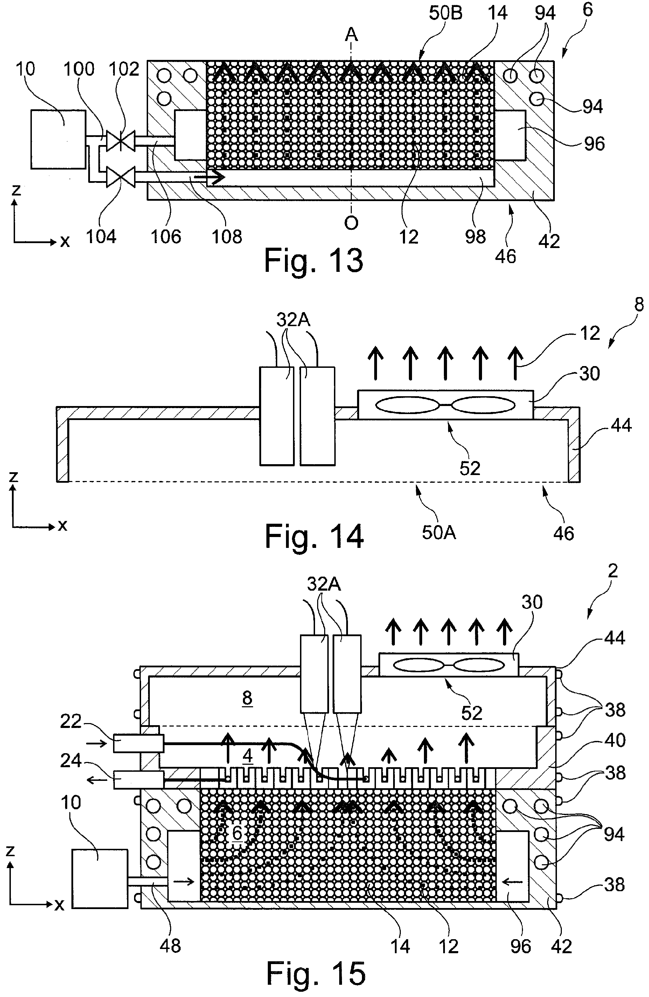

Die **Figuren 12 und 13** zeigen eine noch weitere mögliche Ausführungsform des zweiten Moduls 6. Die Ausführungsform des zweiten Moduls 6 gemäß den **Figuren 12 und 13** entspricht im Wesentlichen der Ausführungsform des zweiten Moduls 6 gemäß der **Figur 8,** wobei folgende Merkmale die Ausführungsform des zweiten Moduls 6 gemäß den **Figuren 12 und 13** von der Ausführungsform gemäß der **Figur 8** unterscheiden:

Zwischen der ersten Erzeugungseinrichtung 10 und dem Durchgang 48 durch das zweite Gehäuse 42 des zweiten Moduls 6 ist eine Verteiler-Einrichtung zum Verteilen der erzeugten Fluidströmung des Fluids 12 angeordnet. Die Verteiler-Einrichtung kann beispielsweise ein Rohrleitungssystem mit einem Gabelstück 100 umfassen. Die Verteiler-Einrichtung kann weiterhin beispielsweise ein erstes Ventil 102 und ein zweites Ventil 104 umfassen. Das erste Ventil 102 kann an einem ersten Abschnitt des Gabelstücks 100 angeordnet sein. Das zweite Ventil 104 kann an einem zweiten Abschnitt des Gabelstücks 100 angeordnet sein. Von dem ersten Abschnitt des Gabelstücks 100 führt ein erster Rohrabschnitt 106 zu dem zweiten Modul 6. Von dem zweiten Abschnitt des Gabelstücks 100 führt ein zweiter Rohrabschnitt 108 zu dem zweiten Modul 6. Der erste Rohrabschnitt 106 und der zweite Rohrabschnitt 108 können übereinander liegend durch das zweite Gehäuse 42 des zweiten Moduls 6 hindurchgeführt sein. Dabei mündet der erste Rohrabschnitt 106 in dem Ringkanal 96, der in gleicher Weise ausgebildet ist, wie bei der Ausführungsform des zweiten Moduls 6 gemäß der **Figur 8.** Der zweite Rohrabschnitt 108 mündet in dem fluidal durchströmbaren, freien Volumen 98 in dem zweiten Gehäuse 42 des zweiten Moduls 6. Das freie Volumen 98 kann insbesondere vollflächig unterhalb der Beeinflussungseinrichtung 14 in dem zweiten Gehäuse 42 des zweiten Moduls 6 angeordnet sein. Die Beeinflussungseinrichtung 14 und das darunter angeordnete freie Volumen 98 können jegliche Form aufweisen, welche für die Erfindung geeignet ist. Wenn das zweite Ventil 104 abgesperrt ist, dann kann das Fluid 12 von der Erzeugungseinrichtung 10 über den ersten Rohrabschnitt 106 in den Ringkanal 96 gelangen. Von dem Ringkanal 96 kann das Fluid 12 seitlich in die Schwammstruktur der Beeinflussungseinrichtung 14 strömen und aus der Öffnung 50B in dem zweiten Gehäuse 42 des zweiten Moduls 6 zu dem ersten Modul 4 ausströmen. Wenn das erste Ventil 102 abgesperrt ist, dann kann das Fluid 12 von der Erzeugungseinrichtung 10 über den zweiten Rohrabschnitt 108 in das freie Volumen 98 gelangen. Von dem freien Volumen 98 kann das Fluid 12 vollflächig von unten in die Schwammstruktur der Beeinflussungseinrichtung 14 strömen und aus der Öffnung 50B in dem zweiten Gehäuse 42 des zweiten Moduls 6 zu dem ersten Modul 4 ausströmen. Durch ein Einströmen des Fluids 12 in die Beeinflussungseinrichtung 14 von verschiedenen Seiten, kann die Fluidströmung des Fluids 12 nach Austritt des Fluids 12 aus der Beeinflussungseinrichtung 14 verschiedene Verteilungen der Strömungsgeschwindigkeit aufweisen. Dadurch ist die Flexibilität der erfindungsgemäßen Vorrichtung 2 erhöht. Insbesondere kann durch die in den **Figuren 12 und 13** dargestellte Ausführungsform mit dem Ringkanal 96 und dem vollflächig unterhalb der Beeinflussungseinrichtung 14 in dem zweiten Gehäuse 42 des zweiten Moduls 6 angeordneten freien Volumen 98 entweder eine homogene Fluidströmung des Fluids 12 oder alternativ eine inhomogene Fluidströmung des Fluids 12 erzeugt werden.

**Figur 14** zeigt eine Ausführungsform des dritten Moduls 8 der erfindungsgemäßen Vorrichtung 2. Das dritte Modul 8 ist ebenfalls so ausgebildet, dass es einen im Wesentlichen kubischen Rauminhalt umfasst. Das dritte Gehäuse 44 des dritten Moduls 8 kann insofern beispielsweise wie das vorstehend beschriebene zweite Modul 6 eine rechteckige Grundfläche 46 und einen im Wesentlichen rechteckigen Querschnitt aufweisen. Alternativ kann das dritte Gehäuse 44 des dritten Moduls 8 in der Praxis jede andere Form aufweisen, die für die Erfindung geeignet ist. Beispielsweise kann das dritte Gehäuse 44 des dritten Moduls 8 eine rechteckige, ebene Platte sein.

Wie vorausgehend beschrieben, weist das dritte Gehäuse 44 des dritten Moduls 8 einen fluidal durchströmbaren Durchgang 52 auf. Der Durchgang 52 kann beispielsweise in Strömungsrichtung der Fluidströmung des Fluids 12 orientiert sein. Mit anderen Worten ausgedrückt, kann der Durchgang 52 in Richtung der z-Achse des in **Figur 14** gezeigten kartesischen Koordinatensystems durch das dritte Gehäuse 44 des dritten Moduls 8 hindurchführen. Durch diesen Durchgang 52 kann die Fluidströmung des Fluids 12, die von dem ersten Modul 4 in das dritte Modul 8 strömt, aus dem dritten Modul 8 entweichen. An dem Durchgang 52 kann das dritte Modul 8 ferner die zweite Erzeugungseinrichtung 30 zur Erzeugung einer Fluidströmung aufweisen. Die zweite Erzeugungseinrichtung 30 ist in der in **Figur 14** gezeigten Ausführungsform des dritten Moduls 8 beispielsweise als Ventilator ausgebildet. In dem dritten Modul 8 ist außerdem ein weiterer Temperatursensor 32A angeordnet. Der Temperatursensor 32A ist beispielsweise als ein Pyrometer ausgebildet. Bei ordnungsgemäßer Anordnung des ersten Moduls 4 und des dritten Moduls 8 in der Aufnahmeeinrichtung 36 kann das Pyrometer die Temperatur einer vordefinierten Stelle der Trennkapillare 16 berührungslos messen.

**Figur 15** zeigt eine Ausführungsform des ersten Moduls 4, eine Ausführungsform des zweiten Moduls 6 und eine Ausführungsform des dritten Moduls 8 ordnungsgemäß übereinander in der Aufnahmeeinrichtung 36 angeordnet in einer Querschnittsansicht. Insbesondere ist der Pfad, auf dem die Fluidströmung des Fluids 12 durch die erfindungsgemäße Vorrichtung 2 strömt, zu erkennen. Das Fluid 12 strömt von der ersten Erzeugungseinrichtung 10 in den Durchgang 48 im zweiten Gehäuse 42 des zweiten Moduls 6, dann in den Ringkanal 96, dann in die Beeinflussungseinrichtung 14, dann an der Trennkapillare 16 vorbei, dann in das dritte Modul 8 und dann über den Durchgang 52 in die Umgebung der erfindungsgemäßen Vorrichtung 2.

Wie vorausgehend beschrieben, sind das erste Modul 4 und/oder das zweite Modul 6 und/oder das dritte Modul 8 aus der Aufnahmeeinrichtung 36 entnehmbar und einsetzbar. Das Entnehmen und/oder das Einsetzen kann bei der in **Figur 15** dargestellten Ausführungsform der erfindungsgemäßen Vorrichtung 2 insbesondere orthogonal zu der Richtung, in der die vorgenannten Module 4, 6, 8 übereinander angeordnet sind, erfolgen. Beispielsweise können die vorstehend genannten Module 4, 6, 8 in Richtung der y-Achse oder in Richtung der x-Achse des in **Figur 15** gezeigten kartesischen Koordinatensystems aus der Aufnahmeeinrichtung 36 entnommen und/oder in die Aufnahmeeinrichtung 36 eingesetzt werden. Durch ein Einsetzen des ersten Moduls 4 und/oder des zweiten Modul 6 und/oder des dritten Moduls 8 in eine dieser Richtungen ist automatisch eine Verbindung zwischen den vorstehend genannten Modulen 4, 6, 8 über die Öffnungen 50A, B hergestellt. Darüber hinaus kann nach einem Einsetzen des ersten Moduls 4 in Richtung der y-Achse oder der x-Achse des in **Figur 15** gezeigten kartesischen Koordinatensystems eine Verbindung der ersten Anschlussvorrichtung 22 mit der Probenaufgabeeinrichtung (nicht dargestellt) und der zweiten Anschlussvorrichtung 24 mit der Detektionseinrichtung (nicht dargestellt) manuell hergestellt werden. Alternativ kann die Verbindung der ersten Anschlussvorrichtung 22 mit der Probenaufgabeeinrichtung und der zweiten Anschlussvorrichtung 24 mit der Detektionseinrichtung automatisch hergestellt sein, nachdem das erste Modul 4 in die Aufnahmeeinrichtung 36 eingesetzt ist.

In **Figur 16** ist eine Ausführungsform eines erfindungsgemäßen Gaschromatographen 110, insbesondere eines erfindungsgemäßen Prozess-Temperaturgradienten-Gaschromatographen, dargestellt. Gleiche Bauteile der **Figur 16** sind mit gleichen Bezugszeichen versehen, wie bereits oben genannt.

Der Gaschromatograph 110 ist durch die erfindungsgemäße Vorrichtung 2 gekennzeichnet. Zusätzlich zu der erfindungsgemäßen Vorrichtung 2 weist der Gaschromatograph 110 ein Gehäuse 112 und einen Luftbad-Ofen 114 auf. Der Luftbad-Ofen 114 kann in dem Gehäuse 112 integriert sein. Er dient insbesondere einem Einstellen einer vordefinierten Temperatur der ersten Anschlussvorrichtung 22 und der zweiten Anschlussvorrichtung 24. Der Luftbad-Ofen 114 kann über eine Tür 116 geöffnet werden. Wenn ein Bediener des Gaschromatographen 110 die Tür 116 des Luftbad-Ofens 114 öffnet, kann der Bediener in der in **Figur 16** gezeigten Ausführungsform des Gaschromatographen 110 das erste Modul 4 orthogonal zur Strömungsrichtung der Fluidströmung des Fluids 12, insbesondere in Richtung der x-Achse des in **Figur 16** gezeigten kartesischen Koordinatensystems, entnehmen.

Der Gaschromatograph 110 umfasst des Weiteren eine Probenaufgabeeinrichtung 26 zur Aufgabe des mit dem Gaschromatographen 110 zu analysierenden Stoffes 20 oder Stoffgemischs 20. Die Probenaufgabeeinrichtung 26 dient außerdem der Aufgabe des Trägergases in die Trennkapillare 16.

Weiterhin umfasst der Gaschromatograph 110 eine Detektionseinrichtung 28 zur Detektion eines mit dem Gaschromatographen 110 zu analysierenden Stoffes 20 oder Stoffgemischs 20. Die Probenaufgabeeinrichtung 26 und die Detektionseinrichtung 28 sind so an dem Gaschromatographen 110 angeordnet, dass sie ebenfalls durch den Luftbad-Ofen 114 temperiert werden.

Weiterhin umfasst der Gaschromatograph 110 eine Elektronik-Einheit 118. Die Elektronik-Einheit 118 umfasst die Recheneinheit 34 der erfindungsgemäßen Vorrichtung 2, eine Stromversorgung des Gaschromatographen 110 sowie Steuergeräte, die für die Erfindung verwendet werden.

Die in der **Figur 16** dargestellte Ausführungsform des Gaschromatographen 110 erlaubt eine flexible Entnahme des ersten Moduls 4 der erfindungsgemäßen Vorrichtung 2. Selbstverständlich ist der Gaschromatograph 110 nicht auf diese Ausführungsform eingeschränkt, sondern kann in jeder Form ausgeführt sein, die für die Erfindung geeignet ist.

Die in der vorliegenden Beschreibung, in den Zeichnungen sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein. Die Erfindung ist nicht auf die beschriebenen Ausführungsformen beschränkt. Sie kann im Rahmen der Ansprüche und unter Berücksichtigung der Kenntnisse des zuständigen Fachmanns variiert werden.

**Bezugszeichenliste**

| | |
|---|---|
| 2 | Vorrichtung für einen Gaschromatographen |
| 4 | erstes Modul |
| 6 | zweites Modul |
| 8 | drittes Modul |
| 10 | erste Erzeugungseinrichtung zur Erzeugung einer Fluidströmung |
| 12 | Fluid |
| 14 | Beeinflussungseinrichtung zur Beeinflussung der Fluidströmung des Fluids |
| 16 | Trennkapillare |
| 18 | Stromleiter |
| 20 | zu analysierender Stoff / zu analysierendes Stoffgemisch |
| 22 | erste Anschlussvorrichtung |
| 24 | zweite Anschlussvorrichtung |
| 26 | Probenaufgabeeinrichtung |

| | |
|---|---|
| 28 | Detektionseinrichtung |
| 30 | zweite Erzeugungseinrichtung zur Erzeugung einer Fluidströmung |
| 32 | Temperatursensor |
| 32A | weiterer Temperatursensor |
| 34 | Recheneinheit |
| 36 | Aufnahmeeinrichtung zur Aufnahme des ersten Moduls, des zweiten Moduls und des dritten Moduls |
| 38 | Führungsschienen |
| 40 | erstes Gehäuse des ersten Moduls |
| 42 | zweites Gehäuse des zweiten Moduls |
| 44 | drittes Gehäuse des dritten Moduls |
| 46 | Grundfläche der Gehäuse des ersten Moduls, des zweiten Moduls und des dritten Moduls |
| 48 | Durchgang im Gehäuse des zweiten Moduls |
| 50A,B | Öffnungen in den Gehäusen des ersten Moduls, des zweiten Moduls und des dritten Moduls |
| 52 | Durchgang im Gehäuse des dritten Moduls |
| 54 | Mittelpunkt der Trennkapillare |
| 56 | Haltevorrichtung für die Trennkapillare |
| 58 | erster Endabschnitt der Trennkapillare |
| 60 | zweiter Endabschnitt der Trennkapillare |
| 62 | Wärme-dämmendes Material |
| 64 | Strömungsrichtereinrichtung |
| 66A | erste Schnellverbindungseinrichtung |
| 66B | zweite Schnellverbindungseinrichtung |
| 68 | erstes Ende der Trennkapillare |
| 70 | zweites Ende der Trennkapillare |
| 72 | erster Verbinderabschnitt der Schnellverbindungseinrichtung |
| 74 | zweiter Verbinderabschnitt der Schnellverbindungseinrichtung |
| 76A | erste Transferleitung |
| 76B | zweite Transferleitung |
| 78 | Verbindergehäuse |
| 80 | Druckfeder |
| 82 | erste Endkappe der Schnellverbindungseinrichtung |
| 84A | erster Dichtkörper (Ferrule) |
| 84B | zweiter Dichtkörper (Ferrule) |
| 86A | erste Überwurfmutter |
| 86B | zweite Überwurfmutter |
| 88 | zweite Endkappe der Schnellverbindungseinrichtung |
| 90 | O-Ring |
| 92 | Verbinderdeckplatte |
| 94 | Kühlvorrichtung / Kühlkanäle |
| 96 | Ringkanal |
| 98 | freies Volumen im zweiten Modul |
| 100 | Rohrleitung mit Gabelstück |
| 102 | erstes Ventil |
| 104 | zweites Ventil |
| 106 | erster Rohrabschnitt der Rohrleitung |
| 108 | zweiter Rohrabschnitt der Rohrleitung |
| 110 | Gaschromatograph |
| 112 | Gehäuse des Gaschromatographen |
| 114 | Luftbad-Ofen |
| 116 | Tür |
| 118 | Elektronik-Einheit |
| O-A | vertikale Achse |

**Patentansprüche**

1. Vorrichtung (2) für einen Gaschromatographen, insbesondere einen Temperaturgradienten-Gaschromatographen (110), mit

  - einem Modul (4),
  - einer Trennkapillare (16), die in dem Modul (4) angeordnet ist, wobei die Trennkapillare (16) beheizbar ist, wobei die Trennkapillare (16) in einem regelbaren Fluidströmungsfeld eines Fluids (12) anordbar ist und wobei die Trennkapillare (16) mit einem durch den Gaschromatographen (110), insbesondere den Temperaturgradienten-Gaschromatographen, zu analysierenden Stoff (20) oder einem Stoffgemisch (20) beaufschlagbar ist,
  - mindestens einer Erzeugungseinrichtung (10) zur Erzeugung einer Fluidströmung des Fluids (12), wobei die Erzeugungseinrichtung (10) einer Temperaturbeeinflussung der Trennkapillare (16) dient, und mit
  - einer Beeinflussungseinrichtung (14) zur Beeinflussung der Fluidströmung des Fluids (12), **gekennzeichnet dadurch, dass** die Beeinflussungseinrichtung (14) als eine von einer Fluidströmung durchströmbare Schwammstruktur ausgebildet ist und wobei die von der Beeinflussungseinrichtung (14) bereitgestellte Beeinflussung darauf abzielt, eine Fluidströmung mit unbestimmtem Fluidströmungsfeld in eine Fluidströmung mit definiertem Fluidströmungsfeld umzuwandeln,
  und dadurch, dass die Vorrichtung eine Aufnahmeeinrichtung (36) zur Aufnahme des Moduls (4) aufweist, wobei das Modul (4) in die Aufnahmeeinrichtung (36) einsetzbar und aus der Aufnahmeeinrichtung (36) entnehmbar ist.

2. Vorrichtung (2) nach Anspruch 1, **dadurch gekennzeichnet, dass**

  - das Modul (4) ein erstes Modul (4) ist,
  - ein zweites Modul (6) vorgesehen ist, in dem die Beeinflussungseinrichtung (14) angeordnet ist, und dass
  - das zweite Modul (6) in die Aufnahmeeinrichtung (36) einsetzbar und aus der Aufnahmeeinrichtung (36) entnehmbar ist.

3. Vorrichtung (2) nach Anspruch 2, **dadurch gekennzeichnet, dass**

- die Erzeugungseinrichtung (10) im oder am ersten Modul (4) angeordnet ist, und/oder dass
- die Erzeugungseinrichtung (10) im oder am zweiten Modul (6) angeordnet ist.

4. Vorrichtung (2) nach einem der vorangehenden Ansprüche, **dadurch gekennzeichnet, dass**

- die Erzeugungseinrichtung (10) eine erste Erzeugungseinrichtung (10) zur Erzeugung einer Fluidströmung des Fluids (12) ist, und dass
- eine zweite Erzeugungseinrichtung (30) zur Erzeugung einer Fluidströmung des Fluids (12) vorgesehen ist.

5. Vorrichtung (2) nach Anspruch 4 in Verbindung mit Anspruch 2 oder 3, **dadurch gekennzeichnet, dass** mindestens ein drittes Modul (8) vorgesehen ist, das an dem ersten Modul (4) angeordnet ist, wobei die zweite Erzeugungseinrichtung (30) in dem dritten Modul (8) angeordnet ist.

6. Vorrichtung (2) nach Anspruch 5, **dadurch gekennzeichnet, dass** das dritte Modul (8) in die Aufnahmeeinrichtung (36) einsetzbar und aus der Aufnahmeeinrichtung (36) entnehmbar ist.

7. Vorrichtung (2) nach Anspruch 5 oder 6, **dadurch gekennzeichnet, dass** mindestens eines der Module aus der Menge des ersten Moduls (4), des zweiten Moduls (6) und des dritten Moduls (8) mindestens eine Verbindungsvorrichtung (50A, 50B) zur Verbindung mit mindestens einem weiteren Modul (4, 6, 8) der vorgenannten Menge aufweist.

8. Vorrichtung (2) nach einem der vorangehenden Ansprüche, **dadurch gekennzeichnet, dass** das Modul (4), in dem die Trennkapillare (16) angeordnet ist, mindestens eines der folgenden Merkmale aufweist:

- eine erste Anschlussvorrichtung (22) zum Anschluss der Trennkapillare (16) an eine Probenaufgabeeinrichtung (26) zur Injektion des zu analysierenden Stoffes (20) oder des zu analysierenden Stoffgemisches (20) und eines Trägergases in die Trennkapillare (16);
- eine zweite Anschlussvorrichtung (24) zum Anschluss der Trennkapillare (16) an eine Detektionseinrichtung (28) zur Detektion des zu analysierenden Stoffes (20) oder des zu analysierenden Stoffgemisches (20).

9. Vorrichtung (2) nach Anspruch 8, **dadurch gekennzeichnet, dass** mindestens eines der folgenden Merkmale vorgesehen ist:

- die erste Anschlussvorrichtung (22) weist mindestens einen ersten Isolator (62) und/oder mindestens eine erste Heizvorrichtung (114) zum Einstellen einer Temperatur auf, so dass an der ersten Anschlussvorrichtung (22) eine Temperatur oberhalb einer Temperatur der beheizbaren Trennkapillare (16) einstellbar ist;
- die erste Anschlussvorrichtung (22) weist mindestens eine erste Schnellverbindungseinrichtung (66A, 66B) zum Verbinden der Trennkapillare (16) mit der Probenaufgabeeinrichtung (26) auf;
- die zweite Anschlussvorrichtung (24) weist mindestens einen zweiten Isolator (62) und/oder mindestens eine zweite Heizvorrichtung (114) zum Einstellen einer Temperatur auf, so dass an der zweiten Anschlussvorrichtung (24) eine Temperatur oberhalb einer Temperatur der beheizbaren Trennkapillare (16) einstellbar ist;
- die zweite Anschlussvorrichtung (24) weist mindestens eine zweite Schnellverbindungseinrichtung (66A, 66B) zum Verbinden der Trennkapillare (16) mit der Detektionseinrichtung (28) auf.

10. Vorrichtung (2) nach Anspruch 8 oder 9, **dadurch gekennzeichnet, dass** das Modul (4), in dem die Trennkapillare (16) angeordnet ist, derart in die Aufnahmeeinrichtung (36) einsetzbar ist, dass beim Einsetzen dieses Moduls (4) eine Verbindung dieses Moduls (4) mit der Beeinflussungseinrichtung (14) automatisch hergestellt ist.

11. Vorrichtung (2) nach Anspruch 8 oder 9 in Verbindung mit Anspruch 4, **dadurch gekennzeichnet, dass** das erste Modul (4) derart in die Aufnahmeeinrichtung (36) einsetzbar ist, dass beim Einsetzen des ersten Moduls (4) eine Verbindung des ersten Moduls (4) mit der Beeinflussungseinrichtung (14) sowie mit der zweiten Erzeugungseinrichtung (30) automatisch hergestellt ist.

12. Vorrichtung (2) nach einem der Ansprüche 8 bis 11, **dadurch gekennzeichnet, dass** das Modul (4), in dem die Trennkapillare (16) angeordnet ist, derart in die Aufnahmeeinrichtung (36) einsetzbar ist, dass beim Einsetzen dieses Moduls (4) eine Verbindung dieses Moduls (4) mit der Probenaufgabeeinrichtung (26) und/oder mit der Detektionseinrichtung (28) manuell herstellbar oder automatisch hergestellt ist.

13. Vorrichtung (2) nach einem der vorangehenden Ansprüche, **dadurch gekennzeichnet, dass** die Vorrichtung mindestens eines der folgenden Merkmale aufweist:

- die Trennkapillare (16) weist eine spiralförmige Ausbildung auf;
- die als Schwammstruktur ausgebildete Beeinflussungseinrichtung (14) in Form eines Zylinders ist unterhalb oder oberhalb der Trennkapillare (16) angeordnet, so dass das Fluid (12) nach Durchströmen der Beeinflussungseinrichtung (14) ein zentralsymmetrisches Strömungsfeld aufweist;
- die als Schwammstruktur ausgebildete Beeinflussungseinrichtung (14) in Form eines Zylinders ist unterhalb oder oberhalb der Trennkapillare (16) angeordnet, so dass das Fluid (12) nach Durchströmen der Beeinflussungseinrichtung (14) ein zentralsymmetrisches Strömungsfeld aufweist, wobei die als Schwammstruktur ausgebildete Beeinflussungseinrichtung (14) eine von einem zentralen Mittelpunkt der Schwammstruktur nach außen hin zunehmende Durchlässigkeit für das Fluid (12) aufweist, so dass eine Strömungsgeschwindigkeit des zentralsymmetrischen Strömungsfelds des Fluids (12) mit zunehmender Entfernung von einem Zentrum des Strömungsfelds zunimmt;
- die als Schwammstruktur ausgebildete Beeinflussungseinrichtung (14) in Form eines Zylinders ist unterhalb oder oberhalb der Trennkapillare (16) angeordnet, so dass das Fluid (12) nach Durchströmen der Beeinflussungseinrichtung (14) ein zentralsymmetrisches Strömungsfeld aufweist, wobei die als Schwammstruktur ausgebildete Beeinflussungseinrichtung (14) eine von einem zentralen Mittelpunkt der Schwammstruktur nach außen hin abnehmende Durchlässigkeit für das Fluid (12) aufweist, so dass die Strömungsgeschwindigkeit des zentralsymmetrischen Strömungsfelds des Fluids (12) mit zunehmender Entfernung von einem Zentrum des Strömungsfelds abnimmt.

14. Vorrichtung (2) nach einem der vorangehenden Ansprüche, **dadurch gekennzeichnet, dass** die Vorrichtung (2) mindestens eines der folgenden Merkmale aufweist:

- mindestens eine Strömungsrichtereinrichtung (64) zur Einstellung einer homogenen Strömungsrichtung der Fluidströmung des Fluids (12) ist entlang der Trennkapillare (16) angeordnet;
- mindestens ein Temperatursensor (32, 32A) zur berührungslosen Messung der Temperatur der Trennkapillare (16) ist an der Vorrichtung (2) für einen Gaschromatographen (110), insbesondere einen Temperaturgradienten-Gaschromatographen, angeordnet;
- das Fluidströmungsfeld ist als homogenes oder inhomogenes Fluidströmungsfeld ausgebildet, wobei

(a) zur Erzeugung des homogenen Fluidströmungsfelds die als Schwammstruktur ausgebildete Beeinflussungseinrichtung (14) eine homogene Porenstruktur aufweist und gleichmäßig von dem Fluid durchströmt wird, und wobei
(b) zur Erzeugung des inhomogenen Fluidströmungsfelds die als Schwammstruktur ausgebildete Beeinflussungseinrichtung (14) eine homogene Porenstruktur aufweist und ungleichmäßig von dem Fluid durchströmt wird.

15. Gaschromatograph (110) **gekennzeichnet durch** eine Vorrichtung (2) nach einem der vorangehenden Ansprüche.

16. Gaschromatograph (110) nach Anspruch 15, **dadurch gekennzeichnet, dass** der Gaschromatograph (110) mindestens eines der folgenden Merkmale aufweist:

- der Gaschromatograph (110) ist ein Prozess-Temperaturgradienten-Gaschromatograph;
- eine Detektionseinrichtung (28) zur Detektion des zu analysierenden Stoffes (20) oder des zu analysierenden Stoffgemisches (20);
- eine Probenaufgabeeinrichtung (26) zur Injektion des zu analysierenden Stoffes (20) oder des zu analysierenden Stoffgemisches (20) und eines Trägergases in die Trennkapillare (16).

**Claims**

1. Device (2) for a gas chromatograph, in particular a temperature gradient gas chromatograph (110), having

- a module (4),
- a separating capillary (16), which is arranged in the module (4), wherein the separating capillary (16) is heatable, wherein the separating capillary (16) is arrangeable in a controllable fluid flow field of a fluid (12), and wherein a material (20) or a material mixture (20) to be analyzed by the gas chromatograph (110), in particular the temperature gradient gas chromatograph, can be applied to the separating capillary (16),
- at least one generating device (10) for generating a fluid flow of the fluid (12), wherein the generating device (10) is used for influencing the temperature of the separating capillary (16), and having
- an influencing device (14) for influencing the fluid flow of the fluid (12), **characterized in that** the influencing device (14) is designed as a sponge structure through which a fluid flow can flow and wherein the influencing provided by the influencing device (14) aims to convert a fluid flow with an indeterminate fluid flow field into a fluid flow with a defined fluid flow field, and **in that** the device has a receptacle device (36) for accommodating the module (4), wherein the module (4) is insertable into the receptacle device (36) and is removable from the receptacle device (36).

2. Device (2) according to Claim 1, **characterized in that**

- the module (4) is a first module (4),
- a second module (6) is provided, in which the influencing device (14) is arranged, and **in that**
- the second module (6) is insertable into the receptacle device (36) and removable from the receptacle device (36).

3. Device (2) according to Claim 2, **characterized in that**

- the generating device (10) is arranged in or on the first module (4), and/or **in that**
- the generating device (10) is arranged in or on the second module (6).

4. Device (2) according to one of the preceding claims, **characterized in that**

- the generating device (10) is a first generating device (10) for generating a fluid flow of the fluid (12), and **in that**
- a second generating device (30) is provided for generating a fluid flow of the fluid (12).

5. Device (2) according to Claim 4 in conjunction with Claim 2 or 3, **characterized in that** at least one third module (8) is provided, which is arranged on the first module (4), wherein the second generating device (30) is arranged in the third module (8).

6. Device (2) according to Claim 5, **characterized in that** the third module (8) is insertable into the receptacle device (36) and removable from the receptacle device (36).

7. Device (2) according to Claim 5 or 6, **characterized in that** at least one of the modules from the set of the first module (4), the second module (6) and the third module (8) has at least one connecting device (50A, 50B) for connection to at least one further module (4, 6, 8) of the abovementioned set.

8. Device (2) according to one of the preceding claims, **characterized in that** the module (4), in which the separating capillary (16) is arranged, has at least one of the following features:

- a first attachment device (22) for attaching the separating capillary (16) to a sample dispensing device (26) for injecting the material (20) to be analyzed or the material mixture (20) to be analyzed and a carrier gas into the separating capillary (16);
- a second attachment device (24) for attaching the separating capillary (16) to a detection device (28) for detecting the material (20) to be analyzed or the material mixture (20) to be analyzed.

9. Device (2) according to Claim 8, **characterized in that** at least one of the following features is provided:

- the first attachment device (22) has at least one first insulator (62) and/or at least one first heating device (114) for setting a temperature such that a temperature above a temperature of the heatable separating capillary (16) is settable at the first attachment device (22);
- the first attachment device (22) has at least one first quick connecting device (66A, 66B) for connecting the separating capillary (16) to the sample dispensing device (26);
- the second attachment device (24) has at least one second insulator (62) and/or at least one second heating device (114) for setting a temperature such that a temperature above a temperature of the heatable separating capillary (16) is settable at the second attachment device (24);
- the second attachment device (24) has at least one second quick connecting device (66A, 66B) for connecting the separating capillary (16) to the detection device (28).

10. Device (2) according to Claim 8 or 9, **characterized in that** the module (4), in which the separating capillary (16) is arranged, is insertable into the receptacle device (36) in such a way that, upon insertion of this module (4), a connection of this module (4) to the influencing device (14) is automatically established.

11. Device (2) according to Claim 8 or 9 in conjunction with Claim 4, **characterized in that** the first module (4) is insertable into the receptacle device (36) in such a way that, upon insertion of the first module (4), a connection of the first module (4) to the influencing device (14) and to the second generating device (30) is automatically established.

12. Device (2) according to one of Claims 8 to 11, **characterized in that** the module (4), in which the separating capillary (16) is arranged, is insertable into the receptacle device (36) in such a way that, upon insertion of this module (4), a connection of this module (4) to the sample dispensing device (26) and/or to the detection device (28) can be manually established or is automatically established.

13. Device (2) according to one of the preceding claims, **characterized in that** the device has at least one of the following features:

- the separating capillary (16) has a spiral-shaped design;
- the influencing device (14) in the form of a cylinder, designed as a sponge structure, is arranged below or above the separating capillary (16) such that the fluid (12) has a centrally-symmetrical flow field after flowing through the influencing device (14),
- the influencing device (14) in the form of a cylinder, designed as a sponge structure, is arranged below or above the separating capillary (16) such that the fluid (12) has a centrally-symmetrical flow field after flowing through the influencing device (14), wherein the influencing device (14) designed as a sponge structure has a permeability for the fluid (12) which increases outwards from a central centre point of the sponge structure such that a flow speed of the centrally-symmetrical flow field of the fluid (12) increases with increasing distance from a centre of the flow field;
- the influencing device (14) in the form of a cylinder, designed as a sponge structure, is arranged below or above the separating capillary (16) such that the fluid (12) has a centrally-symmetrical flow field after flowing through the influencing device (14), wherein the influencing device (14) designed as a sponge structure has a permeability for the fluid (12) which decreases outwards from a central centre point of the sponge structure such that the flow speed of the centrally-symmetrical flow field of the fluid (12) decreases with increasing distance from a centre of the flow field.

14. Device (2) according to one of the preceding claims, **characterized in that** the device (2) has at least one of the following features:

- at least one flow director device (64) for setting a homogeneous flow direction of the fluid flow of the fluid (12) is arranged along the separating capillary (16);
- at least one temperature sensor (32, 32A) for contactless measurement of the temperature of the separating capillary (16) is arranged on the device (2) for a gas chromatograph (110), in particular a temperature gradient gas chromatograph;

- the fluid flow field is designed as a homogeneous or inhomogeneous fluid flow field, wherein

(a) for generating the homogeneous fluid flow field, the influencing device (14) designed as a sponge structure has a homogeneous pore structure and the fluid flows through it uniformly, and wherein
(b) for generating the inhomogeneous fluid flow field, the influencing device (14) designed as a sponge structure has a homogeneous pore structure and the fluid flows through it unevenly.

15. Gas chromatograph (110) **characterized by** a device (2) according to one of the preceding claims.

16. Gas chromatograph (110) according to Claim 15, **characterized in that** the gas chromatograph (110) has at least one of the following features:

- the gas chromatograph (110) is a process temperature gradient gas chromatograph;
- a detection device (28) for detecting the material (20) to be analyzed or the material mixture (20) to be analyzed;
- a sample dispensing device (26) for injecting the material (20) to be analyzed or the material mixture (20) to be analyzed and a carrier gas into the separating capillary (16).

**Revendications**

1. Dispositif (2) pour un chromatographe en phase gazeuse, notamment un chromatographe en phase gazeuse à gradient de température (110), comprenant

- un module (4),
- un capillaire de séparation (16) agencé dans le module (4), le capillaire de séparation (16) pouvant être chauffé, le capillaire de séparation (16) pouvant être agencé dans un champ d'écoulement de fluide réglable d'un fluide (12) et le capillaire de séparation (16) pouvant être chargé avec une substance à analyser (20) ou un mélange de substances (20) par le chromatographe en phase gazeuse (110), en particulier le chromatographe en phase gazeuse à gradient de température,
- au moins un appareil de génération (10) pour générer un écoulement de fluide du fluide (12), l'appareil de génération (10) servant à influencer la température du capillaire de séparation (16), et comprenant
- un appareil d'influence (14) pour influencer l'écoulement de fluide du fluide (12), **caractérisé en ce que** l'appareil d'influence (14) est réalisé sous la forme d'une structure en éponge pouvant être traversée par un écoulement de fluide, et l'influence fournie par l'appareil d'influence (14) visant à transformer un écoulement de fluide ayant un champ d'écoulement de fluide indéterminé en un écoulement de fluide ayant un champ d'écoulement de fluide défini,

et **en ce que** le dispositif présente un appareil de réception (36) destiné à recevoir le module (4), le module (4) pouvant être inséré dans l'appareil de réception (36) et retiré de l'appareil de réception (36).

2. Dispositif (2) selon la revendication 1, **caractérisé en ce que**

   - le module (4) est un premier module (4),
   - un deuxième module (6) est prévu, dans lequel est agencé l'appareil d'influence (14), et **en ce que**
   - le deuxième module (6) peut être inséré dans l'appareil de réception (36) et retiré de l'appareil de réception (36).

3. Dispositif (2) selon la revendication 2, **caractérisé en ce que**

   - l'appareil de génération (10) est agencé dans ou sur le premier module (4), et/ou **en ce que**
   - l'appareil de génération (10) est agencé dans ou sur le deuxième module (6).

4. Dispositif (2) selon l'une quelconque des revendications précédentes, **caractérisé en ce que**

   - l'appareil de génération (10) est un premier appareil de génération (10) destiné à générer un écoulement de fluide du fluide (12), et **en ce que**
   - un deuxième appareil de génération (30) est prévu pour générer un écoulement de fluide du fluide (12).

5. Dispositif (2) selon la revendication 4 en liaison avec la revendication 2 ou 3, **caractérisé en ce qu'**au moins un troisième module (8) est prévu, qui est agencé sur le premier module (4), le deuxième appareil de génération (30) étant agencé dans le troisième module (8).

6. Dispositif (2) selon la revendication 5, **caractérisé en ce que** le troisième module (8) peut être inséré dans l'appareil de réception (36) et retiré de l'appareil de réception (36).

7. Dispositif (2) selon la revendication 5 ou 6, **caracté-**

**risé en ce qu'**au moins l'un des modules parmi le premier module (4), le deuxième module (6) et le troisième module (8) présente au moins un dispositif de liaison (50A, 50B) pour la liaison avec au moins un autre module (4, 6, 8) parmi les modules susmentionnés.

8. Dispositif (2) selon l'une quelconque des revendications précédentes, **caractérisé en ce que** le module (4) dans lequel est agencé le capillaire de séparation (16) présente au moins l'une des caractéristiques suivantes :

   - un premier dispositif de raccordement (22) pour raccorder le capillaire de séparation (16) à un appareil d'alimentation en échantillon (26) afin d'injecter la substance à analyser (20) ou le mélange de substances à analyser (20) et un gaz vecteur dans le capillaire de séparation (16) ;
   - un deuxième dispositif de raccordement (24) pour raccorder le capillaire de séparation (16) à un appareil de détection (28) destiné à détecter la substance à analyser (20) ou le mélange de substances à analyser (20).

9. Dispositif (2) selon la revendication 8, **caractérisé en ce qu'**au moins l'une des caractéristiques suivantes est prévue :

   - le premier dispositif de raccordement (22) présente au moins un premier isolateur (62) et/ou au moins un premier dispositif de chauffage (114) pour régler une température, de telle sorte qu'une température supérieure à la température du capillaire de séparation chauffable (16) peut être réglée au niveau du premier dispositif de raccordement (22) ;
   - le premier dispositif de raccordement (22) présente au moins un premier appareil de liaison rapide (66A, 66B) pour relier le capillaire de séparation (16) à l'appareil d'alimentation en échantillon (26) ;
   - le deuxième dispositif de raccordement (24) présente au moins un deuxième isolateur (62) et/ou au moins un deuxième dispositif de chauffage (114) pour régler une température, de telle sorte qu'une température supérieure à la température du capillaire de séparation chauffable (16) peut être réglée au niveau du deuxième dispositif de raccordement (24) ;
   - le deuxième dispositif de raccordement (24) présente au moins un deuxième appareil de liaison rapide (66A, 66B) pour relier le capillaire de séparation (16) à l'appareil de détection (28).

10. Dispositif (2) selon la revendication 8 ou 9, **caractérisé en ce que** le module (4) dans lequel est agencé le capillaire de séparation (16) peut être inséré dans l'appareil de réception (36) de telle sorte que, lors de l'insertion de ce module (4), une liaison entre ce module (4) et l'appareil d'influence (14) est automatiquement établie.

11. Dispositif (2) selon la revendication 8 ou 9 en liaison avec la revendication 4, **caractérisé en ce que** le premier module (4) peut être inséré dans l'appareil de réception (36) de telle sorte que, lors de l'insertion du premier module (4), une liaison entre le premier module (4) et l'appareil d'influence (14) ainsi qu'avec le deuxième appareil de génération (30) soit automatiquement établie.

12. Dispositif (2) selon l'une quelconque des revendications 8 à 11, **caractérisé en ce que** le module (4) dans lequel est agencé le capillaire de séparation (16) peut être inséré dans l'appareil de réception (36) de telle sorte que, lors de l'insertion de ce module (4), une liaison de ce module (4) avec l'appareil d'alimentation en échantillon (26) et/ou avec l'appareil de détection (28) puisse être établie manuellement ou soit établie automatiquement.

13. Dispositif (2) selon l'une quelconque des revendications précédentes, **caractérisé en ce que** le dispositif présente au moins l'une des caractéristiques suivantes :

    - le capillaire de séparation (16) présente une configuration hélicoïdale ;
    - l'appareil d'influence (14) réalisé sous forme de structure en éponge sous la forme d'un cylindre est agencé en dessous ou au-dessus du capillaire de séparation (16), de telle sorte que le fluide (12), après avoir traversé l'appareil d'influence (14), présente un champ d'écoulement à symétrie centrale ;
    - l'appareil d'influence (14) réalisé sous forme de structure en éponge sous la forme d'un cylindre est agencé au-dessous ou au-dessus du capillaire de séparation (16), de telle sorte que le fluide (12), après avoir traversé l'appareil d'influence (14), présente un champ d'écoulement à symétrie centrale, l'appareil d'influence (14) réalisé sous forme de structure en éponge présentant une perméabilité au fluide (12) croissante vers l'extérieur à partir d'un centre de la structure en éponge, de telle sorte qu'une vitesse d'écoulement du champ d'écoulement à symétrie centrale du fluide (12) augmente à mesure que la distance par rapport au centre du champ d'écoulement augmente ;
    - l'appareil d'influence (14) réalisé sous forme de structure en éponge sous la forme d'un cylindre est agencé au-dessous ou au-dessus du capillaire de séparation (16), de telle sorte que le fluide (12), après avoir traversé l'appareil d'influence (14), présente un champ d'écoulement à symétrie centrale, l'appareil d'influence (14) réalisé sous forme de structure en éponge présentant une perméabilité au fluide (12) décroissante vers l'extérieur à partir d'un centre de la structure en éponge, de telle sorte que la vitesse d'écoulement du champ d'écoulement à symétrie centrale du fluide (12) diminue à mesure que la distance par rapport au centre du champ d'écoulement augmente.

14. Dispositif (2) selon l'une quelconque des revendications précédentes, **caractérisé en ce que** le dispositif (2) présente au moins l'une des caractéristiques suivantes :

    - au moins un appareil redresseur d'écoulement (64) destiné à régler une direction homogène de l'écoulement de fluide du fluide (12) est agencé le long du capillaire de séparation (16) ;
    - au moins un capteur de température (32, 32A) pour la mesure sans contact de la température du capillaire de séparation (16) est agencé sur le dispositif (2) pour un chromatographe en phase gazeuse (110), notamment un chromatographe en phase gazeuse à gradient de température ;
    - le champ d'écoulement de fluide est réalisé sous forme de champ d'écoulement de fluide homogène ou non homogène,

      (a) pour générer le champ d'écoulement de fluide homogène, l'appareil d'influence (14) réalisé sous forme de structure en éponge présentant une structure poreuse homogène et étant traversé de manière uniforme par le fluide, et
      (b) pour générer le champ d'écoulement de fluide non homogène, l'appareil d'influence (14) réalisé sous forme de structure en éponge présentant une structure poreuse homogène et étant traversé de manière non uniforme par le fluide.

15. Chromatographe en phase gazeuse (110) **caractérisé par** un dispositif (2) selon l'une quelconque des revendications précédentes.

16. Chromatographe en phase gazeuse (110) selon la revendication 15, **caractérisé en ce que** le chromatographe en phase gazeuse (110) présente au moins l'une des caractéristiques suivantes :

    - le chromatographe en phase gazeuse (110) est un chromatographe en phase gazeuse à gradient de température de traitement ;
    - un appareil de détection (28) pour détecter la substance à analyser (20) ou le mélange de substances à analyser (20) ;
- un appareil d'alimentation en échantillon (26) afin d'injecter la substance à analyser (20) ou le mélange de substances à analyser (20) et un gaz vecteur dans le capillaire de séparation (16).

Fig. 1

Fig. 2

Fig. 3

Fig. 4

Fig. 5

Fig. 6a

Fig. 6b

Fig. 7

**Fig. 8**

**Fig. 9**

Fig. 10

Fig. 11

Fig. 12

EP 4 251 991 B1

Fig. 13

Fig. 14

Fig. 15

Fig. 16

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102014004286 B3
- US 20100256922 A1
- US 20120318782 A1

**In der Beschreibung aufgeführte Nicht-Patentliteratur**

- **VON PETER BOEKER et al.** Flow Field Thermal Gradient Gas Chromatography. *Analytical Chemistry*, 03 August 2015, 1-25
- **VON JOHN V. HINSHAW**. GC Ovens - A Hot Topic. *LC GC Europe*, 01 July 2001, 1-5